# EUROPEAN PATENT APPLICATION

(11) **EP 4 397 940 A1**
(43) Date of publication of application: **10.07.2024**
(21) Application number: 21955943.2
(22) Date of filing: 31.08.2021
(51) Int. Cl.: G01B 11/00, B23K 26/00, B23K 26/02, B23K 26/08, B23K 26/082

(54) **MACHINING SYSTEM**

(71) Applicant: NIKON CORPORATION, Minato-ku Tokyo 108-6290 (JP)
(72) Inventor: MATSUDA, Takeshi, Tokyo 108-6290 (JP)
(74) Representative: Hoffmann Eitle
(86) International application number: PCT/JP2021/032010
(87) International publication number: WO 2023/032053

(57) **Abstract**

A processing system includes: a placing apparatus on which a workpiece and a fiducial member is allowed to be placed; a processing apparatus configured to emit a processing beam through an objective optical system; a light detection apparatus configured to irradiate the fiducial member with a measurement beam through the objective optical system and optically receive light from the fiducial member; a processing head including the objective optical system; a rotation apparatus that rotates the placing apparatus; and a calculation unit; the light detection apparatus acquires a first detected result by irradiating the fiducial member located at a first position with the measurement beam and acquires a second detected result by irradiating the fiducial member, which has moved to a second position, with the measurement beam, the calculation unit calculates a movement error occurring in a movement of at least one of the placing apparatus and the processing head based on position information of the fiducial member obtained by using the first and second detected results.

## Description

### Technical Field

The present invention relates to a technical field of a processing system that is configured to process a workpiece, for example.

### Background Art

A Patent literature 1 discloses, as a processing system that is configured to process a workpiece, a processing apparatus that forms a structure by irradiating a surface of the workpiece with a processing beam. For this machine tool, properly calculating a movement error is a technical problem.

### Citation List

### Patent Literature

Patent Literature 1: WO2000/054925

### Summary of Invention

A first aspect provides a processing system including: a placing apparatus on which a workpiece is allowed to be placed and on which a fiducial member that is different from the workpiece is allowed to be placed; a processing apparatus that is configured to irradiate the workpiece with a processing beam for processing the workpiece through an objective optical system; a light detection apparatus that is configured to irradiate the fiducial member with a measurement beam through the objective optical system and that is configured to optically receive, through the objective optical system, at least a part of light from the fiducial member that is generated by an irradiation of the measurement light; a processing head that includes the objective optical system; a rotation apparatus that rotates the placing apparatus; and a calculation unit; wherein the light detection apparatus acquires a first detected result by irradiating the fiducial member located at a first position with the measurement beam and acquires a second detected result by irradiating the fiducial member, which has moved from the first position to a second position different from the first position by the rotation apparatus, with the measurement beam, the calculation unit calculates a movement error occurring in a movement of at least one of the placing apparatus and the processing head based on position information of the fiducial member obtained by using the first detected result and position information of the fiducial member obtained by using the second detected result.

A second aspect provides a processing system including: a placing apparatus on which a workpiece is allowed to be placed and on which a fiducial member that is different from the workpiece is allowed to be placed; a light detection apparatus that is configured to irradiate the fiducial member with a measurement beam for measuring the fiducial member and that is configured to optically receive at least a part of light from the fiducial member that is generated by an irradiation of the measurement light through an objective optical system; a rotation apparatus that is configured to rotate the placing apparatus around each of a first axis and a second axis that intersects with the first axis; a movement apparatus that moves a processing head including at least the objective optical system along a movement axis; and a calculation unit; wherein the rotation apparatus moves the fiducial member from an eighth position to a ninth position by rotating the placing apparatus around the first axis and moves the fiducial member from a tenth position to an eleventh position by rotating the placing apparatus around the second axis, the light detection apparatus acquires an eighth detected result by irradiating the fiducial member located at the eighth position with the measurement beam through the objective optical system located at a twelfth position, acquires a ninth detected result by irradiating the fiducial member that has moved to the ninth position with the measurement beam through the objective optical system located at the twelfth position, acquires a tenth detected result by irradiating the fiducial member located at the tenth position with the measurement beam through the objective optical system located at a thirteenth position, and acquires an eleventh detected result by irradiating the fiducial member located at the eleventh position with the measurement beam through the objective optical system located at the thirteenth position or a fourteenth position different from the thirteenth position, the calculation unit calculates a movement error occurring in a movement of at least one of the placing apparatus and the processing head based on position information of the fiducial member obtained by using the eighth detected result, position information of the fiducial member obtained by using the ninth detected result, position information of the fiducial member obtained by using the tenth detected result and position information of the fiducial member obtained by using the eleventh detected result.

A third aspect provides a processing system including: a placing apparatus on which a workpiece is allowed to be placed and on which a fiducial member that is different from the workpiece is allowed to be placed; a light detection apparatus that is configured to irradiate the fiducial member with a measurement beam for measuring the fiducial member through an objective optical system and that is configured to optically receive at least a part of light from the fiducial member that is generated by an irradiation of the measurement light; and a driving apparatus that moves the placing apparatus, wherein the light detection apparatus irradiates the fiducial member located at an eighth position with the measurement beam through the objective optical system located at a twelfth position, and irradiates the fiducial member that has moved to the ninth position with the measurement beam through the objective optical system located at the twelfth position.

A fourth aspect provides a processing system including: a placing apparatus on which a workpiece is allowed to be placed and on which a fiducial member that is different from the workpiece is allowed to be placed; a light detection apparatus that is configured to irradiate the fiducial member with a measurement beam for measuring the fiducial member through an objective optical system and that is configured to optically receive at least a part of light from the fiducial member that is generated by an irradiation of the measurement light; and a driving system that moves the placing apparatus, wherein the light detection apparatus irradiates the fiducial member located at a tenth position with the measurement beam through the objective optical system located at a fifteenth position, irradiates the fiducial member that has moved to an eleventh position with the measurement beam through the objective optical system located at the fifteenth position, furthermore, irradiates the fiducial member located at the tenth position with the measurement beam through the objective optical system located at a thirteenth position, and irradiates the fiducial member that has moved to the eleventh position with the measurement beam through the objective optical system located at a fourteenth position.

A fifth aspect provides a processing system including: a placing apparatus on which a workpiece is allowed to be placed and on which a fiducial member that is different from the workpiece is allowed to be placed; a light detection apparatus that is configured to irradiate the fiducial member with a measurement beam for measuring the fiducial member through an objective optical system and that is configured to optically receive at least a part of light from the fiducial member that is generated by an irradiation of the measurement light; and a driving system that moves the placing apparatus, wherein the light detection apparatus irradiates the fiducial member located at a tenth position with the measurement beam through the objective optical system located at a sixteenth position, and irradiates the fiducial member that has moved to an eleventh position with the measurement beam through the objective optical system located at the sixteenth position, furthermore, irradiates the fiducial member that has moved to the eleventh position with the measurement beam through the objective optical system located at a seventeenth position.

An operation and another advantage of the present invention will be apparent from an example embodiment described below.

### Brief Description of Drawings

[FIG. 1] FIG. 1 is a cross-sectional view that schematically illustrates a configuration of a processing system in a present example embodiment.
[FIG. 2] FIG. 2 is a system configuration diagram that illustrates a system configuration of the processing system in the present example embodiment.
[FIG. 3] FIG. 3 is a cross-sectional view that illustrates a configuration of a processing head in the present example embodiment.
[FIG. 4] FIG. 4 is perspective view that illustrates a processing shot area.
[FIG. 5] FIG. 5 is perspective view that illustrates a measurement shot area.
[FIG. 6] Each of FIG. 6A and FIG. 6B is a cross-sectional view that illustrates a mark formed on a workpiece to perform an optical calibration operation.
[FIG. 7] FIG. 7 is a planar view that illustrates a plurality of processed portions formed in a plurality of positions, respectively, in the processing shot area and the measurement shot area.
[FIG. 8] Each of FIG. 8A to FIG. 8C illustrates a fiducial member.
[FIG. 9] Each of FIG. 9A and FIG. 9B is a cross-sectional view that illustrates the moving fiducial member.
[FIG. 10] Each of FIG. 10A and FIG. 10B is a cross-sectional view that illustrates the processing head that moves to follow the moving fiducial member.
[FIG. 11] FIG. 11 is a cross-sectional view that illustrates the processing head that moves to follow the fiducial member rotationally-moving around a C axis.
[FIG. 12] FIG. 12 is a cross-sectional view that illustrates the processing head that moves to follow the fiducial member rotationally-moving around an A axis.
[FIG. 13] FIG. 13 is a cross-sectional view that illustrates the processing head that moves to follow the moving fiducial member.
[FIG. 14] FIG. 14 is a cross-sectional view that illustrates the processing head that measures the moving fiducial member without moving.
[FIG. 15] Each of FIG. 15A to FIG. 15C illustrates a calculated result of a position of the fiducial member.
[FIG. 16] FIG. 16 is a flowchart that illustrates a flow of a deformation error calculation operation.
[FIG. 17] Each of FIG. 17A and FIG. 17B illustrates a stage that rotates around the A axis.
[FIG. 18] Each of FIG. 18A to FIG. 18D illustrates the moving fiducial member.
[FIG. 19] Each of FIG. 19A and FIG. 19B illustrates a relationship between a distance from the processing head to the fiducial member and a rotational radius of the fiducial member.
[FIG. 20] FIG. 20 illustrates a relationship between the distance from the processing head to the fiducial member and a rotational angle of the stage.
[FIG. 21] Each of FIG. 21A to FIG. 21D illustrates the moving fiducial member.
[FIG. 22] Each of FIG. 22A and FIG. 22B illustrates a relationship between the distance from the processing head to the fiducial member and the rotational radius of the fiducial member.
[FIG. 23] FIG. 23 illustrates the stage that rotates around the A axis.
[FIG. 24] Each of FIG. 24A to FIG. 24B illustrates the moving fiducial member.
[FIG. 25] Each of FIG. 25A to FIG. 25B is a cross-sectional view that illustrates the processing head that moves to follow the moving fiducial member.
[FIG. 26] FIG. 26 illustrates a relationship between the position of the fiducial member (a movement trajectory) and a movement error.
[FIG. 27] Each of FIG. 27A to FIG. 27B is a cross-sectional view that illustrates the processing head that measures the fiducial member.
[FIG. 28] Each of FIG. 28A to FIG. 28B is a cross-sectional view that illustrates the processing head that measures the fiducial member including a curved surface and a planar surface.
[FIG. 29] Each of FIG. 29A to FIG. 29B is a planar view that illustrates the position of the fiducial member.
[FIG. 30] Each of FIG. 30A to FIG. 30B is a cross-sectional view that illustrates the processing head that measures the fiducial member.
[FIG. 31] Each of FIG. 31A to FIG. 31B is a cross-sectional view that illustrates the processing head that measures the fiducial member.
[FIG. 32] Each of FIG. 32A to FIG. 32B is a cross-sectional view that illustrates the processing head that measures the fiducial member.
[FIG. 33] Each of FIG. 33A to FIG. 33B is a cross-sectional view that illustrates the processing head that measures the fiducial member.
[FIG. 34] FIG. 34 is a system configuration diagram that illustrates a system configuration of a measurement system.

### Description of Example embodiments

Next, with reference to drawings, an example embodiment of a processing system, a movement error calculation system, a movement error calculation method, and a measurement system will be described. In the below described description, the example embodiment of the processing system, the movement error calculation system, the movement error calculation method, and the measurement system will be described by using a processing system SYS that is configured to process a workpiece W that is one example of an object. Note that the processing system SYS may be referred to as a machine tool, because the processing system SYS is configured to process the workpiece W.

Moreover, in the below-described description, a positional relationship of various components included in the processing system SYS will be described by using an XYZ rectangular coordinate system that is defined by a X-axis, a Y-axis and a Z-axis that are orthogonal to one another. Note that each of an X-axis direction and a Y-axis direction is assumed to be a horizontal direction (namely, a predetermined direction in a horizontal plane) and a Z-axis direction is assumed to be a vertical direction (namely, a direction that is orthogonal to the horizontal plane, and substantially a vertical direction) in the below-described description, for convenience of the description. Moreover, rotational directions (in other words, inclination directions) around the X-axis, the Y-axis and the Z-axis are referred to as a θX direction, a θY direction and a θZ direction, respectively. Here, the Z-axis direction may be a gravity direction. Moreover, an XY plane may be a horizontal direction.

### (1) Configuration of Processing System SYS

Firstly, a configuration of the processing system SYS in the present example embodiment will be described.

### (1-1) Entire Configuration of Processing System SYS

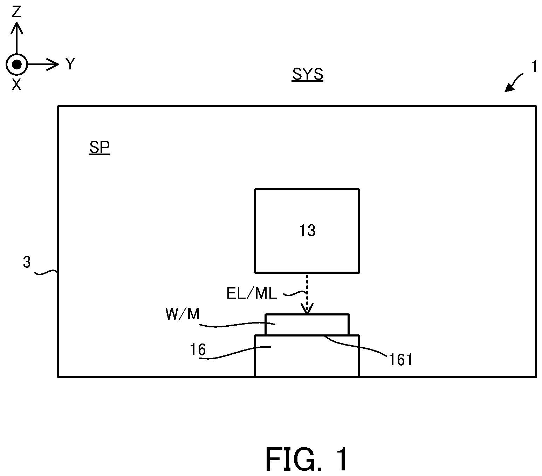

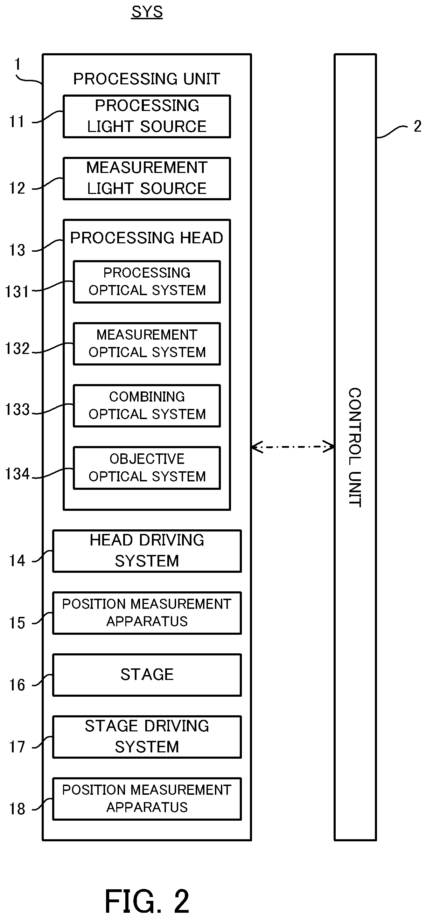

Firstly, with reference to FIG. 1 and FIG. 2, a configuration of the processing system SYS in the present example embodiment will be described. FIG. 1 is a cross-sectional view that schematically illustrates the configuration of the processing system SYS in the present example embodiment. FIG. 2 is a system configuration diagram that illustrates one example of a system configuration of the processing system SYS in the present example embodiment.

As illustrated in FIG. 1 and FIG. 2, the processing system SYS includes a processing unit 1, and a control unit 2. At least a part of the processing unit 1 may be contained in an inner space SP in a housing 3. The inner space SP in the housing 3 may be purged by a purge gas such as a Nitrogen gas and so on, or may not be purged by the purge gas. The inner space SP in the housing 3 may be vacuumed or may not be vacuumed. However, the processing unit 1 may not be contained in the inner space in the housing 3. A local space surrounding a part of the processing unit 1 may be purged by the purge gas and may be vacuumed.

The processing unit 1 is configured to process the workpiece W, which is a processing target object (it may be referred to as a base member), under the control of the control unit 2. The workpiece W may be a metal, may be an alloy (for example, a duralumin and the like), may be a semiconductor (for example, a silicon), may be a resin, may be a composite material such as a CFRP (Carbon Fiber Reinforced Plastic), a painting material (as one example, a painting layer that coats a base material), may be a glass or may be an object that is made from any other material, for example.

The processing unit 1 irradiates the workpiece W with processing light EL in order to process the workpiece W. The processing light EL may be any type of light, as long as the workpiece W is processed by irradiating the workpiece W with it. In the present example embodiment, an example in which the processing light EL is laser light will be described, however, the processing light EL may be light that is different from the laser light. Furthermore, a wavelength of the processing light EL may be any wavelength, as long as the workpiece W is processed by irradiating the workpiece W with it. For example, the processing light EL may be visible light, or may be invisible light (for example, at least one of infrared light, ultraviolet light, extreme ultraviolet light and the like). The processing light EL may include pulsed light (for example, pulsed light an ON time of which is equal to or shorter than pico-seconds). Alternatively, the processing light EL may not include the pulsed light. In other words, the processing light EL may be continuous light.

The processing unit 1 may perform a removal processing for removing a part of the workpiece W by irradiating the workpiece W with the processing light EL. For example, the processing unit 1 may perform the removal processing so that a shape of the workpiece W becomes a desired shape. For example, the processing unit 1 may perform the removal processing so that a riblet structure is formed on a surface of the workpiece W. The riblet structure may include a structure by which a resistance (especially, at least one of a frictional resistance and a turbulent frictional resistance) of the surface of the workpiece W to fluid is reducible. The riblet structure may include a structure by which noise generated when the fluid moves relative to the surface of the workpiece W is reducible. Alternatively, the processing unit 1 may perform an additive manufacturing for building a build object on the workpiece W by irradiating the workpiece W with the processing light EL, in addition to or instead of the removal processing. Alternatively, the processing unit 1 may perform a machining processing for processing the workpiece by allowing a tool to contact the workpiece W, in addition to or instead of at least one of the removal processing and the additive processing. In this case, the processing unit 1 may not irradiate the workpiece W with the processing light EL.

Furthermore, the processing unit 1 is configured to measure a measurement target object M under the control of the control unit 2. The processing unit 1 irradiates the measurement target object M with measurement light ML for measuring the measurement target object M in order to measure the measurement target obj ect M. Specifically, the processing unit 1 measures the measurement target object M by irradiating the measurement target object M with the measurement light ML and detecting (namely, optically receiving) at least a part of light from the measurement target object M irradiated with the measurement light ML. The light from the measurement target object M irradiated with the measurement light ML is light from the measurement target object M generated by the irradiation of the measurement light ML.

The measurement light ML may be any type of light, as long as the measurement target object M is measured by irradiating the measurement target object M with it. In the present example embodiment, an example in which the measurement light ML is laser light will be described, however, measurement light ML may be light that is different from the laser light. Furthermore, a wavelength of the measurement light ML may be any wavelength, as long as the measurement target object M is measured by irradiating the measurement target object M with it. For example, the measurement light ML may be visible light, or may be invisible light (for example, at least one of infrared light, ultraviolet light, extreme ultraviolet light and the like). The measurement light ML may include pulsed light (for example, pulsed light an ON time of which is equal to or shorter than pico-seconds). Alternatively, the measurement light ML may not include the pulsed light. In other words, the measurement light ML may be continuous light.

The processing unit 1 may be configured to measure a characteristic of the measurement target object M. The characteristic of the measurement target object M may include at least one of a position of the measurement target object M, a shape of the measurement target object M, a reflectance of the measurement target object M, a transmittance of the measurement target object M, a temperature of the measurement target object M, and a surface roughness of the measurement target object M.

In the below-described description, an example in which the processing unit 1 measures at least the position of the measurement target object M will be described. The position of the measurement target object M may include a position of a surface of the measurement target object M. The position of the surface of the measurement target object M may include a position of at least a part of the surface of the measurement target object M. Moreover, the position of the measurement target object M may mean the position (namely, a relative position) of the measurement target object M relative to a processing head 13. Namely, the position of the measurement target object M may mean the position of the measurement target object M in a measurement coordinate system in which the processing head 13 is a basis. Moreover, as described below, an operation for measuring the position of the measurement target object M may include an operation for measuring a shape of the measurement target object M. This is because the shape of the measurement target object M can be calculated from the position of the measurement target object M.

The measurement target object M may include the workpiece W that is processed by the processing unit 1, for example. The measurement target object M may include any obj ect placed on a stage 16, for example. The object placed on the stage 16 may include the workpiece W, for example. The object placed on the stage 16 may include a fiducial member FM used in a movement error calculation operation described below. The measurement target object M may include the stage 16, for example.

The processing unit 1 may measure the measurement target object M in a period of time before the processing of the workpiece W is started. Namely, the processing unit 1 may measure the measurement target object M before the processing unit 1 starts processing the workpiece W. The processing unit 1 may measure the measurement target object M in a period during which the processing of the workpiece W is performed. Namely, the processing unit 1 may measure the measurement target object M while the processing unit 1 processes the workpiece W. In other words, the processing unit 1 may perform the processing of the workpiece W and the measurement of the measurement target object M in parallel. The processing unit 1 may measure the measurement target object M in a period after the processing of the workpiece W is completed. Namely, the processing unit 1 may measure the measurement target object M after the processing unit 1 has completed the processing the workpiece W.

In order to process the workpiece W and measure the measurement target object M, the processing unit 1 includes: a processing light source 11; a measurement light source 12; the processing head 13; a head driving system 14; a position measurement apparatus 15; the stage 16; a stage driving system 17; and a position measurement apparatus 18.

The processing light source 11 generates the processing light EL. In a case where the processing light EL is the laser light, the processing light source 11 may include a laser diode, for example. Furthermore, the processing light source 11 may be a light source configured to pulse-oscillate. In this case, the processing light source 11 is configured to generate pulsed light (for example, pulsed light an ON time of which is equal to or shorter than pico-seconds) as the processing light EL. Note that the processing light source 11 may be a CW light source that generates CW (Continuous Wave).

The measurement light source 12 generates the measurement light ML. In a case where the measurement light ML is the laser light, the measurement light source 12 may include a laser diode, for example. Furthermore, the measurement light source 12 may be a light source configured to pulse-oscillate. In this case, the measurement light source 12 is configured to generate pulsed light (for example, pulsed light an ON time of which is equal to or shorter than pico-seconds) as the processing light EL. Note that the measurement light source 12 may be a CW light source that generates CW (Continuous Wave).

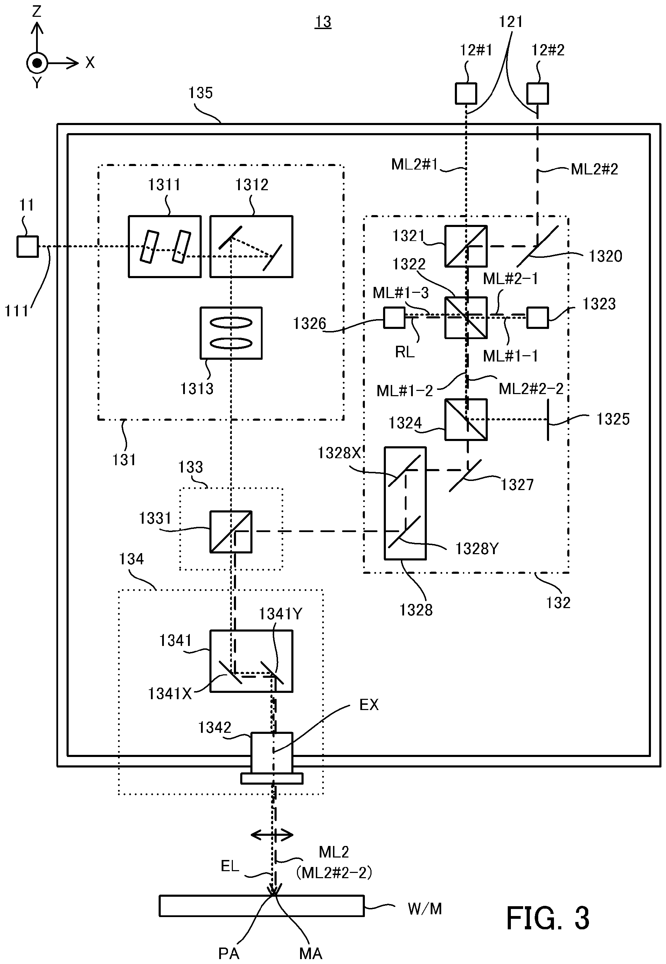

The processing head 13 irradiates the workpiece W with the processing light EL generated by the processing light source 11 and irradiates the measurement target object M with the measurement light ML generated by the measurement light source 12. In order to irradiate the workpiece W with the processing light EL and irradiate the measurement target object M with the measurement light ML, the processing head 13 includes: a processing optical system 131; a measurement optical system 132; a combining optical system 133, and an objective optical system 134. The processing head 13 irradiates the workpiece W with the processing light EL through the processing optical system 131, the combining optical system 133, and the objective optical system 134. Moreover, the processing head 13 irradiates the measurement target object M with the measurement light ML through the measurement optical system 132, the combining optical system 133, and the objective optical system 134. A detail of a configuration of the processing head 13 will be described in detail later with reference to FIG. 3.

The head driving system 14 moves the processing head 13. For example, the head driving system 14 may move (namely, linearly move) the processing head 13 along a movement axis that is along at least one of the X-axis direction, the Y-axis direction, and the Z-axis direction, for example. In this case, the head driving system 14 may be referred to as a movement apparatus. The head driving system 14 may move the processing head 13 along at least one of the θX direction, the θY direction, and the θZ direction, in addition to or instead of at least one of the X-axis direction, the Y-axis direction, and the Z-axis direction, for example. Namely, the head driving system 14 may rotate (namely, rotationally moves) the processing head 13 around at least one axis of a rotational axis along the X-axis direction, a rotational axis along the Y-axis direction, and a rotational axis along the Z-axis direction. In this case, the head driving system 14 may be referred to as a rotation apparatus. In the below-described description, the rotational axis along the X-axis direction, the rotational axis along the Y-axis direction, and the rotational axis along the Z-axis direction are referred to as an A-axis, a B-axis, and a C-axis, respectively. In the present example embodiment, an example in which the head driving system 14 moves the processing head 13 along each of the X-axis direction, the Y-axis direction, and the Z-axis direction will be described. Note that the head driving system 14 may be referred to as a driving apparatus.

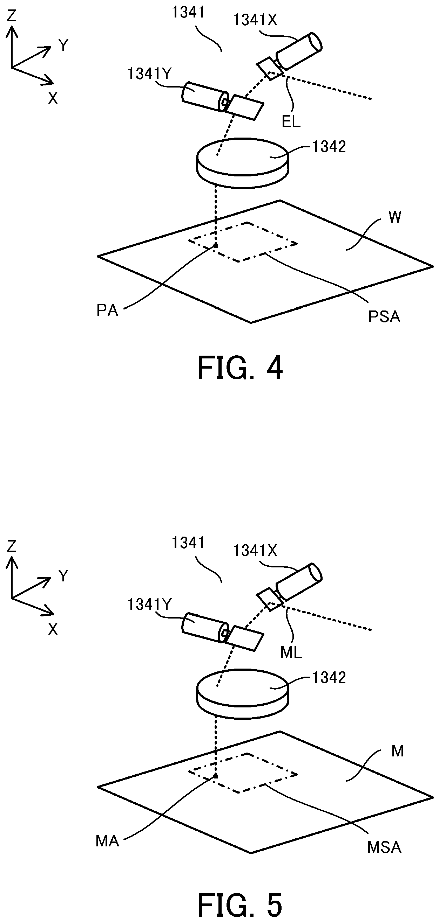

When the head driving system 14 moves the processing head 13, a relative positional relationship between the processing head 13 and the stage 16 described below (furthermore, the workpiece W placed on the stage 16) changes. Therefore, the relative positional relationship between a processing shot area PSA (see FIG. 4 described below), in which the processing head 13 performs the processing, and the workpiece W changes. Namely, the processing shot area PSA moves relative to the workpiece W. The processing unit 1 may process the workpiece W while moving the processing head 13. Specifically, the processing unit 1 may set the processing shot area PSA at a desired position of the workpiece W by moving the processing head 13, and process the desired position of the workpiece W. However, in a case where the processing shot area PSA can be set at the desired position of the workpiece W by moving the stage 16 described below, the processing unit 1 may process the workpiece W without moving the processing head 13.

Furthermore, when the head driving system 14 moves the processing head 13, a relative positional relationship between a measurement shot area MSA (see FIG. 4 described below), in which the processing head 13 performs the measurement, and the measurement target object M placed on the stage 16 changes. Namely, the measurement shot area MSA moves relative to the measurement target object M. The processing unit 1 may measure the measurement target object M while moving the processing head 13. Specifically, the processing unit 1 may set the measurement shot area MSA at a desired position of the measurement target object M by moving the processing head 13, and measure the desired position of the measurement target object M. However, in a case where the measurement shot area MSA can be set at the desired position of the measurement target object M by moving the stage 16 (described below), the processing unit 1 may measure the measurement target object M without moving the processing head 13.

The position measurement apparatus 15 is configured to measure a position of the processing head 13. The position measurement apparatus 15 may include an interferometer (for example, a laser interferometer), for example. The position measurement apparatus 15 may include an encoder (at least one of a linear encoder and a rotary encoder, as one example) , for example. In a case where the head driving system 14 uses a stepping motor as a driving source, the position measurement apparatus 15 may include an open-loop control type of position detection apparatus. The open-loop control type of position detection apparatus is a position detection apparatus that measures the position of the processing head 13 by estimating a moving distance of the processing head 13 based on a total sum of number of pulses to drive the stepping motor.

The workpiece W is placed on the stage 16. Thus, the stage 16 may be referred to as a placing apparatus. Specifically, the workpiece W is placed on a placement surface 161 of the stage 16. In the example illustrated in FIG. 1, the placement surface 161 is a surface that intersects with the Z-axis. The stage 16 is configured to support the workpiece W placed on the stage 16. The stage 16 may be configured to hold the workpiece W placed on the stage 16. In this case, the stage 16 may include at least one of a mechanical chuck, an electrostatic chuck, and a vacuum suction chuck to hold the workpiece W.

The measurement target object M is placed on the stage 16. Specifically, the measurement target object M is placed on the placement surface 161 of the stage 16. The stage 16 is configured to support the measurement target object M placed on the stage 16. The stage 16 may be configured to hold the measurement target object M placed on the stage 16. In this case, the stage 16 may include at least one of a mechanical chuck, an electrostatic chuck, and a vacuum suction chuck to hold the measurement target object M.

The stage 16 is disposed at a position at which it is allowed to face the processing head 13. In the example illustrated in FIG. 1, the stage 16 is disposed below the processing head 13. However, the stage 16 may be disposed at a position that is different from the position below the processing head 13.

The stage driving system 17 moves the stage 16. For example, the stage driving system 17 may move (namely, linearly move) the stage 16 along a movement axis that is along at least one of the X-axis direction, the Y-axis direction, and the Z-axis direction, for example. In this case, the stage driving system 17 may be referred to as a movement apparatus. The stage driving system 17 may move the stage 16 along at least one of the θX direction, the θY direction, and the θZ direction, in addition to or instead of at least one of the X-axis direction, the Y-axis direction, and the Z-axis direction, for example. Namely, the stage driving system 17 may rotate (namely, rotationally moves) the stage 16 around at least one axis of a rotational axis along the X-axis direction (namely, an A-axis), a rotational axis along the Y-axis direction (namely, a B-axis), and a rotational axis along the Z-axis direction (namely, a C-axis). In this case, the stage driving system 17 may be referred to as a rotation apparatus. In the present example embodiment, an example in which the stage driving system 17 rotates the stage 16 around each of the A-axis and the C-axis will be described. Note that the stage driving system 17 may be referred to as a driving apparatus.

When the stage 31 moves, the placement surface 161 of the stage 16 also moves. Therefore, an operation for moving the stage 31 may include an operation for moving the placement surface 161. In a case where the stage 31 is supported by other support member, the stage 31 may move by a movement of the support member supporting the stage 31. Namely, the operation for moving the stage 31 may include an operation for moving the stage 31 by moving the support member that supports the stage 31.

When the stage driving system 17 moves the stage 16, the relative positional relationship between the processing head 13 and the stage 16 described below (furthermore, the workpiece W placed on the stage 16) changes. Therefore, the relative positional relationship between the processing shot area PSA (see FIG. 4 described below), in which the processing head 13 performs the processing, and the workpiece W changes. Namely, the processing shot area PSA moves relative to the workpiece W. The processing unit 1 may process the workpiece W while moving the stage 16. Specifically, the processing unit 1 may set the processing shot area PSA at a desired position of the workpiece W by moving the stage 16, and process the desired position of the workpiece W. However, in a case where the processing shot area PSA can be set at the desired position of the workpiece W by moving the processing head 13 described below, the processing unit 1 may process the workpiece W without moving the stage 16.

When the stage driving system 17 moves the stage 16, the relative positional relationship between the processing head 13 and the stage 16 described below (furthermore, the workpiece W placed on the stage 16) changes. Therefore, the relative positional relationship between the measurement shot area MSA (see FIG. 4 described below), in which the processing head 13 performs the measurement, and the workpiece W changes. Namely, the measurement shot area MSA moves relative to the workpiece W. The processing unit 1 may measure the measurement target object M while moving the stage 16. Specifically, the processing unit 1 may set the measurement shot area MSA at a desired position of the measurement target object M by moving the stage 16, and measure the desired position of the measurement target object M. However, in a case where the measurement shot area MSA can be set at the desired position of the workpiece W by moving the processing head 13 described below, the processing unit 1 may measure the measurement target object M without moving the stage 16. Note that an operation for setting the measurement shot area MSA at the desired position of the measurement target obj ect M may be regarded to be equivalent to an operation for disposing the measurement shot area MSA at a desired range on the surface of the measurement target object M.

The position measurement apparatus 18 is configured to measure a position of the stage 16. The position measurement apparatus 18 may include an interferometer (for example, a laser interferometer), for example. The position measurement apparatus 18 may include an encoder (at least one of a linear encoder and a rotary encoder, as one example) , for example. In a case where the stage driving system 17 uses a stepping motor as a driving source, the position measurement apparatus 18 may include an open-loop control type of position detection apparatus. The open-loop control type of position detection apparatus is a position detection apparatus that measures the position of the stage 16 by estimating a moving distance of the stage 16 based on a total sum of number of pulses to drive the stepping motor.

The control unit 2 controls an operation of the processing unit 1. Note that the control unit 2 may be referred to as a control unit. For example, the control unit 2 may control an operation of the processing head 13 of the processing unit 1. For example, the control unit 2 may control an operation of at least one of the processing optical system 131, the measurement optical system 132, the combining optical system 133, and the objective optical system 134 of the processing head 13. For example, the control unit 2 may control an operation of the head driving system 14 of the processing unit 1 (for example, the movement of the processing head 13). For example, the control unit 2 may control an operation of the stage driving system 17 of the processing unit 1 (for example, the movement of the stage 16).

The control unit 2 may control the operation of the processing unit 1 based on a measured result of the measurement target object M by the processing unit 1. Specifically, the control unit 2 may generate measurement data (for example, data related to at least one of the position and the shape of the measurement target object M) based on the measured result of the measurement target object M, and may control the operation of the processing unit 1 based on the generated measurement data. For example, the control unit 2 may generate the measurement data of at least a part of the workpiece W (for example, calculate at least one of the position and the shape of at least a part of the workpiece W) based on measured result of the workpiece W that is one example of the measurement target object M, and control the operation of the processing unit 1 to process the workpiece W based on the measurement data. As one example, the control unit 2 may control the operation of the processing unit 1 so that the processing shot area PSA that is irradiated with the processing light EL is set at the desired position of the workpiece W based on the measurement data.

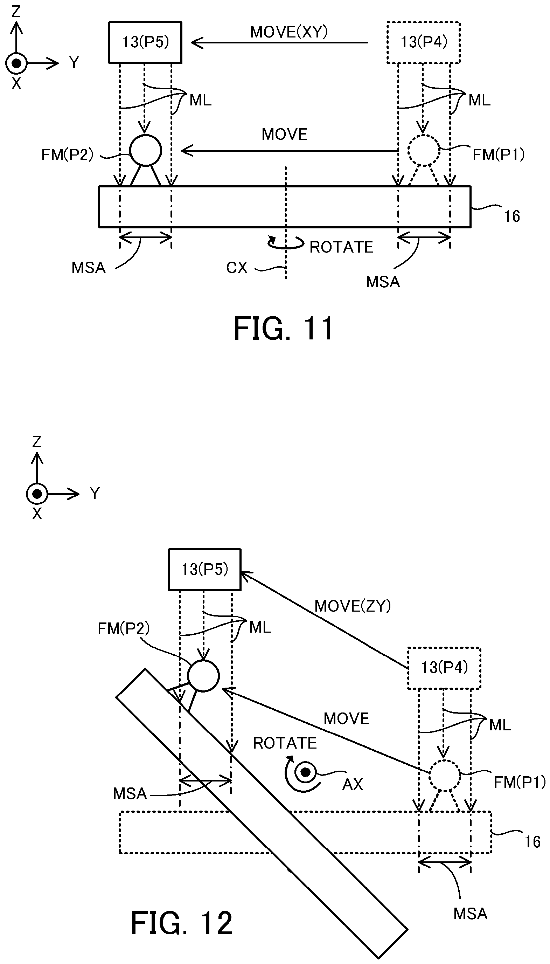

In the present example embodiment, the control unit 2 may perform the movement error calculation operation for calculating a movement error (in other words, a motion error) occurring in a movement of at least one of the processing head 13 and the stage 16 based on the measured result by the processing unit 1. Specifically, the control unit 2 may perform the movement error calculation operation based on the measured result of the below-described fiducial member FM by the processing unit 1. Note that the control unit 2 that performs the movement error calculation operation may be referred to as a movement error calculation system. Note that the movement error calculation operation will be described in detail later with reference to FIG. 11.

The control unit 2 may include an arithmetic apparatus and a storage apparatus, for example. Note that the control unit 2 may be referred to as an arithmetic unit. The arithmetic apparatus may include at least one of a CPU (Central Processing Unit) and a GPU (Graphical Processing Unit), for example. The storage apparatus may include a memory, for example. The control unit 2 serves as an apparatus for controlling the operation of the processing unit 1 by means of the arithmetic apparatus executing a computer program. The computer program is a computer program that allows the control unit 2 (for example, the arithmetic apparatus) to perform (namely, to execute) a below-described operation that should be performed by the control unit 2. Namely, the computer program is a computer program that allows the control unit 2 to function so as to make the processing unit 1 perform the below-described operation. The computer program executed by the arithmetic apparatus may be recorded in the storage apparatus (namely, a recording medium) of the control unit 2, or may be recorded in any recording medium (for example, a hard disk or a semiconductor memory) that is built in the control unit 2 or that is attachable to the control unit 2. Alternatively, the arithmetic apparatus may download the computer program that should be executed from an apparatus disposed at the outside of the control unit 2 through a network interface.

The control unit 2 may not be disposed in the processing unit 1, and may be disposed at the outside of the processing unit 1 as a server or the like. In this case, the control unit 2 may be connected to the processing unit 1 through a wired and / or wireless network (alternatively, a data bus and / or a communication line). A network using a serial-bus-type interface such as at least one of IEEE1394, RS-232x, RS-422, RS-423, RS-485 and USB may be used as the wired network. A network using a parallel-bus-type interface may be used as the wired network. A network using an interface that is compatible to Ethernet (a registered trademark) such as at least one of 10-BASE-T, 100BASE-TX or 1000BASE-T may be used as the wired network. A network using an electrical wave may be used as the wireless network. A network that is compatible to IEEE802. 1x (for example, at least one of a wireless LAN and Bluetooth (registered trademark)) is one example of the network using the electrical wave. A network using an infrared ray may be used as the wireless network. A network using an optical communication may be used as the wireless network. In this case, the control unit 2 and the processing unit 1 may be configured to transmit and receive various information through the network. Moreover, the control unit 2 may be configured to transmit information such as a command and a control parameter to the processing unit 1 through the network. The processing unit 1 may include a receiving apparatus that receives the information such as the command and the control parameter from the control unit 2 through the network. The processing unit 1 may include a transmitting apparatus that transmits the information such as the command and the control parameter to the control unit 2 (namely, an output apparatus that outputs the information to the control unit 2) through the network. Alternatively, a first control apparatus that performs a part of the processing performed by the control unit 2 may be disposed in the processing unit 1 and a second control apparatus that performs another part of the processing performed by the control unit 2 may be disposed at the outside of the processing unit 1.

An arithmetic model that is buildable by machine learning may be implemented in the control unit 2 by the arithmetic apparatus executing the computer program. One example of the arithmetic model that is buildable by the machine learning is an arithmetic model including a neural network (so-called Artificial Intelligence (AI)), for example. In this case, the learning of the arithmetic model may include learning of parameters of the neural network (for example, at least one of weights and biases). The control unit 2 may control the operation of the processing unit 1 by using the arithmetic model. Namely, the operation for controlling the operation of the processing unit 1 may include an operation for controlling the operation of the processing unit 1 by using the arithmetic model. Note that the arithmetic model that has been built by off-line machine learning using training data may be implemented in the control unit 2. Moreover, the arithmetic model implemented in the control unit 2 may be updated by online machine learning on the control unit 2. Alternatively, the control unit 2 may control the operation of the processing unit 1 by using the arithmetic model implemented in an apparatus external to the control unit 2 (namely, an apparatus external to the processing unit 1), in addition to or instead of the arithmetic model implemented on the control unit 2.

Note that the recording medium recording therein the computer program that should be executed by the control unit 2 may include an optical disc such as a CD-ROM, a CD-R, a CD-RW, a flexible disc, a MO, a DVD-ROM, a DVD-RAM, a DVD-R, a DVD+R, a DVD-RW, a DVD+RW and a Blu-ray (registered trademark), a magnetic disc such as a magnetic tape, an optical-magnetic disc, a semiconductor memory such as a USB memory, and another medium that is configured to store the program. The recording medium may include a device that is configured to record the computer program (for example, a device for a universal use or a device for an exclusive use in which the computer program is embedded to be executable in a form of at least one of a software, a firmware and the like). Moreover, each process or function included in the computer program may be realized by a logical process block that is realized in the control unit 2 by means of the control unit 2 (namely, a computer) executing the computer program, may be realized by a hardware such as a predetermined gate array (a FPGA (Field Programmable Gate Array), an ASIC (Application Specific Integrated Circuit)) of the control unit 2, or may be realized in a form in which the logical process block and a partial hardware module that realizes an partial element of the hardware are combined.

### (1-2) Configuration of Processing head 13

Next, with reference to FIG. 3, one example of a configuration of the processing head 13 will be described. FIG. 3 is a cross-sectional view that illustrates one example of the configuration of the processing head 13.

As illustrated in FIG. 3, the processing light EL generated by the processing light source 11 enters the processing head 13 through a light transmitting member 111 such as an optical fiber. The processing light source 11 may be disposed outside the processing head 13. The processing light source 11 may be disposed inside the processing head 13.

As described above, the processing head 13 includes the processing optical system 131, the measurement optical system 132, the combining optical system 133 and the objective optical system 134. The processing optical system 131, the measurement optical system 132, the combining optical system 133 and the objective optical system 134 may be contained in a head housing 135 of the processing head 13. The processing optical system 131, the measurement optical system 132, the combining optical system 133 and the objective optical system 134 may be attached to the head housing 135. However, at least one of the processing optical system 131, the measurement optical system 132, the combining optical system 133 and the objective optical system 134 may not be contained in the head housing 135.

The processing optical system 131 is an optical system to which the processing light EL emitted from the processing light source 11 enters. The processing optical system 131 is an optical system that emits, toward the combining optical system 133, the processing light EL entering the processing optical system 131. The workpiece W is irradiated with the processing light EL emitted from the processing optical system 131 through the combining optical system 133 and the objective optical system 134. In this manner, the processing optical system 131 processes the workpiece W by irradiating the workpiece W with the processing light EL through the objective optical system 134. Thus, the processing optical system 131 may be referred to as a processing apparatus.

The processing optical system 131 may include a position adjustment optical system 1311, an angle adjustment optical system 1312 and a condensed position adjustment optical system 1313, for example. The position adjustment optical system 1311 is configured to adjust an emitting position of the processing light EL from the processing optical system 131. The position adjustment optical system 1311 may include a parallel plate that is configured to incline with respect to a propagating direction of the processing light EL, for example, and changes the emitting position of the processing light EL by changing an inclined angle of the parallel plate. The angle adjustment optical system 1312 is configured to adjust an emitting angle (namely, an emitting direction) of the processing light EL from the processing optical system 131. The angle adjustment optical system 1312 may include a mirror that is configured to incline with respect to the propagating direction of the processing light EL, for example, and change the emitting angle of the processing light EL by changing an inclined angle of the mirror. The condensed position adjustment optical system 1313 is configured to adjust (typically, change) a condensed position of the processing light EL in the propagating direction of the processing light EL. The condensed position adjustment optical system 1313 may include a plurality of lenses that are aligned along the propagating direction of the processing light EL. In this case, the condensed position of the processing light EL is adjusted by moving at least one of the plurality of lenses along an optical axis thereof. Alternatively, the condensed position adjustment optical system 1313 may include an optical member (typically, a Galvano mirror) that is configured to move the condensed position of the processing light EL along a desired direction by deflecting the processing light EL. However, the processing optical system 131 may not include at least one of the position adjustment optical system 1311, the angle adjustment optical system 1312, and the condensed position adjustment optical system 1313.

The processing light EL emitted from the processing optical system 131 enters the combining optical system 133. The combining optical system 133 includes a beam splitter (for example, a polarized beam splitter) 1331. The beam splitter 1331 emits, toward the objective optical system 134, the processing light EL entering the beam splitter 1331. In the example illustrated in FIG. 3, the processing light EL entering the beam splitter 1331 passes through a polarization split surface to be emitted toward the objective optical system 134. Thus, in the example illustrated in FIG. 3, the processing light EL enters the polarization split surface of the beam splitter 1331 in a state where it has a polarized direction that allows it to pass through the polarization split surface (a polarized direction by which it is a p-polarized light with respect to the polarization split surface).

The processing light EL emitted from the combining optical system 133 enters the objective optical system 134. The objective optical system 134 emits, toward the workpiece W, the processing light EL entering the objective optical system 134. The objective optical system 134 includes a Galvano mirror 1341 and the fθ lens 1342.

The processing light EL entering the objective optical system 134 enters the Galvano mirror 1341. The Galvano mirror 1341 deflects the processing light EL (namely, changes the emitting angle of the processing light EL). The Galvano mirror 1341 changes the condensed position of the processing light EL in a plane intersecting with an optical axis EX of the fθ lens 1342 (namely, in a plane along the XY plane) by deflecting the processing light EL. Usually, as illustrated in FIG. 3, the processing head 13 irradiates the workpiece W with the processing light EL in a state where the optical axis EX of the fθ lens 1342 intersects with the surface of the workpiece W. Therefore, when the condensed position of the processing light EL in the plane intersecting with the optical axis EX is changed, a target irradiation position PA of the processing light EL on the surface of the workpiece W is changed in a direction along the surface of the workpiece W. Namely, the target irradiation position PA of the processing light EL is changed along at least one of the X-axis direction and the Y-axis direction.

The Galvano mirror 1341 includes an X scanning mirror 1341X and a Y scanning mirror 1341Y Each of the X scanning mirror 1341X and the Y scanning mirror 1341Y is an inclined angle variable mirror whose angle relative to the optical path of the processing light EL entering the Galvano mirror 1341 is changeable. The X scanning mirror 1341X deflects the processing light EL so as to change the irradiation position of the processing light EL on the workpiece W along the X-axis direction. In this case, the X scanning mirror 1341X may be rotatable or swingable around the Y-axis. The Y scanning mirror 1341Y deflects the processing light EL so as to change the irradiation position of the processing light EL on the workpiece W along the Y-axis direction. The Y scanning mirror 1341Y may be rotatable or swingable around the X-axis.

By this Galvano mirror 1341, a processing shot area PSA determined based on the processing head 13 is scannable with the processing light EL. In other words, the Galvano mirror 1341 allows the target irradiation position PA to move in the processing shot area PSA determined based on the processing head 13. One example of the processing shot area PSA is illustrated in FIG. 4. As illustrated in FIG. 4, the processing shot area PSA indicates an area (in other words, a range) in which the processing is performed by the processing head 13 in a state where a positional relationship between the processing head 13 and the workpiece W is fixed (namely, is not changed). Typically, the processing shot area PSA is set to be an area that is same as a scanning range of the processing light EL deflected by the Galvano mirror 1341 in a state where the positional relationship between the processing head 13 and the workpiece W is fixed or that is smaller than the scanning range. Furthermore, the processing shot area PSA (the target irradiation position PA) is movable relatively on the surface of the workpiece W by moving the processing head 13 by the head driving system 14 and / or moving the stage 16 by the stage driving system 17 as described above.

Note that the processing shot area PSA may be a maximum range of a range in which the processing is performed by the processing head 13 in a state where the positional relationship between the processing head 13 and the workpiece W is fixed. The scanning range of the processing light EL deflected by the Galvano mirror 1341 may be a scanning range of the processing light EL in a case where a deflection angle is maximum within a range of the deflection angle determined by the Galvano mirror 1341. In the example illustrated in FIG. 4, a shape of the processing shot area PSA is rectangular shape. However, the shape of the processing shot area PSA is not limited to the rectangular shape illustrated in FIG. 4. For example, the shape of the processing shot area PSA may be a polygonal shape, a circular shape, or an elliptical shape. The shape of the processing shot area PSA may be set by an operator of the processing system SYS. The size of the processing shot area PSA may be set by the operator of the processing system SYS.

The objective optical system 134 may include any deflection optical member that is configured to deflect the processing light EL in addition to or instead of the Galvano mirror 1341. One example of the deflection optical member is a polygonal mirror having a plurality of reflection surfaces whose angles are different. The polygonal mirror is rotatable to change an incident angle of the processing light EL relative to one reflection surface in a period during which the one reflection surface is irradiated with the processing light EL, and to switch the reflection surface that is irradiated with the processing light EL among the plurality of reflection surfaces. Another example of the deflection optical member is at least one of an acousto-optic element, an electro-optic element, a MEMS mirror, a two-dimensional mirror that is rotatable (swingable) in two axial directions, and the like.

Again in FIG. 3, the processing light EL emitted from the Galvano mirror 1341 enters the fθ lens 1342. The fθ lens 1342 irradiates the workpiece W with the processing light EL from the Galvano mirror 1341. Specifically, the fθ lens 1342 emits the processing light EL toward a direction along the optical axis EX of the fθ lens 1342. As a result, the processing light EL emitted by the fθ lens 1342 enters the workpiece W by propagating along the direction along the optical axis EX.

The fθ lens 1342 condenses the processing light EL from the Galvano mirror 1341 on the workpiece W. In this case, the processing light EL emitted from the fθ lens 1342 may enter the workpiece W without passing through other optical element (in other words, an optical element such as a lens) having power. In this case, the fθ lens 1342 may be referred to as a terminal optical element because it is a final optical element having the power (namely, an optical element closest to the workpiece W) of the plurality of optical elements aligned on the optical path of the processing light EL.

Incidentally, in order for the processing head 13 to irradiate the workpiece W with the processing light EL, it is enough for the processing head 13 to include at least the fθ lens 1342. In this case, the processing light EL may enter the processing head 13 through the processing optical system 131, the combining optical system 133, and the Galvano mirror 1341 that are disposed outside the processing head 13. The processing head 13 may irradiate the workpiece W with the processing light EL entering the processing head 13 through the fθ lens 1342.

Furthermore, the measurement light ML generated by the measurement light source 12 enters the processing head 13 through a light transmitting member 121 such as an optical fiber. The measurement light source 12 may be disposed outside the processing head 13. The measurement light source 12 may be disposed inside the processing head 13.

The measurement light source 12 may include a light comb light source. The light comb light source is a light source that is configured to generate, as the pulsed light, light including frequency components that are arranged with equal interval on a frequency axis (hereinafter, it is referred to as a "light frequency comb"). In this case, the measurement light source 12 emits, as the measurement light ML, the pulsed light including the frequency components that are arranged with equal interval on the frequency axis. However, the measurement light source 12 may include a light source that is different from the light comb light source.

In the example illustrated in FIG. 3, the processing system SYS includes a plurality of measurement light sources 12. For example, the processing system SYS includes a measurement light source 12#1 and a measurement light source 12#2. The plurality of measurement light sources 12 emit a plurality of measurement lights ML whose phases are synchronized with each other and that are coherent, respectively. For example, oscillation frequencies of the plurality of measurement light sources 12 may be different. Thus, the plurality of measurement lights ML respectively emitted from the plurality of measurement light sources 12 are the plurality of measurement lights ML having different pulse frequencies (for example, the number of the pulsed light per unit time, and an inverse number of an emitting cycle of the pulsed light). However, the processing system SYS may include a single measurement light source 12.

The measurement light ML emitted from the measurement light source 12 enters the measurement optical system 132. The measurement optical system 132 is an optical system that emits the measurement light ML entering the measurement optical system 132 toward the combining optical system 133. The measurement target object M is irradiated with the measurement light ML emitted from the measurement optical system 132 through the combining optical system 133 and the objective optical system 134. Namely, the measurement optical system 132 irradiates the measurement target object M with the measurement light ML through the combining optical system 133 and the objective optical system 134 in order to measure the measurement target object M.

The measurement optical system 132 includes a mirror 1320, a beam splitter 1321, a beam splitter 1322, a detector 1323, a beam splitter 1324, a mirror 1325, a detector 1326, a mirror 1327, and a Galvano mirror 1328, for example. However, the measurement optical system 132 may not include the Galvano mirror 1328.

The measurement light ML emitted from the measurement light source 12 enters the beam splitter 1321. Specifically, the measurement light ML emitted from the measurement light source 12#1 (in the below-described description, it is referred to as a "measurement light ML#1") enters the beam splitter 1321. The measurement light ML emitted from the measurement light source 12#2 (in the below-described description, it is referred to as a "measurement light MI,#2") enters the beam splitter 1321 through the mirror 1320. The beam splitter 1321 emits the measurement lights ML#1 and ML#2 entering the beam splitter 1321 toward the beam splitter 1322. Namely, the beam splitter 1321 emits the measurement light ML#1 and ML#2, which have entered the beam splitter 1321 from different directions, toward the same direction (namely, the direction in which the beam splitter 1322 is disposed).

The beam splitter 1322 reflects, toward the detector 1323, a measurement light ML#1-1 that is a part of the measurement light MI,#1 entering the beam splitter 1322. The beam splitter 1322 emits, toward the beam splitter 1324, a measurement light ML#1-2 that is another part of the measurement light MI,#1 entering the beam splitter 1322. The beam splitter 1322 reflects, toward the detector 1323, a measurement light MI,#2-1 that is a part of the measurement light MI,#2 entering the beam splitter 1322. The beam splitter 1322 emits, toward the beam splitter 1324, a measurement light ML#2-2 that is another part of the measurement light ML#2 entering the beam splitter 1322.

The measurement lights ML#1-1 and MI,#2-1 emitted from the beam splitter 1322 enter the detector 1323. The detector 1323 optically receives (namely, detects) the measurement light ML#1-1 and the measurement light MI,#2-1. Especially, the detector 1323 optically receives interfering light generated by an interference between the measurement light ML#1-1 and the measurement light MI,#2-1. Note that an operation for optically receiving the interfering light generated by the interference between the measurement light ML#1-1 and the measurement light MI,#2-1 may be regarded to be equivalent to an operation for optically receiving the measurement light ML#1-1 and the measurement light MI,#2-1. A detected result by the detector 1323 is outputted to the control unit 2.

The measurement lights MI,#1-2 and MI,#2-2 emitted from the beam splitter 1322 enter the beam splitter 1324. The beam splitter 1324 emits, toward the mirror 1325, at least a part of the measurement light ML#1-2 entering the beam splitter 1324. The beam splitter 1324 emits, toward the mirror 1327, at least a part of the measurement light MI,#2-2 entering the beam splitter 1324.

The measurement light ML#1-2 emitted from the beam splitter 1324 enters the mirror 1325. The measurement light ML#1-2 entering the mirror 1325 is reflected by a reflection surface (the reflection surface may be referred to as a reference surface) of the mirror 1325. Specifically, the mirror 1325 reflects, toward the beam splitter 1324, the measurement light ML#1-2 entering the mirror 1325. Namely, the mirror 1325 emits (returns) the measurement light ML#1-2, which has entered the mirror 1325, toward the beam splitter 1324 as a measurement light ML#1-3 that is a reflection light thereof. In this case, the measurement light MK#1-3 may be referred to as a reference light. The measurement light ML#1-3 emitted from the mirror 1325 enters the beam splitter 1324. The beam splitter 1324 emits, toward the beam splitter 1322, the measurement light ML#1-3 entering the beam splitter 1324. The measurement light ML#1-3 emitted from the beam splitter 1324 enters the beam splitter 1322. The beam splitter 1322 emits, toward the detector 1326, the measurement light ML#1-3 entering the beam splitter 1322.

On the other hand, the measurement light MI,#2-2 emitted from the beam splitter 1324 enters the mirror 1327. The mirror 1327 reflects, toward the Galvano mirror 1328, the measurement light MI,#2-2 entering the mirror 1327. Namely, the mirror 1327 emits, toward the Galvano mirror 1328, the measurement light MI,#2-2 entering the mirror 1327.

The Galvano mirror 1328 deflects the measurement light MI,#2-2 (namely, changes the emitting angle of the measurement light MI,#2-2). The Galvano mirror 1328 changes a condensed position of the measurement light ML in a plane intersecting with the optical axis EX of the fθ lens 1342 (namely, in a plane along the XY plane) by deflecting the measurement light MI,#2-2. Usually, as illustrated in FIG. 3, the processing head 13 irradiates the workpiece W with the measurement light MI,#2-2 in a state where the optical axis EX of the fθ lens 1342 intersects with the surface of the measurement target object M (in the example illustrated in FIG. 3, the workpiece W). Therefore, when the condensed position of the measurement light MI,#2-2 in the plane intersecting with the optical axis EX is changed, a target irradiation position MA of the measurement light MI,#2-2 on the surface of the measurement target object M is changed in a direction along the surface of the measurement target object M. Namely, the target irradiation position MA of the measurement light MI,#2-2 is changed along at least one of the X-axis direction and the Y-axis direction.

The Galvano mirror 1328 includes an X scanning mirror 1328X and a Y scanning mirror 1328Y. Each of the X scanning mirror 1328X and the Y scanning mirror 1328Y is an inclined angle variable mirror whose angle relative to an optical path of the measurement light MI,#2-2 entering the Galvano mirror 1328 is changeable. The X scanning mirror 1328X deflects the measurement light MI,#2-2 so as to change the irradiation position of the measurement light MI,#2-2 on the measurement target object M along the X-axis direction. In this case, the X scanning mirror 1328X may be rotatable or swingable around the Y-axis. The Y scanning mirror 1328Y deflects the measurement light ML#2-2 so as to change the irradiation position of the measurement light MI,#2-2 on the measurement target obj ect M along the Y-axis direction. The Y scanning mirror 1328Y may be rotatable or swingable around the X-axis.

The measurement light ML#2-2 emitted from the Galvano mirror 1328 enters the combining optical system 133. The beam splitter 1331 of the combining optical system 133 emits, toward the objective optical system 134, the measurement light MI,#2-2 entering the beam splitter 1331. In the example illustrated in FIG. 3, the measurement light MI,#2-2 entering the beam splitter 1331 is reflected by the polarization split surface to be emitted toward the objective optical system 134. Thus, in the example illustrated in FIG. 3, the measurement light MI,#2-2 enters the polarization split surface of the beam splitter 1331 in a state where it has a polarized direction that allows it to be reflected by the polarization split surface (a polarized direction by which it is a s-polarized light with respect to the polarization split surface).

Here, not only the measurement light MI,#2-2 but also the processing light EL enter the beam splitter 1331 as described above. Namely, both of the measurement light MI,#2-2 and the processing light EL pass through the beam splitter 1331. The beam splitter 1331 emits, toward the same direction (namely, toward the same objective optical system 134), the processing light EL and the measurement light MI,#2-2 that respectively enter the beam splitter 1331 from different directions. Therefore, the beam splitter 1331 substantially serves as a combining optical member that combines the processing light EL and the measurement light ML#2-2.

Incidentally, in a case where a wavelength of the processing light EL is different from a wavelength of the measurement light ML, the combining optical system 133 may include, as the combining optical member, a dichroic mirror, instead of the beam splitter 1331. Even in this case, the combining optical system 133 can combine the processing light EL and the measurement light MI,#2-2 (namely, can combine the optical path of the processing light EL and the optical path of the measurement light ML#2-2) by using the dichroic mirror.

The measurement light MI,#2-2 emitted from the beam splitter 1331 enters the Galvano mirror 1341. The Galvano mirror 1341 deflects the measurement light MI,#2-2 in the same manner, as with a case where it deflects the processing light EL. Therefore, the Galvano mirror 1341 is configured to change the target irradiation position MA of the measurement light ML#2-2 on the surface of the measurement target object M in the direction along the surface of the measurement target object M.

As described above, not only the measurement light MI,#2-2 but also the processing light EL enter the Galvano mirror 1341. Namely, the processing light EL and the measurement light MI,#2-2 combined by the beam splitter 1331 enter the Galvano mirror 1341. Therefore, both of the measurement light MI,#2-2 and the processing light EL pass through the same Galvano mirror 1341. Therefore, the Galvano mirror 1341 is configured to change the target irradiation position PA of the processing light EL and the target irradiation position MA of the measurement light MI,#2-2 in synchronization with each other. Namely, the Galvano mirror 1341 is configured to change the target irradiation position PA of the processing light EL and the target irradiation position MA of the measurement light MI,#2-2 in conjunction with each other.

On the other hand, as described above, the measurement light MI,#2-2 is emitted toward the workpiece W through the Galvano mirror 1328 and the processing light EL is emitted toward the workpiece W without passing though the Galvano mirror 1328. Thus, the processing system SYS may move the target irradiation position MA of the measurement light ML#2-2 independently relative to the target irradiation position PA of the processing light EL. The processing system SYS may change the target irradiation position PA of the processing light EL and the target irradiation position MA of the measurement light MI,#2-2 independently. The processing system SYS may change a positional relationship between the target irradiation position PA of the processing light EL and the target irradiation position MA of the measurement light ML#2-2.

By at least one of the Galvano mirrors 1341 and 1328, a measurement shot area MSA determined based on the processing head 13 is scannable with the measurement light ML. In other words, at least one of the Galvano mirrors 1328 and 1341 allows the target irradiation position MA to move in the measurement shot area MSA determined based on the processing head 13. One example of the measurement shot area MSA is illustrated in FIG. 5. As illustrated in FIG. 5, the measurement shot area MSA indicates an area (in other words, a range) in which the measurement is performed by the processing head 13 in a state where a positional relationship between the processing head 13 and the measurement target object M is fixed (namely, is not changed). Typically, the measurement shot area MSA is set to be an area that is same as a scanning range of the measurement light ML deflected by at least one of the Galvano mirrors 1341 and 1328 in a state where the positional relationship between the processing head 13 and the measurement target object M is fixed or that is smaller than the scanning range. Furthermore, the measurement shot area MSA (the target irradiation position MA) is movable relatively on the surface of the measurement target object M by moving the processing head 13 by the head driving system 14 and / or moving the stage 16 by the stage driving system 17 as described above.

Note that the measurement shot area MSA may be a maximum range of a range in which the measurement is performed by the processing head 13 in a state where the positional relationship between the processing head 13 and the measurement target object M is fixed. The scanning range of the measurement light ML deflected by the Galvano mirror 1341 may be a scanning range of the measurement light ML in a case where a deflection angle is maximum within a range of the deflection angle determined by the Galvano mirror 1341. In the example illustrated in FIG. 5, a shape of the measurement shot area MSAis rectangular shape. However, the shape of the measurement shot area MSA is not limited to the rectangular shape illustrated in FIG. 5. For example, the shape of the measurement shot area MSA may be a polygonal shape, a circular shape, or an elliptical shape. The shape of the measurement shot area MSA may be set by an operator of the processing system SYS. The size of the measurement shot area MSA may be set by the operator of the processing system SYS.

Again in FIG. 3, the measurement light MI,#2-2 emitted from the Galvano mirror 1341 enters the fθ lens 1342. The fθ lens 1342 irradiates the measurement target object M with the measurement light MI,#2-2 from the Galvano mirror 1341. Specifically, the fθ lens 1342 emits the measurement light MI,#2-2 toward a direction along the optical axis EX of the fθ lens 1342. As a result, the measurement light MI,#2-2 emitted by the fθ lens 1342 enters the measurement target object M by propagating along the direction along the optical axis EX.

The fθ lens 1342 may condense the measurement light ML#2-2 from the Galvano mirror 1341 on the measurement target object M. In this case, the measurement light ML#2-2 emitted from the fθ lens 1342 may enter the measurement target object M without passing through other optical element (in other words, an optical element such as a lens) having power.

When the measurement target object M is irradiated with the measurement light MI,#2-2, light due to the irradiation of the measurement light MI,#2-2 is generated from the measurement target obj ect M. Namely, when the measurement target obj ect M is irradiated with the measurement light MI,#2-2, the light due to the irradiation of the measurement light MI,#2-2 is emitted from the measurement target object M. The light emitted from the measurement target object M due to the irradiation of the measurement light ML#2-2 (namely, the light emitted from the measurement target object M due to the irradiation of the measurement light ML#2-2) may include at least one of the measurement light MI,#2-2 reflected by the measurement target object M (namely, reflection light), the measurement light MI,#2-2 scattered by the measurement target object M (namely, scattering light), the measurement light MI,#2-2 diffracted by the measurement target object M (namely, diffraction light) and the measurement light ML#2-2 passing through the measurement target object M (namely, transmitted light).

At least a part of the light emitted from the measurement target object M due to the irradiation of the measurement light MI,#2-2 enters the objective optical system 134 as the returning light RL. Specifically, light, which propagates along the optical path of the measurement light MI,#2-2 entering the measurement target object M, of the light emitted from the measurement target object M due to the irradiation of the measurement light MI,#2-2 enters the objective optical system 134 as the returning light RL. In this case, the optical path of the measurement light ML#2-2 that is emitted from the fθ lens 1342 and enters the measurement target object may be same as an optical path of the returning light RL that is emitted from the measurement target object M and enters the fθ lens 1342. As one example, in a case where the measurement light ML vertically enters the measurement target object M, the returning light RL may be light that is mainly specular reflection light of the measurement light ML. Of course, in a case where the measurement light ML vertically enters the measurement target object M, the returning light RL may include light other than the specular reflection light of the measurement light ML (for example, at least one of diffused reflection light, the scattered light, the transmitted light, and the diffracted light of the measurement light ML). As another example, in a case where the measurement light ML obliquely (in other words, non-vertically) enters the measurement target object M, the returning light RL may be light that is mainly the diffused reflection light of the measurement light ML. Of course, in a case where the measurement light ML obliquely enters the measurement target object M, the returning light RL may include light other than the diffused reflection light of the measurement light ML (for example, at least one of the specular reflection light, the scattered light, the transmitted light, and the diffracted light of the measurement light ML). The returning light RL entering the objective optical system 134 enters the combining optical system 133 through the fθ lens 1342 and the Galvano mirror 1341. The beam splitter 1331 of the combining optical system 133 emits the returning light RL entering the beam splitter 1331 toward the measurement optical system 132. In the example illustrated in FIG. 3, the returning light RL entering the beam splitter 1331 is reflected by the polarization split surface to be emitted toward the measurement optical system 132. Thus, in the example illustrated in FIG. 3, the returning light RL enters the polarization split surface of the beam splitter 1331 in a state where it has a polarized direction that allows itself to be reflected by the polarization split surface.

The returning light RL emitted from the beam splitter 1331 enters the Galvano mirror 1328 of the measurement optical system 132. The Galvano mirror 1328 emits the returning light RL entering the Galvano mirror 1328 toward the mirror 1327. The mirror 1327 reflects the returning light RL entering the mirror 1327 toward the beam splitter 1324. The beam splitter 1324 emits at least a part of the returning light RL entering the beam splitter 1324 toward the beam splitter 1322. The beam splitter 1322 emits at least a part of the returning light RL entering the beam splitter 1322 toward the detector 1326.

As described above, not only the returning light RL but also the measurement light ML#1-3 enter the detector 1326. Namely, the returning light RL reaching the detector 1326 through the measurement target object M and the measurement light ML#1-3 reaching the detector 1326 without passing through the measurement target object M enter the detector 1326. The detector 1326 optically receives (namely, detects) the measurement light ML#1-3 and the returning light RL. Especially, the detector 1326 optically receives (namely, detects) interference light generated by an interference between the measurement light ML#1-3 and the returning light RL. Note that an operation for optically receiving the interference light generated by the interference between the measurement light ML#1-3 and the returning light RL may be regarded to be equivalent to an operation for optically receiving the measurement light ML#1-3 and the returning light RL. A detected result by the detector 1326 is outputted to the control unit 2.

In this manner, the measurement optical system 132 irradiates the measurement target object M with the measurement light ML through the objective optical system 134 and optically receives the returning light RL from the measurement target object M through the objective optical system 134. This measurement apparatus 132 may be referred to as an optical detection apparatus.

The control unit 2 acquires the detected result by the detector 1323 and the detected result by the detector 1326. The control unit 2 may generate the measurement data of the measurement target object M (for example, the measurement data related to at least one of the position and the shape of the measurement target object M) based on the detected result by the detector 1323 and the detected result by the detector 1326.

Specifically, since the pulse frequency of the measurement light ML#1 is different from the pulse frequency of the measurement light ML#2, a pulse frequency of the measurement light ML#1-1 is different from a pulse frequency of the measurement light MI,#2-1. Therefore, the interfering light generated by the interference between the measurement light ML#1-1 and the measurement light MI,#2-1 is an interfering light in which a pulsed light appears in synchronization with a timing at which the pulsed light of the measurement light ML#1-1 and the pulsed light of the measurement light MI,#2-1 enter the detector 1323 at the same time. Similarly, a pulse frequency of the measurement light ML#1-3 is different from a pulse frequency of the returning light RL. Therefore, the interfering light generated by the interference between the measurement light ML#1-3 and the returning light RL is an interfering light in which a pulsed light appears in synchronization with a timing at which the pulsed light of the measurement light ML#1-3 and the pulsed light of the returning light RL enter the detector 1326 at the same time. Here, a position (a position along a time axis) of the pulsed light of the interfering light detected by the detector 1326 changes depending on a positional relationship between the processing head 13 and the measurement target object M. This is because the interfering light detected by the detector 1326 is the interfering light generated by the interference between the returning light RL reaching the detector 1326 through the measurement target object M and the measurement light ML#1-3 reaching the detector 1326 without passing through the measurement target object M. On the other hand, a position (a position along a time axis) of the pulsed light of the interfering light detected by the detector 1323 does not change depending on the positional relationship between the processing head 13 and the measurement target object M (namely, substantially, the positional relationship between the processing head 13 and the measurement target object M). Thus, a difference in time between the pulsed light of the interfering light detected by the detector 1323 and the pulsed light of the interfering light detected by the detector 1326 indirectly indicates the positional relationship between the processing head 13 and the measurement target object M. Specifically, it can be said that the difference in time between the pulsed light of the interfering light detected by the detector 1326 and the pulsed light of the interfering light detected by the detector 1323 indirectly indicates a distance between the processing head 13 and the measurement target object M in the direction along the optical path of the measurement light ML (namely, in the direction along the propagating direction of the measurement light ML). Thus, the control unit 2 may calculate the distance between the processing head 13 and the measurement target object M in the direction along the optical path of the measurement light ML (for example, in the Z-axis direction) based on the difference in time between the pulsed light of the interfering light detected by the detector 1326 and the pulsed light of the interfering light detected by the detector 1323. In other words, the control unit 2 may calculate a position of the measurement target object M in the direction along the optical path of the measurement light ML (for example, in the Z-axis direction). More specifically, the control unit 2 may calculate a distance between the processing head 13 and an irradiated part of the measurement target object M that is irradiated with the measurement light MI,#2-2. The control unit 2 may calculate a position of the irradiated part in the direction along the optical path of the measurement light ML (for example, in the Z-axis direction). Furthermore, since the irradiation position of the measurement light MI,#2-2 on the measurement target object M is determined by driving states of the Galvano mirrors 1341 and 1328, the control unit 2 may calculate, based on the driving states of the Galvano mirrors 1341 and 1328, a position of the irradiated part in the direction that intersects with the optical path of the measurement light ML (for example, in at least one of the X-axis direction and the Y-axis direction). As a result, the control unit 2 may generate the measurement data indicating the position in the measurement coordinate system that is based on the processing head 13 (for example, the position in a three-dimensional coordinate space) of the irradiated part. Furthermore, information related to the position of the processing head 13 and information related to the position of the stage 16 may be acquired from the position measurement apparatuses 15 and 18, respectively. Thus, the control unit 2 may generate, based on the position of the irradiated part in the measurement coordinate system, the information related to the position of the processing head 13, and the information related to the position of the stage 16, the measurement data indicating the position in a reference coordinate system that is a reference for the processing system SYS (for example, the three-dimensional position in the three-dimensional coordinate space) of the irradiated part.

The processing head 13 may irradiate a plurality of parts of the measurement target object M with the measurement light MI,#2-2. For example, at least one of the Galvano mirrors 1341 and 1328 may change the irradiation position of the measurement light MI,#2-2 on the measurement target object M so that the processing head 13 irradiates the plurality of parts of the measurement target object M with the measurement light MI,#2-2. For example, at least one of the processing head 13 and the stage 16 may move so that the processing head 13 irradiates the plurality of parts of the measurement target object M with the measurement light MI,#2-2. In a case where the plurality of parts of the measurement target object M are irradiated with the measurement light MI,#2-2, the control unit 2 may generate the measurement data indicating the positions of the plurality of parts of the measurement target object M. As a result, the control unit 2 may generate the measurement data indicating a shape of the measurement target object M based on the measurement data indicating the positions of the plurality of parts. For example, the control unit 2 may generate the measurement data indicating the shape of the measurement target object M by calculating, as the shape of the measurement target object M, a three-dimensional shape formed by a virtual plane (alternatively, a curved plane) connecting the plurality of parts whose positions are calculated.

### (2) Operation performed by Processing System SYS

Next, an operation performed by the processing system SYS will be described below. Especially, the operation performed by the processing system SYS using the measurement light ML will be described. As described above, the processing system SYS may perform the movement error calculation operation for calculating the movement error of at least one of the processing head 13 and the stage 16 based on the measured result of the fiducial member FM using the measurement light ML. Furthermore, before performing the movement error calculation operation, the processing system SYS may perform an optical calibration operation for performing an alignment of the target irradiation position PA that is irradiated with the processing light EL by the processing head 13 and the target irradiation position MA that is irradiated with the measurement light ML by the processing head 13. Furthermore, the processing system SYS may perform a deformation error calculation operation for calculating a movement error occurring in the movement of at least one of the processing head 13 and the stage 16 due to a deformation of a member of the processing unit 1. Thus, in the below-described description, the optical calibration operation, the movement error calculation operation, and the deformation error calculation operation will be described in turn.

### (2-1) Optical Calibration Operation

Firstly, the optical calibration operation will be described. As described above, the optical calibration operation is the operation for performing the alignment of the target irradiation position PA that is irradiated with the processing light EL by the processing head 13 and the target irradiation position MA that is irradiated with the measurement light ML by the processing head 13. As described above, the target irradiation position PA moves within the processing shot area PSA that is set on the workpiece W by the Galvano mirror 1341. Similarly, the target irradiation position MA moves within the measurement shot area MSA that is set on the measurement target object M by the Galvano mirror 1341. Usually, the target irradiation position PAirradiated with the processing light EL from the Galvano mirror 1341 that is in one state coincides with the target irradiation position MA irradiated with the measurement light ML from the Galvano mirror 1341 that is the same one state in the direction intersecting with the optical axis EX of the fθ lens 1342 (for example, in at least one of the X-axis direction and the Y-axis direction). Note that a state of the Galvano mirror 1341 may include the angles of the X scanning mirror 1341X and the Y scanning mirror 1341Y. However, due to some factors, there is a possibility that the target irradiation position PA irradiated with the processing light EL from the Galvano mirror 1341 that is in one state does not coincide with the target irradiation position MA irradiated with the measurement light ML from the Galvano mirror 1341 that is the same one state. The optical calibration operation may be an operation for calculating a relationship (for example, a positional relationship) between the target irradiation position PA and the target irradiation position MA. In the below-described description, an example in which the optical calibration operation is an operation for calculating an amount of a positional deviation between the target irradiation position PA and the target irradiation position MA will be described. Namely, in the below-described description, an example in which the amount of the positional deviation between the target irradiation position PA and the target irradiation position MA is used as the relationship between the target irradiation position PA and the target irradiation position MA will be described.

In the present example embodiment, the processing system SYS may perform the optical calibration operation for calculating the relationship between the target irradiation position PA of the processing light EL and the target irradiation position MA of the measurement light ML by using the measurement light ML to measure the processed portion formed on a workpiece Wt by irradiating the workpiece Wt for a test (alternatively, the workpiece W that is the actual processing target). Next, one example of this optical calibration operation that measured the processed portion by using the measurement light ML will be described.

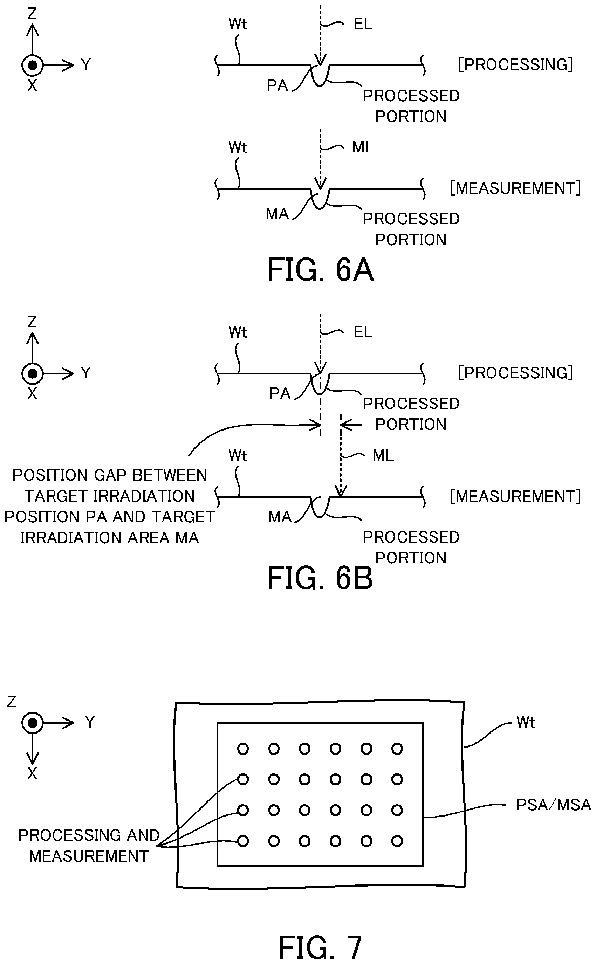

Specifically, in a case where the positional deviation between the target irradiation position PA and the target irradiation position MA does not occur (namely, the amount of the positional deviation is zero), the target irradiation position PA coincides with the target irradiation position MA. Therefore, as illustrated in FIG. 6A, in a case where the processed portion is formed on the workpiece Wt by the processing light EL from the Galvano mirror 1341 that is in one state, the processed portion is irradiated with the measurement light ML from the Galvano mirror 1341 that is in the same one state. On the other hand, in a case where the positional deviation between the target irradiation position PA and the target irradiation position MA occurs (namely, the amount of the positional deviation is not zero), the target irradiation position PA does not coincide with the target irradiation position MA. Therefore, as illustrated in FIG. 6B, in a case where the processed portion is formed on the workpiece Wt by the processing light EL from the Galvano mirror 1341 that is in one state, the processed portion is not irradiated with the measurement light ML from the Galvano mirror 1341 that is in the same one state. In this case, the processed portion is irradiated with the measurement light ML by moving at least one of the processing head 13 and the stage 16 by a predetermined amount. In this case, the moving amount of at least one of the processing head 13 and the stage 16 corresponds to the amount of the positional deviation between the target irradiation position PA and the target irradiation position MA.

Therefore, the control unit 2 may calculate the amount of the positional deviation between the target irradiation position PA and the target irradiation position MA by controlling the processing unit 1 to perform the following operation. Firstly, the control unit 2 may control the processing head 13 to set the state of the Galvano mirror 1341 to a predetermined state and then to irradiate the workpiece Wt with the processing light EL to form the processed portion on the workpiece Wt. Then, the control unit 2 may control the processing head 13 to irradiate the workpiece Wt with the measurement light ML while maintaining the state of the Galvano mirror 1341 in the predetermined state. In this case, the control unit 2 may determine whether or not the processed portion can be detected from the measured result of the workpiece Wt using the measurement light ML. In a case where it is determined that the processed portion can be detected from the measured result of the workpiece Wt using the measurement light ML, it is estimated that the processed portion is irradiated with the measurement light ML. Therefore, in this case, the control unit 2 may determine that the amount of the positional deviation between the target irradiation position PA and the target irradiation position MA is zero. On the other hand, in a case where it is determined that the processed portion cannot be detected from the measured result of the workpiece Wt using the measurement light ML, it is estimated that the processed portion is not irradiated with the measurement light ML. Therefore, in this case, the control unit 2 may move at least one of the processing head 13 and the stage 16 until the processed portion can be detected from the measured result of the workpiece Wt using the measurement light ML (namely, until the processed portion is irradiated with the measurement light ML). In this case, the control unit 2 may calculate the moving distance of at least one of the processing head 13 and the stage 16 until the processed portion can be detected from the measured result of the workpiece Wt using the measurement light ML, based on the measured results of at least one of the position measurement apparatuses 15 and 18. The calculated moving distance may be used as the amount of the positional deviation between the target irradiation position PA and the target irradiation position MA.

As illustrated in FIG. 7, the processing unit 1 may irradiate the plurality of parts within the processing shot area PSA with the processing light EL by changing the state of the Galvano mirror 1341 (specifically, changing the angle of at least one of the X scanning mirror 1341X and the Y scanning mirror 1341Y). As a result, the processed portion is formed at each of the plurality of parts within the processing shot area PSA. In this case, the processing unit 1 may irradiate the plurality of processed portions, which are formed at the plurality of parts within the processing shot area PSA, respectively, with the measurement light ML by changing the state of the Galvano mirror 1341. Here, the processing shot area PSA usually coincides with or is included in the measurement shot area MSA. Therefore, the processing unit 1 may be regarded to irradiate the plurality of processed portions, which are formed at the plurality of parts within the measurement shot area MSA, with the measurement light ML by changing the state of the Galvano mirror 1341. As a result, the control unit 2 may calculate the amount of the positional deviation between the target irradiation position PA and the target irradiation position MA at each of the plurality of parts in the processing shot area PSA (namely, the plurality of parts in the measurement shot area MSA).

As described above, the processing optical system 131 includes the condensed position adjustment optical system 1313. In this case, the processing unit 1 may perform the same operation while moving the processing head 13 along the Z-axis direction so that the condensed position of the processing light EL is changed and the changed condensed position of the processing light EL is located on the surface of the workpiece Wt. Namely, the processing unit 1 may form the processed portion and measure the processed portion each time the processing head 13 is moved along the Z-axis direction so that the condensed position of the processing light EL is changed and the changed condensed position of the processing light EL is located on the surface of the workpiece Wt. As a result, the control unit 2 may calculate the amount of the positional deviation between the target irradiation position PA and the target irradiation position MA at each of the plurality of parts in a three-dimensional space in which the processing and the measurement are performed by the processing unit 1.

After the amount of the positional deviation is calculated, the control unit 2 may control the processing unit 1 based on the amount of the positional deviation. Specifically, the control unit 2 may control the processing unit 1 based on the amount of the positional deviation so that the workpiece W is processed and the measurement target object M is measured in the same manner as with a case where the positional deviation between the target irradiation position PA and the target irradiation position MA does not occur, even in a case where the positional deviation between the target irradiation position PA and the target irradiation position MA occurs. In the below-described movement error calculation operation and the deformation error calculation operation, the control unit 2 may control the processing unit 1 based on the amount of the positional deviation so that the fiducial member FM is measured in the same manner as with a case where the positional deviation between the target irradiation position PA and the target irradiation position MA does not occur, even in a case where the positional deviation between the target irradiation position PA and the target irradiation position MA occurs. Typically, the control unit 2 may control the processing unit 1 to adjust the relationship between the target irradiation position PA and the target irradiation position MA based on the amount of the positional deviation. In this case, the control unit 2 may control the processing unit 1 so that the workpiece W is processed and the measurement target object M is measured after adjusting the relationship between the target irradiation position PA and the target irradiation position MA based on the amount of the positional deviation. For example, the control unit 2 may control the processing unit 1 so that the target irradiation position PA coincide with the target irradiation position MA at each position in the processing shot area PSA based on the amount of the positional deviation at each position in the processing shot area PSA. For example, the control unit 2 may control the processing unit 1 so that the target irradiation position PA coincides with the target irradiation position MA at each position in the measurement shot area MSA based on the amount of the positional deviation at each position in the measurement shot area MSA.

As one example, the target irradiation position PA on the workpiece W is changeable by the Galvano mirror 1341. Therefore, the control unit 2 may control the Galvano mirror 1341 to adjust the relationship between the target irradiation position PA and the target irradiation position MA by moving the target irradiation position PA. As another example, the target irradiation position PA on the workpiece W is changeable by at least one of the position adjustment optical system 1311 and the angle adjustment optical system 1312. Therefore, the control unit 2 may control at least one of the position adjustment optical system 1311 and the angle adjustment optical system 1312 to adjust the relationship between the target irradiation position PA and the target irradiation position MA by moving the target irradiation position PA. As another example, the target irradiation position PA on the workpiece W is changeable by moving at least one of the processing head 13 and the stage 16. Therefore, the control unit 2 may move at least one of the processing head 13 and the stage 16 to adjust the relationship between the target irradiation position PA and the target irradiation position MA by moving the target irradiation position PA. As another example, the target irradiation position MA on the measurement target object M is changeable by at least one of the Galvano mirrors 1341 and 1328. Therefore, the control unit 2 may control at least one of the Galvano mirrors 1341 and 1328 to adjust the relationship between the target irradiation position PA and the target irradiation position MA by moving the target irradiation position MA. As another example, the target irradiation position MA on the measurement target object M is changeable by moving at least one of the processing head 13 and the stage 16. Therefore, the control unit 2 may move at least one of the processing head 13 and the stage 16 to adjust the relationship between the target irradiation position PA and the target irradiation position MA by moving the target irradiation position MA.

### (2-2) Movement Error Calculation Operation

Next, the movement error calculation operation will be described. As described above, the movement error calculation operation is the operation for calculating the movement error of at least one of the processing head 13 and the stage 16 by using the measured result of the fiducial member FM using the measurement light ML. Therefore, in order to perform the movement error calculation operation, the processing unit 1 may irradiate the fiducial member FM with the measurement light ML and receive the returning light RL from the fiducial member FM. Furthermore, the control unit 2 may calculate the movement error based on the measured result of the fiducial member FM by the processing unit 1 (namely, a detected result of the returning light RL from the fiducial member FM).

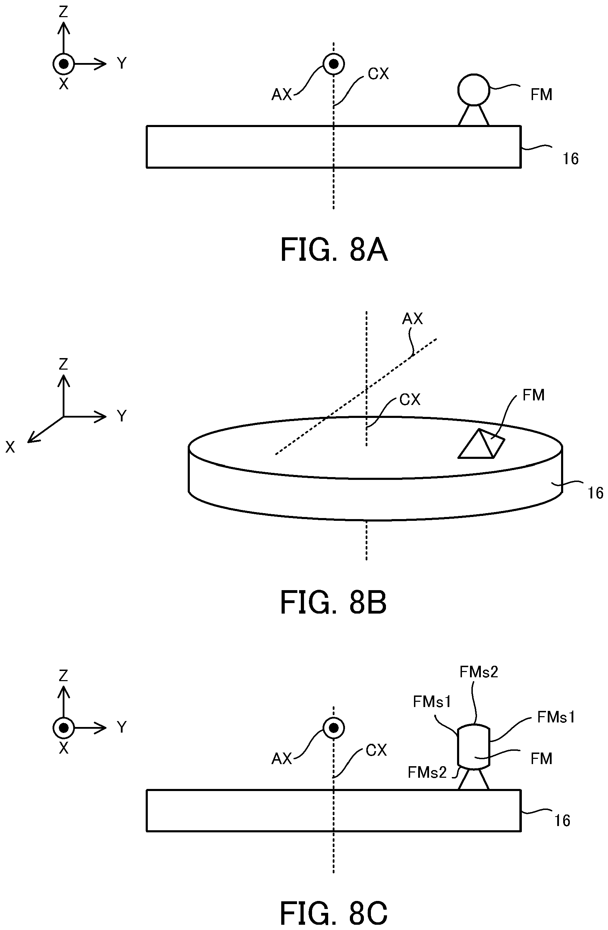

The fiducial member FM is any member that is measurable by using the measurement light ML. The fiducial member FM may be any member by which a reference position of the fiducial member FM can be calculated from the measured result of the fiducial member FM. One example of the fiducial member FM is illustrated in FIG. 8A to FIG. 8C. As illustrated in FIG. 8A, the fiducial member FM may be a member whose surface is a curved surface. In an example illustrated in FIG. 8A, the fiducial member FM is a member including a sphere. In this case, for example, a position of a center of the sphere may be used as the reference position of the fiducial member FM. As illustrated in FIG. 8B, the fiducial member FM may be a member whose surface is a planar surface. In an example illustrated in FIG. 8B, the fiducial member FM is a member including a polyhedron. At least one of a tetrahedron, an octahedron, a dodecahedron, and an icosahedron is one example of the polyhedron. In this case, for example, a position of a center of gravity of the polyhedron may be used as the reference position of the fiducial member FM. For example, a position at which a plurality of line segments that extend from a plurality of vertices of the polyhedron toward the center of gravity of the plurality of surfaces facing the plurality of vertices, respectively, intersect with each other may be used as the reference position of the fiducial member FM. As illustrated in FIG. 8C, the fiducial member FM may be a member whose surface includes both of a planar surface and a curved surface. In an example illustrated in FIG. 8C, the fiducial member FM is a member that includes two planar surfaces FMs1 that are formed by removing a part of the sphere and that face toward opposite directions, and a curved surface FMs2 that forms a surface of other part of the sphere that is not removed.

In a case where the movement error calculation operation is performed, the fiducial member FM is placed on the stage 16. On the other hand, in a case where the movement error calculation operation is not performed, the fiducial member FM may not be placed on the stage 16. As one example, the fiducial member FM may be detachably attached to the stage 16. In this case, the fiducial member FM may be attached to the stage 16 in a case where the movement error calculation operation is performed. On the other hand, the fiducial member FM may be detached from the stage 16 in a case where the movement error calculation operation is not performed. However, the fiducial member FM may be fixed to the stage 16 so that it cannot be detached from the stage 16. In a case where the fiducial member FM is fixed to the stage 16, a cover may be attached to isolate the fiducial member FM from atmosphere in a processing chamber (the inner space SP of the housing 3) to reduce contamination of the fiducial member FM.

The fiducial member FM may be placed at any position on the stage 16. For example, the fiducial member FM may be placed on the placement surface 161 of the stage 16. For example, the fiducial member FM may be placed on a surface of the stage 16 that is different from the placement surface 161, for example, above the placement surface 161 (at the +Z-axis direction side from the placement surface 161 in a case where the placement surface is located in the XY plane) or below the placement surface 161 (at the -Z-axis direction side from the placement surface 161 in a case where the placement surface is located in the XY plane). However, it is preferable that the fiducial member FM move in accordance with the movement (especially, the rotational movement) of the stage 16 in order to perform the movement error calculation operation, as described later in detail. For this reason, the fiducial member FM may be disposed at a position that is away from the rotational axis of the stage 16 along a direction that intersects with the rotational axis. For example, in the present example embodiment, the stage 16 is rotatable around each of the rotational axis AX along the A-axis and the rotational axis CX along the C-axis. Therefore, as illustrated in FIG. 8A to FIG. 8C, the fiducial member FM may be disposed at a position that is away from the rotational axis AX along a direction intersecting with the rotational axis AX (in the example illustrated in FIG. 8A to FIG. 8C, the Y-axis direction) and that is away from the rotational axis CX along a direction intersecting with the rotational axis CX (in the example illustrated in FIG. 8A to FIG. 8C, the Y-axis direction).

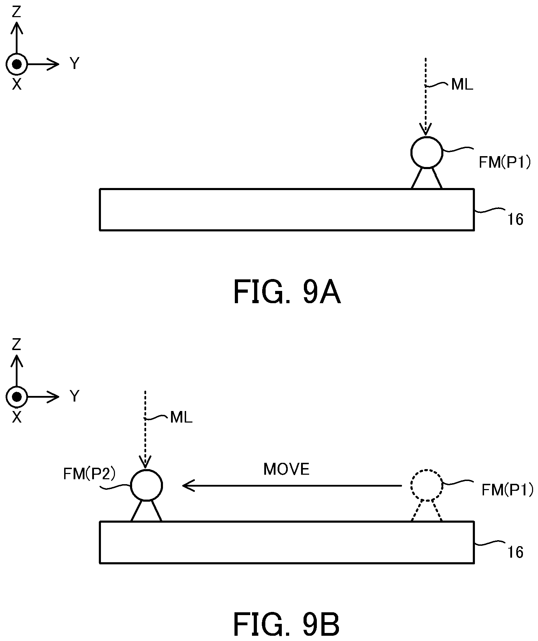

As illustrated in FIG. 9A to FIG. 9B, the processing unit 1 may measure the fiducial member FM located at a position P1 and measure the fiducial member FM that has moved from the position P1 to a position P2 different from the position P1 under the control of the control unit 2. In this case, the control unit 2 may acquire, from the processing unit 1, the detected result of the returning light RL that is from the fiducial member FM and that is generated by irradiating the fiducial member FM located at the position P1 with the measurement light ML. Furthermore, the control unit 2 may acquire, from the processing unit 1, the detected result of the returning light RL that is from the fiducial member FM and that is generated by irradiating the fiducial member FM located at the position P2 with the measurement light ML. The control unit 2 may calculate the movement error based on the detected result of the returning light RL from the fiducial member FM located at the position P1 and the detected result of the returning light RL from the fiducial member FM located at the position P2.

As one example, since the fiducial member FM is placed on the stage 16, the fiducial member FM moves as the stage 16 moves. Therefore, the processing unit 1 may firstly measure the fiducial member FM located at the position P1 by irradiating the fiducial member FM located at the position P1 with the measurement light ML, as illustrated in FIG. 9A. Then, the processing unit 1 may move the stage 16 so that the fiducial member FM located at the position P1 moves from the position P1 to the position P2 different from the position P1, as illustrated in FIG. 9B. In the present example embodiment, since the stage 16 is movable along a rotational direction around the rotational axis AX along the A-axis and a rotational direction around the rotational axis CX along the C-axis, the position P1 may be different from the position P2 along at least one of the rotational direction around the A-axis and the rotational direction around the C-axis. Then, the processing unit 1 may measure the fiducial member FM located at the position P2 by irradiating the fiducial member FM located at the position P2 with the measurement light ML, as illustrated in FIG. 9B. In this case, the processing unit 1 may measure the fiducial member FM located at the position P2 by irradiating the fiducial member FM that stops at the position P2 with the measurement light ML. Namely, the processing unit 1 may perform the measurement of the fiducial member FM, the movement of the fiducial member FM, and the stopping of the fiducial member FM, alternately. However, the processing unit 1 may measure the fiducial member FM that is moving at the position P2.

Incidentally, the processing unit 1 may further measure the fiducial member FM that has moved from the position P2 to a position different from the positions P1 and P2. Namely, the processing unit 1 may perform the measurement of the fiducial member FM at three or more positions. For example, the processing unit 1 may rotate the stage 16 by 360 degrees around the rotational axis CX. In that process, the processing unit 1 may perform the measurement of the fiducial member FM at three or more positions on a circumference indicating a movement trajectory of the fiducial member FM. As one example, the processing unit 1 may measure the fiducial member FM each time the stage 16 rotates by a predetermined angle around the rotational axis CX. For example, the processing unit 1 may rotate the stage 16 by 180 degrees around the rotational axis AX. For example, the processing unit 1 may rotate the stage 16 around the rotational axis AX in the range of -90 degrees to +90 degrees. Note that the rotational angle of the stage 16 around the rotational axis AX may be defined so that the rotational angle is zero degrees when the placement surface 161 of the stage 16 is parallel to the XY plane (namely, is orthogonal to the Z-axis). In that process, the processing unit 1 may measure the fiducial member FM at three or more positions on a half of the circumference indicating the movement trajectory of the fiducial member FM. As one example, the processing unit 1 may measure the fiducial member FM each time the stage 16 rotates by a predetermined angle around the rotational axis AX.

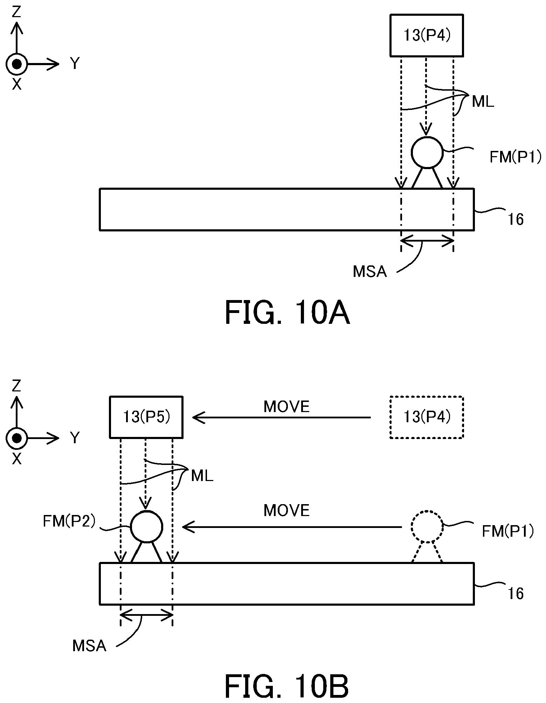

The processing unit 1 may move the processing head 13 so that the processing head 13 follows the moving fiducial member FM. Specifically, the processing unit 1 may move the processing head 13 so that the moving fiducial member FM is included in the measurement shot area MSA determined based on the processing head 13. Specifically, as illustrated in FIG. 10A, the processing unit 1 may irradiate the fiducial member FM located at the position P1 with the measurement light ML from the processing head 13 (especially, the objective optical system 134) located at a position P4. The position P4 is a position that satisfies such a condition that the fiducial member FM located at the position P1 is included (namely, position P1 is included) in the measurement shot area MSA of the processing head 13 located at the position P4. Furthermore, the processing unit 1 may optically receive the returning light RL from the fiducial member FM located at the position P1 by using the processing head 13 (especially, the objective optical system 134) located at the position P4. Then, as illustrated in FIG. 10B, the processing unit 1 may move the stage 16 so that the fiducial member FM located at the position P1 moves from the position P1 to the position P2. Furthermore, as illustrated in FIG. 10B, the processing unit 1 may move the processing head 13 so that the processing head 13 located at position P4 moves from the position P4 to a position P5 different from the position P4. The position P5 is a position that satisfies such a condition that the fiducial member FM located at the position P2 is included (namely, position P2 is included) in the measurement shot area MSA of the processing head 13 located at the position P5. Then, as illustrated in FIG. 10B, the processing unit 1 may irradiate the fiducial member FM located at the position P2 with the measurement light ML from the processing head 13 (especially, the objective optical system 134) located at the position P5. Furthermore, the processing unit 1 may optically receive the returning light RL from the fiducial member FM located at the position P2 by using the processing head 13 (especially, the objective optical system 134) located at the position P5. In this case, the processing unit 1 may measure the fiducial member FM located at the position P2 by using the processing head 13 that stops at the position P5. Namely, the processing unit 1 may perform the measurement of the fiducial member FM, the movement of the fiducial member FM and the processing head 13, and the stopping of the fiducial member FM and the processing head 13, alternately, However, the processing unit 1 may measure the fiducial member FM located at the position P2 by using the processing head 13 that is moving at the position P5.

As one example, in a case where the stage 16 rotates around the rotational axis CX, the fiducial member FM usually moves in a plane along the XY plane, as illustrated in FIG. 11. Therefore, in a case where the fiducial member FM moves in the plane along the XY plane due to the rotation of the stage 16 around the rotational axis CX, the processing unit 1 may move the processing head 13 along at least one of the X-axis direction and the Y-axis direction so that the processing head 13 follows the moving fiducial member FM as illustrated in FIG. 11. However, in a case where the fiducial member FM moves in the plane along the XY plane due to the rotation of the stage 16 around the rotational axis CX, the processing unit 1 may move the processing head 13 along the Z-axis direction in addition to or instead of at least one of the X-axis direction and the Y-axis direction.

As another example, in a case where the stage 16 rotates around the rotational axis AX, the fiducial member FM usually moves in a plane along the YZ plane, as illustrated in FIG. 12. Therefore, in a case where the fiducial member FM moves in the plane along the YZ plane due to the rotation of the stage 16 around the rotational axis AX, the processing unit 1 may move the processing head 13 along at least one of the Y-axis direction and the Z-axis direction so that the processing head 13 follows the moving fiducial member FM, as illustrated in FIG. 12. However, in a case where the fiducial member FM moves in the plane along the YZ plane due to the rotation of the stage 16 around the rotational axis AX, the processing unit 1 may move the processing head 13 along the X-axis direction in addition to or instead of at least one of the Y-axis direction and the Z-axis direction.

In examples illustrated in FIG. 11 and FIG. 12, the processing unit 1 may be regarded to perform a simultaneous three-axis control that controls a movement along three axes including two movement axes in a linear direction and one rotational axis in a rotational direction. In this case, an operation illustrated in FIG. 11 and FIG. 12 may be an operation specified by ISO 10791-6.2014 that is an International Standard for calculating the movement error (the motion error or a motion accuracy) of the machine tool. However, the operation illustrated in FIG. 11 and FIG. 12 is different from the operation specified by ISO 10791-6.2014 in that it uses a measurement apparatus using the measurement light ML (namely, a measurement apparatus including the measurement optical system 132) instead of a measurement apparatus including a ball bar or a displacement meter.

Incidentally, although the stage 16 does not rotate around the rotational axis along the B-axis in the present example embodiment, the fiducial member FM usually move in a plane along the ZX plane if the stage 16 is rotatable around the rotational axis along the B-axis. Therefore, in a case where the fiducial member FM moves in the plane along the ZX plane due to the rotation of the stage 16 around the rotational axis along the B-axis, the processing unit 1 may move the processing head 13 along at least one of the Z-axis direction and the X-axis direction so that the processing head 13 follows the moving fiducial member FM. However, in a case where the fiducial member FM moves in the plane along the ZX plane due to the rotation of the stage 16 around the rotational axis along the B-axis, the processing unit 1 may move the processing head 13 along the Y-axis direction in addition to or instead of at least one of the Z-axis direction and the X-axis direction.

The processing unit 1 may move the processing head 13 so that a positional relationship between the moving fiducial member FM and the processing head 13 that moves to follow the fiducial member FM does not change. In other words, the processing unit 1 may move the processing head 13 so that the positional relationship between the moving fiducial member FM and the processing head 13 that moves to follow the fiducial member FM is maintained. For example, in a case where the fiducial member FM moves due to the rotation of the stage 16 around the rotational axis CX, the processing unit 1 may move the processing head 13 so that the positional relationship between the fiducial member FM that rotates around the rotational axis CX and the processing head 13 does not change. Typically, the processing unit 1 may move the processing head 13 along at least one of the X-axis direction and the Y-axis direction so that a movement trajectory of the processing head 13 in the plane along the XY plane is an arc around the rotational axis CX. For example, in a case where the fiducial member FM moves due to the rotation of the stage 16 around the rotational axis AX, the processing unit 1 may move the processing head 13 so that the positional relationship between the fiducial member FM that rotates around the rotational axis AX and the processing head 13 does not change. Typically, the processing unit 1 may move the processing head 13 along at least one of the Y-axis direction and the Z-axis direction so that a movement trajectory of the processing head 13 in the plane along the YZ plane is an arc around the rotational axis AX. In a case, the control unit 2 may move the processing head 13 by performing a circular interpolation control.

Note that a state in which the positional relationship between the fiducial member FM and the processing head 13 does not change may mean a state in which the positional relationship between the reference position of the fiducial member FM and the processing head 13 does not change. The state in which the positional relationship between the fiducial member FM and the processing head 13 does not change may mean a state in which the relationship between a three-dimensional coordinate of the fiducial member FM and a three-dimensional coordinate of the processing head 13 in a three-dimensional space does not change. In a case where the positional relationship between the fiducial member FM and the processing head 13 does not change, an orientation of the fiducial member FM relative to the processing head 13 may change due to the rotation of the stage 16. An orientation of the processing head 13 relative to the fiducial member FM may change due to the rotation of the stage 16. Alternatively, the orientation of the fiducial member FM relative to the processing head 13 may not change regardless of the rotation of the stage 16. The orientation of the processing head 13 relative to the fiducial member FM may not change due to rotation of the stage 16.

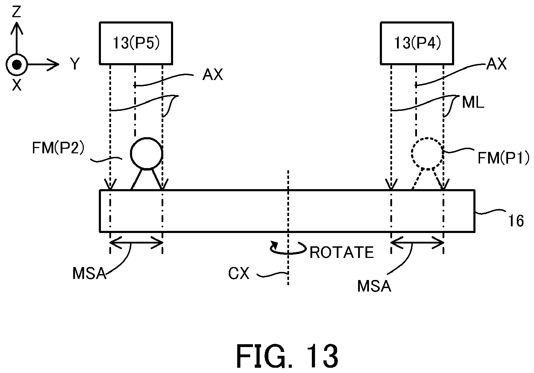

Incidentally, in a case where the processing head 13 moves to follow the fiducial member FM, the processing head 13 may not necessarily be located directly above the fiducial member FM, as illustrated in FIG. 13. Specifically, the processing head 13 may not necessarily be located at a position at which the optical axis EX of the fθ lens 1342 overlaps with the fiducial member FM. In short, the processing head 13 may be located at a position at which the fiducial member FM is included in the measurement shot area MSA. Similarly, in a case where the processing head 13 does not move, the processing head 13 may not necessarily be located directly above the fiducial member FM. In this case, the moving distance of the processing head 13 in one movement direction may be larger or may be smaller than the moving distance of the fiducial member FM in the same one movement direction. In an example illustrated in FIG. 13, the moving distance of the fiducial member FM in the Y-axis direction is larger than the moving distance of the fiducial member FM in the Y-axis direction due to movement of the stage 16 around the processing head 13 rotational axis CX.

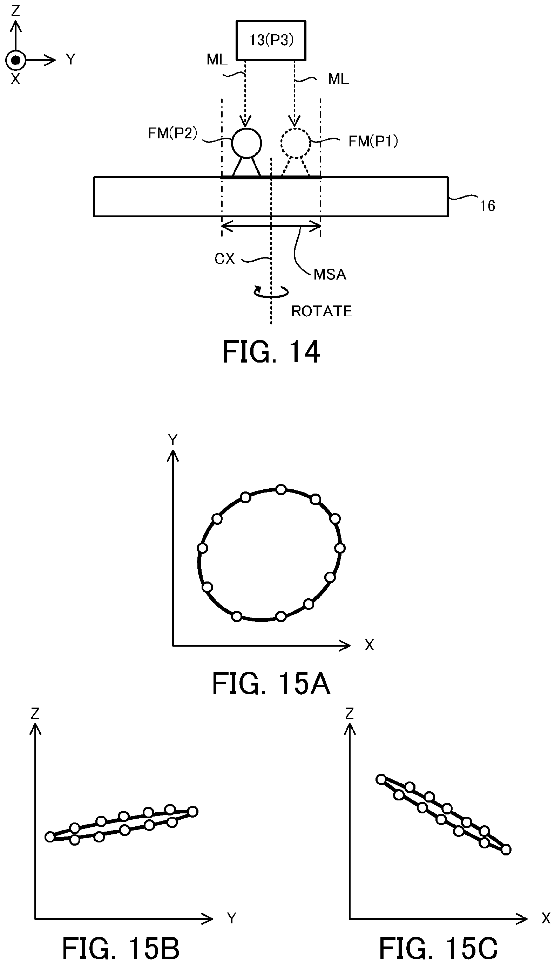

However, the processing unit 1 may not move the processing head 13 so that the processing head 13 follows the moving fiducial member FM. For example, the processing unit 1 may not move the processing head 13 so that the moving fiducial member FM is included in the measurement shot area MSA even in a case where the processing head 13 does not move. In this case, as illustrated in FIG. 14, the processing unit 1 may irradiate the fiducial member FM located at the position P1 with the measurement light ML from the processing head 13 (especially, the objective optical system 134) located at a position P3. Furthermore, the processing unit 1 may optically receive the returning light RL from the fiducial member FM located at the position P1 by using the processing head 13 (especially, the objective optical system 134) located at the position P3. Then, the processing unit 1 may move the stage 16 so that the fiducial member FM located at the position P1 moves from the position P1 to the position P2. Then, the processing unit 1 may irradiate the fiducial member FM located at the position P2 with the measurement light ML from the processing head 13 (especially the objective optics 134) located at the position P3. Furthermore, the processing unit 1 may optically receive the returning light RL from the fiducial member FM located at the position P2 by using the processing head 13 (especially, the objective optical system 134) located at the position P3. Therefore, the position P3 is a position that satisfies such a condition that both of the fiducial member FM located at the position P1 and the fiducial member FM located at the position P2 are included (namely, both of the position P1 and the position P2 are included) in the measurement shot area MSA of the processing head 13 located at the position P3.

After the measurement of the fiducial member FM is completed, the control unit 2 may calculate the movement error that occurs in the movement of at least one of the processing head 13 and stage 16 based on the measured result of the fiducial member FM. Specifically, the control unit 2 may calculate the position (especially, the reference position) of the fiducial member FM based on the measured result of the fiducial member FM. Namely, the control unit 2 may generate the measurement data (namely, position information) indicating the position of the fiducial member FM. Especially, since the fiducial member FM moves, the control unit 2 may calculate the movement trajectory of the fiducial member FM (especially, a movement trajectory of the reference position). Namely, the control unit 2 may generate the measurement data indicating the movement trajectory of the fiducial member FM. Note that one example of the measurement data indicating the calculated position (especially, the movement trajectory) of the fiducial member FM is illustrated in FIG. 15A to FIG. 15C. FIG. 15A to FIG. 15C illustrates the position (the three-dimensional position) of the fiducial member FM measured each time the stage 16 is rotated by 30 degrees around the rotational axis CX. Especially, FIG. 15A illustrates the position (the three-dimensional position) of the fiducial member FM projected on the XY plane. FIG. 15B illustrates the position (the three-dimensional position) of the fiducial member FM projected on the YZ plane. FIG. 15C illustrates the position (the three-dimensional position) of the fiducial member FM projected on the ZX plane. Then, the control unit 2 may calculate the movement error based on the calculated position of the fiducial member FM (namely, the measurement data that is the position information).

Specifically, a shape of the movement trajectory of the fiducial member FM in a case where the movement error does not occur is different from a shape of the movement trajectory of the fiducial member FM in a case where the movement error occurs. For example, in a case where the stage 16 is rotated around the rotational axis CX, the shape of the movement trajectory of the fiducial member FM in the XY plane in a case where the movement error does not occur is a perfect circle, and the shape of the movement trajectory of the fiducial member FM in the XY plane in a case where the movement error occurs is different from the perfect circle. For example, in a case where the stage 16 is rotated around the rotational axis CX, the shape of the movement trajectory of the fiducial member FM in the YZ plane is a linear shape parallel to the Y-axis in a case where the movement error does not occur, and the shape of the movement trajectory of the fiducial member FM in the YZ plane is a shape that is different from the linear shape parallel to the Y-axis in a case where the movement error occurs. For example, in a case where the stage 16 is rotated around the rotational axis CX, the shape of the movement trajectory of the fiducial member FM in the ZX plane is a linear shape parallel to the X-axis in a case where the movement error does not occur, and the shape of the movement trajectory of the fiducial member FM in the ZX plane is a shape that is different from the linear shape parallel to the X-axis in a case where the movement error occurs. FIG. 15A to FIG. 15C illustrate a calculated result of the position of the fiducial member FM in a case where the movement error occurs. Therefore, the control unit 2 may calculate the movement error based on the position of the fiducial member FM. As one example, in a case where the processing head 13 does not move in measuring the fiducial member FM (namely, the processing head 13 is fixed without following the fiducial member FM), the position of the fiducial member FM illustrated in FIG. 15B and FIG. 15C finds that there is a possibility that such a movement error that the rotational axis CX is inclined with respect to the Z-axis occurs. Namely, the control unit 2 may calculate the movement error of the stage 16 from the position of the fiducial member FM illustrated in FIG. 15B and FIG. 15C. As another example, in a case where the processing head 13 moves (namely, follows the fiducial member FM) in measuring the fiducial member FM under the situation where the movement error of the processing head 13 is negligibly small (namely, the movement accuracy of the processing head 13 is very high), the position of the fiducial member FM illustrated in FIG. 15B and FIG. 15C finds that that there is a possibility that such a movement error that the rotational axis CX is inclined with respect to the Z-axis. Namely, the control unit 2 may calculate the movement error of the stage 16 from the position of the fiducial member FM illustrated in FIG. 15B and FIG. 15C. Conversely, in a case where the processing head 13 moves (namely, follows the fiducial member FM) in measuring the fiducial member FM under a situation where the movement error of the stage 16 is negligibly small (namely, the rotation accuracy of the stage 16 is very high), the control unit 2 may calculate the movement error of the processing head 13 from the position of the fiducial member FM illustrated in FIG. 15B and FIG. 15C. As another example, in a case where the processing head 13 moves (namely, follows the fiducial member FM) in measuring the fiducial member FM under a situation where the movement error of the processing head 13 is known information to the control unit 2, the position of the fiducial member FM illustrated in FIG. 15B and FIG. 15C and the information related to the movement error of the processing head 13 finds that there is a possibility that the rotational axis CX is inclined to the Z-axis.

The movement error occurring in the movement of the processing head 13 may include an error corresponding to a difference (namely, a deviation) between an actual moving distance of the processing head 13 in one movement direction and a target value of the moving distance of the processing head 13 in the one movement direction in a case where the head driving system 14 moves the processing head 13 along the one movement direction. The movement error occurring in the movement of the processing head 13 may include an error corresponding to an actual moving distance of the processing head 13 in another movement direction different from one movement direction in a case where the head driving system 14 moves the processing head 13 along the one movement direction. For example, in a case where the head driving system 14 moves the processing head 13 so that it moves along only the one movement direction, the processing head 13 does not move along the another movement direction ideally. Therefore, in a case where the processing head 13 that should move in the one movement direction actually moves along the another movement direction, the movement error of the processing head 13 in the another movement direction occurs.

As described above, the head driving system 14 moves the processing head 13 along the X-axis direction. In this case, the movement error occurring in the movement of the processing head 13 may include a movement error Ex occurring in the movement of the processing head 13 in a case where the processing head 13 moves (linearly moves) along the X-axis direction. The movement error Ex may include at least one of a movement error Exx in the X-axis direction, a movement error E_{YX} in the Y-axis direction, a movement error Ezx in the Z-axis direction, a movement error E_{AX} in the rotational direction o around the A-axis, movement error E_{BX} in the rotational direction around the B-axis, and a movement error E_{CX} in the rotational direction around the C-axis. The movement error Exx may be a difference between an actual moving distance of the processing head 13 in the X-axis direction and a target value of the moving distance of the processing head 13 in the X-axis direction in a case where the head driving system 14 moves the processing head 13 along the X-axis direction. The movement error E_{YX} may be an actual moving distance of the processing head 13 in the Y-axis direction in a case where the head driving system 14 moves the processing head 13 along the X-axis direction. The movement error Ezx may be an actual moving distance of the processing head 13 in the Z-axis direction in a case where the head driving system 14 moves the processing head 13 along the X-axis direction. The movement error E_{AX} may be an actual moving distance (rotational amount) of the processing head 13 in the rotational direction around the A-axis in a case where the head driving system 14 moves the processing head 13 along the X-axis direction. The movement error E_{BX} may be an actual moving distance (rotational amount) of the processing head 13 in the rotational direction around the B-axis in a case where the head driving system 14 moves the processing head 13 along the X-axis direction. The movement error Ecx may be an actual moving distance (rotational amount) of the processing head 13 in the rotational direction around the C-axis in a case where the head driving system 14 moves the processing head 13 along the X-axis direction.

As described above, the head driving system 14 moves the processing head 13 along the Y-axis direction. In this case, the movement error occurring in the movement of the processing head 13 may include a movement error E_{Y} occurring in the movement of the processing head 13 in a case where the processing head 13 moves (linearly moves) along the Y-axis direction. The movement error E_{Y} may include at least one of a movement error E_{XY} in the X-axis direction, a movement error E_{YY} in the Y-axis direction, a movement error E_{ZY} in the Z-axis direction, a movement error E_{AY} in the rotational direction o around the A-axis, movement error E_{BY} in the rotational direction around the B-axis, and a movement error E_{CY} in the rotational direction around the C-axis. The movement error E_{XY} may be an actual moving distance of the processing head 13 in the X-axis direction in a case where the head driving system 14 moves the processing head 13 along the Y-axis direction. The movement error E_{YY} may be a difference between an actual moving distance of the processing head 13 in the Y-axis direction and a target value of the moving distance of the processing head 13 in the Y-axis direction in a case where the head driving system 14 moves the processing head 13 along the Y-axis direction. The movement error E_{ZY} may be an actual moving distance of the processing head 13 in the Z-axis direction in a case where the head driving system 14 moves the processing head 13 along the Y-axis direction. The movement error E_{AY} may be an actual moving distance (rotational amount) of the processing head 13 in the rotational direction around the A-axis in a case where the head driving system 14 moves the processing head 13 along the Y-axis direction. The movement error E_{BY} may be an actual moving distance (rotational amount) of the processing head 13 in the rotational direction around the B-axis in a case where the head driving system 14 moves the processing head 13 along the Y-axis direction. The movement error E_{CY} may be an actual moving distance (rotational amount) of the processing head 13 in the rotational direction around the C-axis in a case where the head driving system 14 moves the processing head 13 along the Y-axis direction.

As described above, the head driving system 14 moves the processing head 13 along the Z-axis direction. In this case, the movement error occurring in the movement of the processing head 13 may include a movement error Ez occurring in the movement of the processing head 13 in a case where the processing head 13 moves (linearly moves) along the Z-axis direction. The movement error Ez may include at least one of a movement error Exz in the X-axis direction, a movement error E_{YZ} in the Y-axis direction, a movement error Ezz in the Z-axis direction, a movement error E_{AZ} in the rotational direction o around the A-axis, movement error Eaz in the rotational direction around the B-axis, and a movement error E_{CZ} in the rotational direction around the C-axis. The movement error Exz may be an actual moving distance of the processing head 13 in the X-axis direction in a case where the head driving system 14 moves the processing head 13 along the Z-axis direction. The movement error E_{YZ} may be an actual moving distance of the processing head 13 in the Y-axis direction in a case where the head driving system 14 moves the processing head 13 along the Z-axis direction. The movement error Ezz may be a difference between an actual moving distance of the processing head 13 in the Z-axis direction and a target value of the moving distance of the processing head 13 in the Z-axis direction in a case where the head driving system 14 moves the processing head 13 along the Z-axis direction. The movement error E_{AZ} may be an actual moving distance (rotational amount) of the processing head 13 in the rotational direction around the A-axis in a case where the head driving system 14 moves the processing head 13 along the Z-axis direction. The movement error Eaz may be an actual moving distance (rotational amount) of the processing head 13 in the rotational direction around the B-axis in a case where the head driving system 14 moves the processing head 13 along the Z-axis direction. The movement error E_{CZ} may be an actual moving distance (rotational amount) of the processing head 13 in the rotational direction around the C-axis in a case where the head driving system 14 moves the processing head 13 along the Z-axis direction.

The movement error occurring in the movement of the stage 16 may include an error corresponding to a difference (namely, a deviation) between an actual moving distance of the stage 16 in one movement direction and a target value of the moving distance of the stage 16 in the one movement direction in a case where the stage driving system 17 moves the stage 16 along the one movement direction. The movement error occurring in the movement of the stage 16 may include an error corresponding to an actual moving distance of the stage 16 in another movement direction different from one movement direction in a case where the stage driving system 17 moves the stage 16 along the one movement direction. For example, in a case where the stage driving system 17 moves the stage 16 so that it moves along only the one movement direction, the stage 16 does not move along the another movement direction ideally. Therefore, in a case where the stage 16 that should move in the one movement direction actually moves along the another movement direction, the movement error of the stage 16 in the another movement direction occurs.

As described above, the stage driving system 17 moves the stage 16 along the rotational direction around the A-axis. In this case, the movement error occurring in the movement of the stage 16 may include a movement error E_{A} occurring in the movement of the stage 16 in a case where the stage 16 moves (rotationally moves) along the rotational direction around the A-axis. The movement error E_{A} may include at least one of a movement error E_{XA} in the X-axis direction, a movement error E_{YA} in the Y-axis direction, a movement error E_{ZA} in the Z-axis direction, a movement error E_{AA} in the rotational direction o around the A-axis, movement error E_{BA} in the rotational direction around the B-axis, and a movement error E_{CA} in the rotational direction around the C-axis. The movement error E_{XA} may be an actual moving distance of the stage 16 in the X-axis direction in a case where the stage driving system 17 moves the stage 16 along the rotational direction around the A-axis. The movement error E_{YA} may be an actual moving distance of the stage 16 in the Y-axis direction in a case where the stage driving system 17 moves the stage 16 along the rotational direction around the A-axis. The movement error E_{ZA} may be an actual moving distance of the stage 16 in the Z-axis direction in a case where the stage driving system 17 moves the stage 16 along the rotational direction around the A-axis. The movement error E_{AA} may be a difference between an actual moving distance of the stage 16 in the rotational direction around the A-axis and a target value of the moving distance of the stage 16 in the rotational direction around the A-axis in a case where the stage driving system 17 moves the stage 16 along the rotational direction around the A-axis. The movement error E_{BA} may be an actual moving distance (rotational amount) of the stage 16 in the rotational direction around the B-axis in a case where the stage driving system 17 moves the stage 16 along the rotational direction around the A-axis. The movement error E_{CA} may be an actual moving distance (rotational amount) of the stage 16 in the rotational direction around the C-axis in a case where the stage driving system 17 moves the stage 16 along the rotational direction around the A-axis.

As described above, the stage driving system 17 moves the stage 16 along the rotational direction around the C-axis. In this case, the movement error occurring in the movement of the stage 16 may include a movement error Ec occurring in the movement of the stage 16 in a case where the stage 16 moves (rotationally moves) along the rotational direction around the C-axis. The movement error E_{C} may include at least one of a movement error Exc in the X-axis direction, a movement error E_{YC} in the Y-axis direction, a movement error Ezc in the Z-axis direction, a movement error E_{AC} in the rotational direction o around the A-axis, movement error Eac in the rotational direction around the B-axis, and a movement error E_{CC} in the rotational direction around the C-axis. The movement error Exc may be an actual moving distance of the stage 16 in the X-axis direction in a case where the stage driving system 17 moves the stage 16 along the rotational direction around the C-axis. The movement error E_{YC} may be an actual moving distance of the stage 16 in the Y-axis direction in a case where the stage driving system 17 moves the stage 16 along the rotational direction around the C-axis. The movement error Ezc may be an actual moving distance of the stage 16 in the Z-axis direction in a case where the stage driving system 17 moves the stage 16 along the rotational direction around the C-axis. The movement error E_{AC} may be an actual moving distance (rotational amount) of the stage 16 in the rotational direction around the A-axis in a case where the stage driving system 17 moves the stage 16 along the rotational direction around the C-axis. The movement error E_{BC} may be an actual moving distance (rotational amount) of the stage 16 in the rotational direction around the B-axis in a case where the stage driving system 17 moves the stage 16 along the rotational direction around the C-axis. The movement error E_{CC} may be a difference between an actual moving distance of the stage 16 in the rotational direction around the C-axis and a target value of the moving distance of the stage 16 in the rotational direction around the C-axis in a case where the stage driving system 17 moves the stage 16 along the rotational direction around the C-axis.

In a case where the stage driving system 17 rotates the stage 16 along the rotational direction around the A-axis, the processing unit 1 may measure the fiducial member FM placed on the stage 16 rotating along the rotational direction around the A-axis. In this case, the control unit 2 may calculate a coordinate of a center of the rotation of the stage 16 around the A-axis (namely, a position of the A-axis) based on the measured result of the fiducial member FM. Similarly, in a case where the stage driving system 17 rotates the stage 16 along the rotational direction around the C-axis, the processing unit 1 may measure the fiducial member FM placed on the stage 16 rotating along the rotational direction around the C-axis. In this case, the control unit 2 may calculate a coordinate of a center of the rotation of the stage 16 around the C-axis (namely, a position of the C-axis) based on the measured result of the fiducial member FM. In this manner, the control unit 2 may calculate the coordinate of the center of the rotation of the stage 16 around one rotational axis (namely, the position of the one rotational axis) based on the measured result of the fiducial member FM placed on the stage 16 rotating along the rotational direction around the one rotational axis.

The movement error may include an error related to a relationship between the movement axis of the processing head 13 and the movement axis (the rotational axis) of the stage 16. For example, the movement error may include an error related to an orthogonality (a perpendicularity) between the movement axis of the processing head 13 and the rotational axis of the stage 16. For example, the movement error may include an error related to a parallelism between the movement axis the processing head 13 and the rotational axis the stage 16.

The movement error may include an error related to the movement axis of the processing head 13. For example, the movement error may include an error related to an orthogonality (a perpendicularity) between one movement axis of the processing head 13 and another movement axis.

The movement error may include an error related to the movement axis (the rotational axis) of the stage 16. For example, the movement error may include an error related to an orthogonality (a perpendicularity) between one rotational axis of the stage 16 and another rotational axis.

Note that an operation for calculating the movement error based on the position of the fiducial member FM itself may be the same as an operation for calculating the movement error (namely, the motion error) based on the position of the ball bar or the fiducial sphere as specified in ISO 10791-6.2014. Namely, the operation for calculating the movement error based on the position of the fiducial member FM itself may be identical to a measurement using the ball bar or a so-called R-test measurement.

As one example, the control unit 2 may calculate the movement error included in the position of the fiducial member FM by analyzing the position (for example, the movement trajectory) of the fiducial member FM. Namely, the control unit 2 may determine a factor that causes the deviation of the position of the fiducial member FM from the ideal position by analyzing the position (for example, the movement trajectory) of the fiducial member FM, and calculate the movement error associated with the factor.

As another example, in a case where the movement accuracy of the processing head 13 is higher than the movement accuracy of the stage 16, it may be regarded that the position of the fiducial member FM is more affected by the movement error occurring in the movement of the stage 16 than by the movement error occurring the movement of the processing head 13. In this case, the control unit 2 may calculate the movement error occurring in the movement of the stage 16 based on the position of the fiducial member FM. For example, the control unit 2 may calculate the movement error occurring in the movement of the stage 16 along the rotational direction around the C-axis based on the position of the fiducial member FM measured while rotating the stage 16 around the rotational axis CX. For example, the control unit 2 may calculate the movement error occurring in the movement of the stage 16 along the rotational direction around the A-axis based on the position of the fiducial member FM measured while rotating the stage 16 around the rotational axis AX. As one example, the measurement data illustrated in FIG. 15B and FIG. 15C indicate that the rotational axis CX of the stage 16 is not orthogonal to the movement axis (the X-axis or the Y-axis) of the processing head 13. Therefore, the control unit 2 may calculate the error related to the orthogonality between the rotational axis CX of the stage 16 and the movement axis (the X-axis or the Y-axis) of the processing head 13 based on the measurement data illustrated in FIG. 15B and FIG. 15C.

As another example, in a case where the processing head 13 does not move in measuring the fiducial member FM, the position of the fiducial member FM is not affected by the movement error occurring in the movement of the processing head 13, but is affected by the movement error occurring in the movement of the stage 16. In a case where this is the case, the control unit 2 may calculate the movement error occurring in the movement of the stage 16 based on the position of the fiducial member FM. For example, the control unit 2 may calculate the movement error occurring in the movement of the stage 16 along the rotational direction around the C-axis based on the position of the fiducial member FM measured while rotating the stage 16 around the rotational axis CX. For example, the control unit 2 may calculate the movement error occurring in the movement of the stage 16 along the rotational direction around the A-axis based on the position of the fiducial member FM measured while rotating the stage 16 around the rotational axis AX.

As another example, in a case where the movement accuracy of the stage 16 is higher than the movement accuracy of the processing head 13, it may be regarded that the position of the fiducial member FM is more affected by the movement error occurring in the movement of the processing head 13 than by the movement error occurring in the movement of the stage 16. In this case, the control unit 2 may calculate the movement error occurring in the movement of the processing head 13 based on the position of the fiducial member FM. For example, the control unit 2 may calculate the movement error occurring in the movement of the processing head 13 along the X-axis direction based on the position of the fiducial member FM measured while moving the processing head 13 along the X-axis direction. For example, the control unit 2 may calculate the movement error occurring in the movement of the processing head 13 along the Y-axis direction based on the position of the fiducial member FM measured while moving the processing head 13 along the Y-axis direction. For example, the control unit 2 may calculate the movement error occurring in the movement of the processing head 13 along the Z-axis direction based on the position of the fiducial member FM measured while moving the processing head 13 along the Z-axis direction.

After the movement error is calculated, the control unit 2 may control the processing unit 1 based on the movement error. Specifically, the control unit 2 may control the processing unit 1 so that the workpiece W is processed and the measurement target object M is measured in the same manner as with a case where the movement error does not occur, even in a case where the movement error occurs. For example, the control unit 2 may control the head driving system 14 that moves the processing head 13 so that the processing head 13 moves in the same manner as with a case where the movement error does not occur, even in a case where the movement error occurs. Namely, the control unit 2 may move the processing head 13 so that the movement error is cancelled. For example, the control unit 2 may control the stage driving system 17 that moves the stage 16 so that the stage 16 moves in the same manner as with a case where the movement error does not occur, even in a case where the movement error occurs. Namely, the control unit 2 may move the stage 16 so that the movement error is canceled. Incidentally, since the movement error is calculated from the information related to the position of the fiducial member FM, the control unit 2 may be regarded to control the movement of at least one of the processing head 13 and the stage 16 (namely, controls at least one of the head driving system 14 and the stage driving system 17) based on the information related to the position of the fiducial member FM.

The control unit 2 may store movement error information related to the calculated movement error in the storage apparatus of the control unit 2. The control unit 2 may store the movement error information related to the calculated movement error in the storage apparatus disposed outside the control unit 2. In this case, the control unit 2 may control the processing unit 1 based on the movement error information stored in the storage apparatus.

The control unit 2 may store, in the storage apparatus, the movement error information together with temperature information related to a temperature of the processing unit 1 in a measurement period during which the fiducial member FM is measured in order to calculate the movement error. The temperature of the processing unit 1 may include a temperature of an environment in which the processing unit 1 is disposed (for example, a temperature of the inner space SP in which the processing unit 1 is contained). The temperature of the processing unit 1 may include a temperature of a member of the processing unit 1 (for example, at least one of the processing head 13, the head driving system 14, the stage 16, and the stage driving system 17). The temperature information may include information related to a statistical value (for example, at least one of a maximum value, a minimum value, an average value, and a median value) of the temperature of the processing unit 1 in the measurement period. The control unit 2 may store, in the storage apparatus, a plurality of movement error information, which correspond to a plurality of environments between which the temperature of the processing unit 1 is different, respectively, together with the temperature information. In this case, the control unit 2 may control the processing unit 1 based on one movement error information corresponding to the temperature closest to the current temperature of the processing unit 1.

The processing system SYS may perform the movement error calculation operation at regular intervals. For example, the processing system SYS may perform the movement error calculation operation every n1 (note that n1 is an integer that is larger than or equal to 1) days. For example, the processing system SYS may perform the movement error calculation operation every n2 (note that n2 is an integer that is larger than or equal to 1) weeks. For example, the processing system SYS may perform the movement error calculation operation every n3 (note that n3 is an integer that is larger than or equal to 1) months. For example, the processing system SYS may perform the movement error calculation operation every n4 (note that n4 is an integer that is larger than or equal to 1) years. For example, the processing system SYS may perform the movement error calculation operation every n5(note that n5 is an integer that is larger than or equal to 1) hours.

As described above, in the present example embodiment, the control unit 2 is configured to calculate the movement error that occurs in the movement of at least one of the processing head 13 and stage 16. Therefore, the processing unit 1 can process the workpiece W and measure the measurement target object M while reducing an influence of the movement error under the control of the control unit 2. Especially in the present example embodiment, a dedicated measurement apparatus for measuring the fiducial member FM (for example, a displacement gauge as specified in ISO 10791-6.2014) may not be attached to measure, because the fiducial member FM is measured by using the measurement light ML emitted from the processing head 13. Therefore, the control unit 2 can calculate the position of the fiducial member FM with relatively high accuracy without being affected by a mounting error caused by the attachment of the measurement apparatus. As a result, the control unit 2 can calculate the movement error with relatively high accuracy. Therefore, the processing unit 1 can process the workpiece W and measure the measurement target object M while reducing the influence of the movement error more appropriately under the control of the control unit 2.

### (2-3) Deformation Error Calculation Operation

Next, the deformation error calculation operation will be described. As described above, the deformation error calculation operation is an operation for calculating the movement error occurring in the movement of at least one of the processing head 13 and stage 16 due to the deformation of the member of the processing unit 1.

Specifically, there is a possibility that a member of the head driving system 14 that moves the processing head 13 (in the below-described description, it is referred to as a "head driving member") is deformed due to a change of the temperature of the processing unit 1. At least one of an X guide member (in other words, an X rail member) extending along the X-axis direction for moving the processing head 13 along the X-axis direction, a Y guide member (in other words, a Y rail member) extending along the Y -axis direction for moving the processing head 13 along the Y -axis direction, and a Z guide member (in other words, a Z rail member) extending along the Z-axis direction for moving the processing head 13 along the Z-axis direction is one example of the head driving member. For example, there is a possibility that the head driving member expands due to an increase of the temperature. For example, there is a possibility that the head driving member contracts due to a decrease of the temperature. Namely, there is a possibility that a thermal expansion or a thermal contraction of the head driving member occurs. In this case, there is a possibility that the movement error occurs in the movement of the processing head 13 due to the deformation (for example, the thermal expansion or the thermal contraction) of the head driving member.

Similarly, there is a possibility that a member of the stage driving system 17 that moves the stage 16 (in the below-described description, it is referred to as a "stage driving member") is deformed by a change of the temperature of the processing unit 1. For example, there is a possibility that the stage driving members expands due to an increase of the temperature. For example, there is a possibility that the stage driving member expands due to a decrease of the temperature. Namely, there is a possibility that a thermal expansion or a thermal contraction of the stage driving member occurs. In this case, there is a possibility that the movement error occurs in the movement of the stage 16 due to the deformation (for example, the thermal expansion or the thermal contraction) of the stage driving member.

Therefore, in the present example embodiment, the processing system SYS performs the deformation error calculation operation to calculate the movement error occurring in the movement of at least one of the processing head 13 and stage 16 due to the deformation of the member of the processing unit 1 (for example, at least one of the head driving member and stage driving member).

Here, in the processing system in which both of the processing head for processing the workpiece W and the stage on which the workpiece W is placed move (for example, a general five-axis processing machine), there is a high possibility that the movement accuracy of the stage is sufficiently higher than the movement accuracy of the processing head. In this case, the movement error of the stage may be regarded to be negligibly small. Namely, the stage may be regarded to move with extreme accuracy. In this case, the processing system SYS may accurately calculate the movement error occurring in the movement of the processing head by performing the deformation error calculation operation. Therefore, in the below-described description, the deformation error calculation operation for calculating the movement error occurring in the movement of the processing head 13 due to the deformation of the head driving member will be described for the simple description. However, the processing system SYS may calculate the movement error occurring in the movement of the stage 16 due to the deformation of the stage driving member by performing the operation that is same as the below-described deformation error calculation operation.

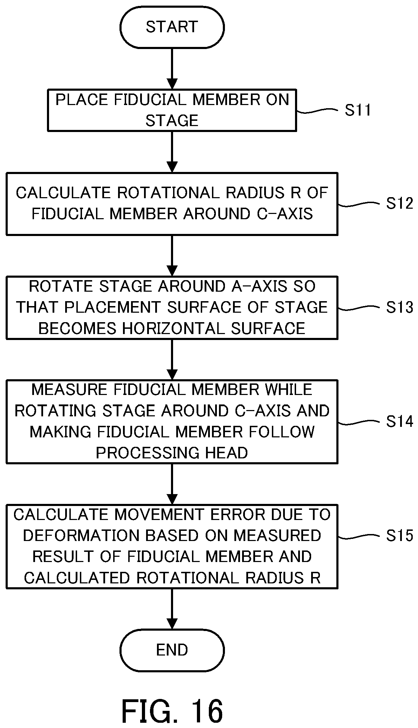

Next, with reference to FIG. 16, the deformation error calculation operation will be described. FIG. 16 is a flowchart that illustrates a flow of the deformation error calculation operation.

As illustrated in FIG. 16, firstly, the fiducial member FM described above is placed on the stage 16 (a step S11).

Then, the control unit 2 calculates the position of the fiducial member FM on the stage 16 (a step S12). In the present example embodiment, an example in which the control unit 2 calculates a rotational radius R of the fiducial member FM around the rotational axis CX as an index value indicating the position of the fiducial member FM on the stage 16. In this case, the control unit 2 may calculate the rotational radius R by performing at least one of a first radius calculation operation and a second radius calculation operation. Here, the first to second radius calculation operations will be described below in turn.

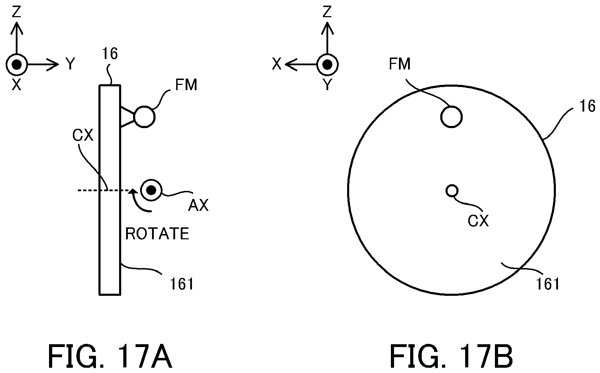

Firstly, the first radius calculation operation will be described. In this case, as illustrated in FIG. 17A and FIG. 17B, the processing unit 1 rotates the stage 16 around the rotational axis AX under the control of the control unit 2. In this case, the processing unit 1 may rotate the stage 16 around the rotational axis AX so that the placement surface 161 on which the fiducial member FM is placed is parallel to the Z-axis direction (namely, the gravity direction). The processing unit 1 may rotate the stage 16 around the rotational axis AX so that the placement surface 161 becomes a surface along the propagating direction of the measurement light ML emitted from the processing head 13 (in an example illustrated in FIG. 17A and FIG. 17B, the Z-axis direction). The processing unit 1 may rotate the stage 16 around the rotational axis AX so that the rotational axis CX, which is orthogonal to the placement surface 161, is orthogonal to the Z-axis direction.

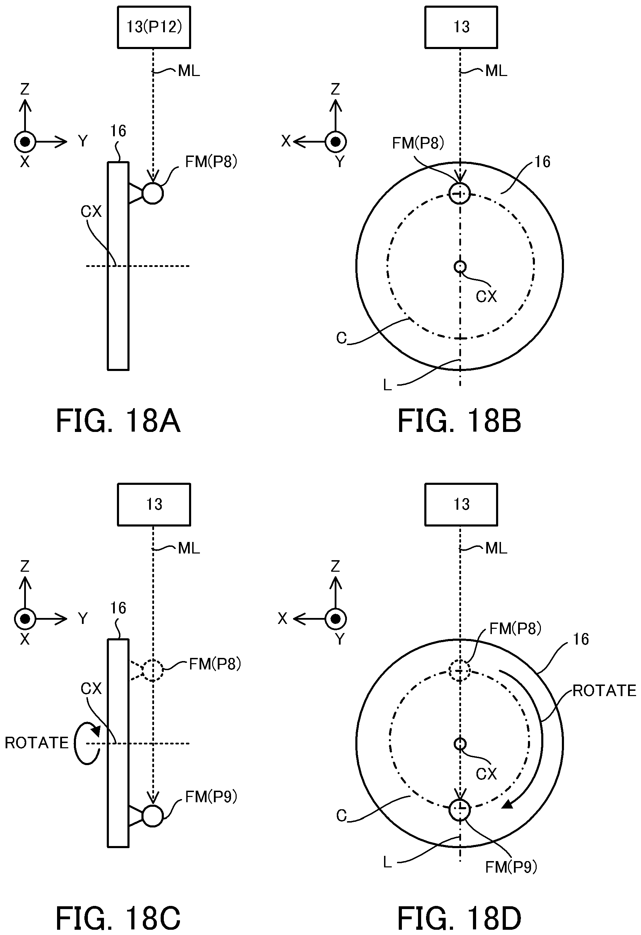

Then, the processing unit 1 may measure the fiducial member FM located at a position P8, and may measure the fiducial member FM that has moved from the position P8 to a position P9 different from the position P8 under the control of the control unit 2, as illustrated in FIG. 18A to Fig. 18D. In this case, the control unit 2 may acquire, from the processing unit 1, the detected result of the returning light RL that is from the fiducial member FM and that is generated by irradiating the fiducial member FM located at the position P8 with the measurement light ML. Furthermore, the control unit 2 may acquire, from the processing unit 1, the detected result of the returning light RL that is from the fiducial member FM and that is generated by irradiating the fiducial member FM located at the position P9 with the measurement light ML. The control unit 2 may calculate the rotational radius R based on the detected results of the returning light RL from the fiducial member FM located at the position P8 and the returning light RL from the fiducial member FM located at the position P9.

Specifically, the processing unit 1 may first measure the fiducial member FM located at the position P8 by irradiating the fiducial member FM located at the position P8 with the measurement light ML, as illustrated in FIG. 18A and FIG. 18B. Then, the processing unit 1 may rotate the stage 16 around the rotational axis CX so that the fiducial member FM located at the position P8 moves from the position P8 to the position P9 different from the position P8, as illustrated in FIG. 18C and FIG. 18D. Then, the processing unit 1 may measure the fiducial member FM located at the position P9 by irradiating the fiducial member FM located at the position P9 with the measurement light ML, as illustrated in FIG. 18C and FIG. 18D. In this case, the processing unit 1 may measure the fiducial member FM located at the position P9 by irradiating the fiducial member FM that stops at the position P9 with the measurement light ML. Namely, the processing unit 1 may perform the measurement of the fiducial member FM, the movement (the rotation) of the fiducial member FM, and the stopping of the fiducial member FM, alternately. However, the processing unit 1 may measure the fiducial member FM that is moving at the position P9.

The position P8 and the position P9 may satisfy such a first position condition that the position P8 and the position P9 are aligned along the propagating direction of the measurement light ML. Conversely, the processing unit 1 may rotate the stage 16 around the rotational axis CX so that the position P8 and the position P9 satisfy the first position condition. In an example illustrated in FIG. 18A to FIG. 18D, the propagating direction of the measurement light ML is the Z-axis direction. In this case, the processing unit 1 may rotate the stage 16 around the rotational axis CX so that position P8 and the position P9 are aligned along the Z-axis direction.

The position P8 and the position P9 may satisfy such a second position condition that the position P8 and the position P9 are located at the same position in a direction along a plane intersecting with the propagating direction of the measurement light ML and located at different positions in a direction along the propagating direction of the measurement light ML. Conversely, the processing unit 1 may rotate the stage 16 around the rotational axis CX so that position P8 and the position P9 satisfy the second position condition. In the example illustrated in FIG. 18A to FIG. 18D, the propagating direction of the measurement light ML is the Z-axis direction. In this case, the processing unit 1 may rotate the stage 16 around the rotational axis CX so that the position P8 and the position P9 are at the same position in a direction along the XY plane intersecting with the Z-axis direction (for example, at least one of the X-axis direction and the Y-axis direction) (so that X coordinates and Y coordinates are the same as each other). In the example illustrated in FIG. 18A to FIG. 18D, the processing unit 1 rotates the stage 16 around the rotational axis CX so that the position P8 and the position P9 are at the same position in both of the X-axis direction and the Y-axis direction. Furthermore, the processing unit 1 may rotate the stage 16 around the rotational axis CX so that the position P8 and the position P9 are located at different positions in the Z-axis direction. In the example illustrated in FIG. 18A to FIG. 18D, the processing unit 1 rotates the stage 16 around the rotational axis CX so that the position P8 is located above the position P9 along the Z-axis direction.

The position P8 and the position P9 may satisfy such a third position condition that the position P8 and the position P9 are located at two positions, respectively, at which a circle C (see FIG. 18B and FIG. 18D) whose center is the rotational axis CX intersects with a line L (see FIG. 18B and FIG. 18D) passing through the center of the circle (namely, the rotational axis CX). Conversely, the processing unit 1 may rotate the stage 16 around the rotational axis CX so that position P8 and the position P9 satisfy the third position condition.

In a case where the positions P8 and P9 satisfy both of the first and third position conditions, the position P8 corresponds to an uppermost position on the moving trajectory of the fiducial member FM in a case where the stage 16 rotates around the rotational axis CX, as illustrated in FIG. 18A and FIG. 18B. On the other hand, the position P9 corresponds to a lowermost position on the moving trajectory of the fiducial member FM in a case where the stage 16 rotates around the rotational axis CX, as illustrated in FIG. 18C and FIG. 18D. In this case, the processing unit 1 may move the fiducial member FM located at the position P8 to the position P9 by rotating the stage 16 by 180 degrees around the rotational axis CX. Incidentally, in a case where the positions P8 and P9 satisfy the first and third position conditions, then, the positions P8 and P9 necessarily satisfy the second position condition.

In the first radius calculation operation, it is preferable that the positions P8 and P9 satisfy the first and third position conditions. In this case, the processing unit 1 may rotates the stage 16 around the rotational axis AX so that the placement surface 161 on which the fiducial member FM is placed is parallel to the Z-axis direction, and then, rotates the stage 16 around the rotational axis CX so that the fiducial member FM is located at the lowermost position P8 on the moving trajectory of the fiducial member FM in a case where the stage 16 rotates around the rotational axis CX, if necessary. Then, the processing unit 1 may measure the fiducial member FM located at the position P8. Then, the processing unit 1 may rotate the stage 16 around the rotational axis CX by 180 degrees to move the fiducial member FM located at the position P8 to the lowermost position P9 on the moving trajectory of the fiducial member FM in a case where the stage 16 rotates around the rotational axis CX. Then, the processing unit 1 may measure the fiducial member FM located at the position P9.

The processing unit 1 may measure both of the fiducial member FM located at the position P8 and the fiducial member FM located at the position P9 without moving the processing head 13. Specifically, as illustrated in Fig. 18A and FIG. 18B, the processing unit 1 may irradiate the fiducial member FM located at the position P8 with the measurement light ML from the processing head 13 (especially, the objective optical system 134) located at a position P12. Furthermore, the processing unit 1 may optically receive the returning light RL from the fiducial member FM located at the position P8 by using the processing head 13 (especially, the objective optical system 134) located at the position P12. Furthermore, as illustrated in FIG. 18C and FIG. 18D, the processing unit 1 may irradiate the fiducial member FM located at the position P9 with the measurement light ML from the processing head 13 (especially the objective optics 134) located at the position P12. Furthermore, the processing unit 1 may optically receive the returning light RL from the fiducial member FM located at the position P9 by using the processing head 13 (especially, the objective optical system 134) located at the position P12. In this case, the position P12 is a position that satisfies such a condition that both of the fiducial member FM located at the position P8 and the fiducial member FM located at the position P9 are included (namely, both of the positions P8 and P9 are included) in the measurement shot area MSA of the processing head 13 located at the position P12.

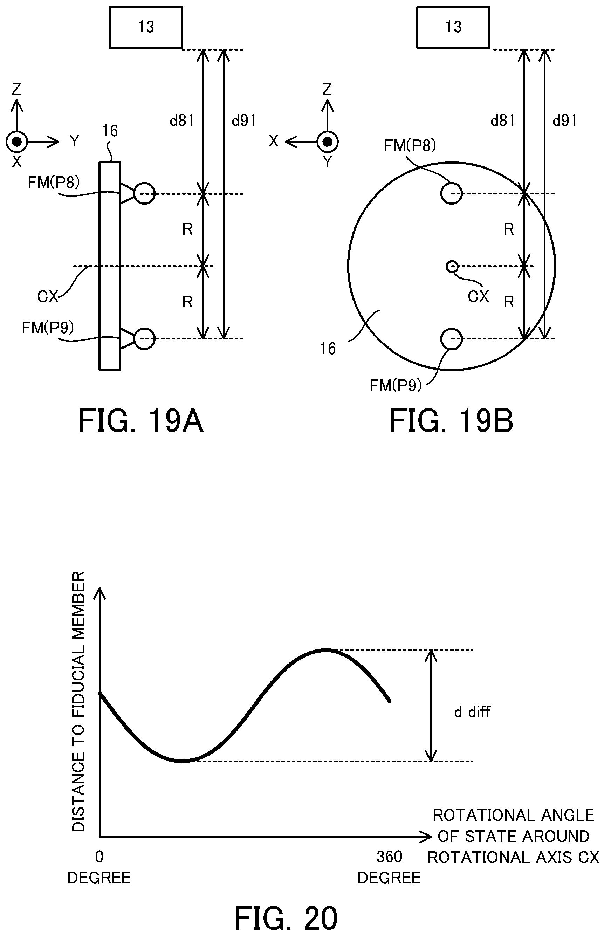

After the measurement of the fiducial member FM is completed, the control unit 2 may calculate the rotational radius R based on the measured result of the fiducial member FM. Specifically, the control unit 2 may calculate a distance from the processing head 13 to the fiducial member FM based on the measured result of the fiducial member FM. Namely, the control unit 2 may calculate a distance d81 from the processing head 13 to the fiducial member FM located at the position P8 and a distance d91 from the processing head 13 to the fiducial member FM located at the position P9, as illustrated in FIG. 19A and FIG. 19B. Here, since the positions P8 and P9 correspond to the uppermost position and the lowermost position on the moving trajectory of the fiducial member FM, respectively, a difference between the distance d81 and the distance d91 (namely, d91-d81) is equal to a double of the rotational radius R. Therefore, the control unit 2 may calculate the rotational radius R by using a formula R = (d91-d81) / 2.

Incidentally, the processing unit 1 may measure the fiducial member FM numerous times in a period during which the stage 16 is rotated by 360 degrees around the rotational axis CX, in addition to or instead of measuring the fiducial member FM located at the position P8 and the fiducial member FM located at the position P9. In this case, the control unit 2 may calculate a relationship between the rotation angle of the stage 16 around the rotational axis CX and the distance from the processing head 13 to the fiducial member FM based on the measured result of the fiducial member FM, as illustrated in FIG. 20. Then, the control unit 2 may calculate a difference d_diff between a maximum value and a minimum value of the distance from the processing head 13 to the fiducial member FM. The difference d_diff between the maximum value and the minimum value of the distance from the processing head 13 to the fiducial member FM corresponds to the difference between the position P8 and the position P9 described above. Therefore, the control unit 2 may calculate the rotational radius R by using a formula R = d_diff /2.

Next, the second radius calculation operation will be described. In the second radius calculation operation, as in the first radius calculation operation, the processing unit 1 rotates the stage 16 around the rotational axis AX. Then, in the second radius calculation operation, the processing unit 1 may measure the fiducial member FM located at the position P8 and the fiducial member FM that has moved from the position P8 to the position P9 different from the position P8 as in the first radius calculation operation.

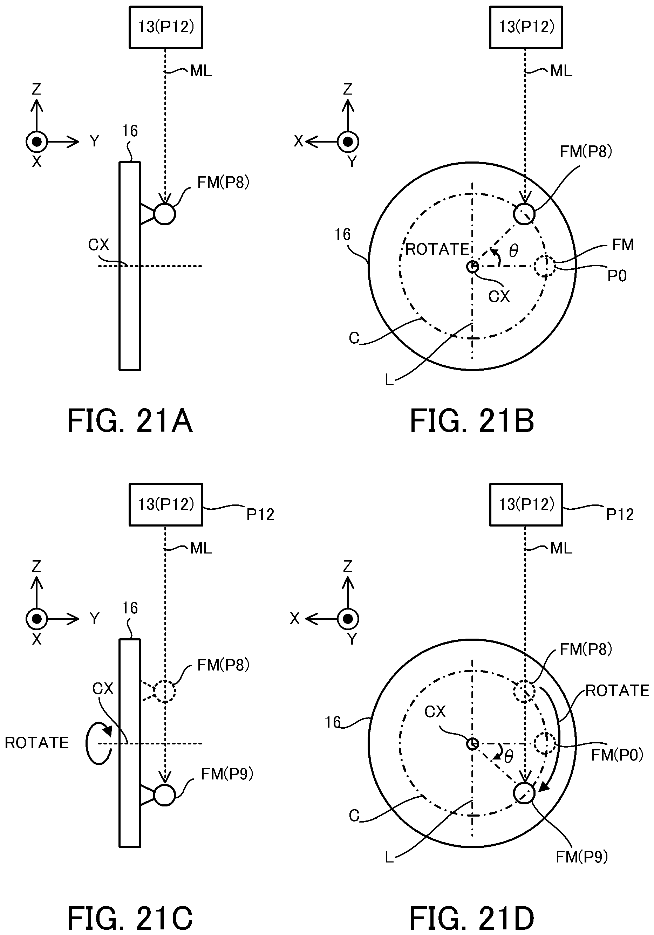

The second radius calculation operation may be different from the first radius calculation operation in which the position P8 and the position P9 satisfy the above-described first to third position conditions in that the position P8 and the position P9 satisfy the above-described first and second position conditions but does not satisfy the third position condition. In this case, as illustrated in FIG. 21A to FIG. 21B, the processing unit 1 may dispose the fiducial member FM at the position P8 by rotating the stage 16 by a predetermined angle θ along one direction around the rotational axis CX (in an example illustrated in FIG. 21B, a counterclockwise direction) from an initial state in which the fiducial member FM is assumed to be located at a position P0 that is located at the same position (at the same height) as the rotational axis CX in the Z-axis direction. In this state, the processing unit 1 may measure the fiducial member FM located at the position P8. Then, as illustrated in FIG. 21C to FIG. 21D, the processing unit 1 may dispose the fiducial member FM at the position P9 by rotating the stage 16 by the predetermined angle θ along the other direction opposite to the one direction around the rotational axis CX (in an example illustrated in FIG. 21D, a clockwise direction) from the initial state. In this state, the processing unit 1 may measure the fiducial member FM located at the position P9. However, as long as the processing unit 1 can measure the fiducial member FM located at the position P8 and the fiducial member FM located at the position P9, a method for moving the stage 16 is not limited to this method. For example, the processing unit 1 may move the fiducial member FM located at the position P8 to the position P9 by rotating the stage 16 by 2θ after measuring the fiducial member FM located at the position P8.

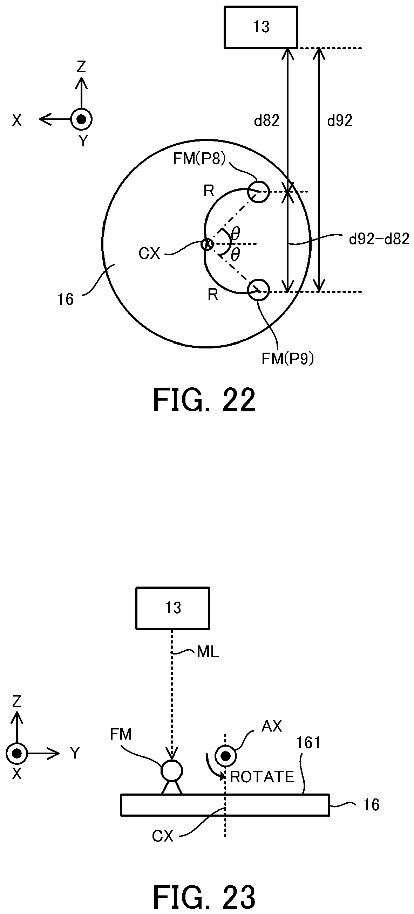

After the measurement of the fiducial member FM is completed, the control unit 2 may calculate the rotational radius R based on the measured result of the fiducial member FM. Specifically, the control unit 2 may calculate the distance from the processing head 13 to the fiducial member FM based on the measured result of the fiducial member FM. namely, the control unit 2 may calculate a distance d82 from the processing head 13 to the fiducial member FM located at the position P8 and a distance d92 from the processing head 13 to the fiducial member FM located at the position P9, as illustrated in FIG. 22A and FIG. 22B. In this case, as illustrated in FIG. 22A and FIG. 22B, a relationship sinθ = ((d92-d82) / 2) / R is established between the distances d82 and d92 and the rotational radius R. Therefore, the control unit 2 may calculate the rotational radius R by using a formula R = (d92-d82) / 2sinθ.

The processing unit 1 may perform an operation for rotating the stage 16 around the rotational axis CX so that the fiducial member FM is disposed at each of the positions P8 and P9 a plurality of times while changing the rotation angle θ of the stage 16. Namely, as the rotation angle θ changes, the position P8 and the position P9 also change. Therefore, the processing unit 1 may perform the operation for rotating the stage 16 around the rotational axis CX so that the fiducial member FM is disposed at each of the positions P8 and P9 a plurality of times while changing the positions P8 and P9. As a result, the fiducial member FM may be disposed at a plurality of different positions P8 in sequence and may be disposed at a plurality of different positions P9 in sequence. In the below-described description, it is assumed that the fiducial member FM is located at the positions P8ₖ and P9ₖ in a case where the stage 16 is rotated by a rotation angle θₖ around the rotational axis CX (note that k is an integer from 1 to N inclusive, and N is an integer indicating the number of times for performing the operation for rotating the stage 16). In this case, the processing unit 1 may measure the fiducial member FM located at the position P8 and the fiducial member FM located at the position P9 each time the operation for rotating the stage 16 around the rotational axis CX is performed so that the fiducial member FM is disposed at each of the positions P8 and P9. Namely, the processing unit 1 may measure the fiducial member FM located at a position P8i and the fiducial member FM located at the position P9₁, measure the fiducial member FM located at a position P8₂ and the fiducial member FM located at the position P9₂, ..., and measure the fiducial member FM located at a position P8_{N} and the fiducial member FM located at the position P9_{N}. Then, the control unit 2 may calculate the rotational radius Rₖ based on the measured result of the fiducial member FM located at the position P8ₖ and the fiducial member FM located at the position P9ₖ. Namely, the control unit 2 may calculate the rotational radius Ri, the rotational radius R₂, ..., and the rotational radius R_{N}. Then, the control unit 2 may calculate the average value of the rotational radii R₁ to R_{N} as the rotational radius R.

In the second radius calculation operation, a distance between position P8 and the position P9 in the propagating direction of the measurement light ML is shorter than that in the first radius calculation operation. Therefore, an influence of a defocusing of the measurement light ML on the accuracy of the rotational radius R calculated by the control unit 2 becomes smaller. Therefore, the control unit 2 can calculate the rotational radius R with relatively high accuracy even in a case where a depth of focus of the processing head 13 (for example, a depth of focus of the objective optical system 134) is relatively shallow (small).

Again in FIG. 16, after the rotational radius R is calculated, the processing unit 1 rotates the stage 16 around the rotational axis AX under the control of the control unit 2 (a step S13). In this case, the processing unit 1 may rotate the stage 16 around the rotational axis AX so that the placement surface 161 on which the fiducial member FM is placed is orthogonal to the Z-axis direction (namely, the gravity direction), as illustrated in FIG. 23. The processing unit 1 may rotate the stage 16 around the rotational axis AX so that the placement surface 161 becomes a plane that intersects with the propagating direction of the measurement light ML emitted from the processing head 13 (in an example illustrated in FIG. 23, the Z-axis direction). The processing unit 1 may rotate the stage 16 around the rotational axis AX so that the rotational axis CX, which is orthogonal to the placement surface 161, is parallel to the Z-axis direction.

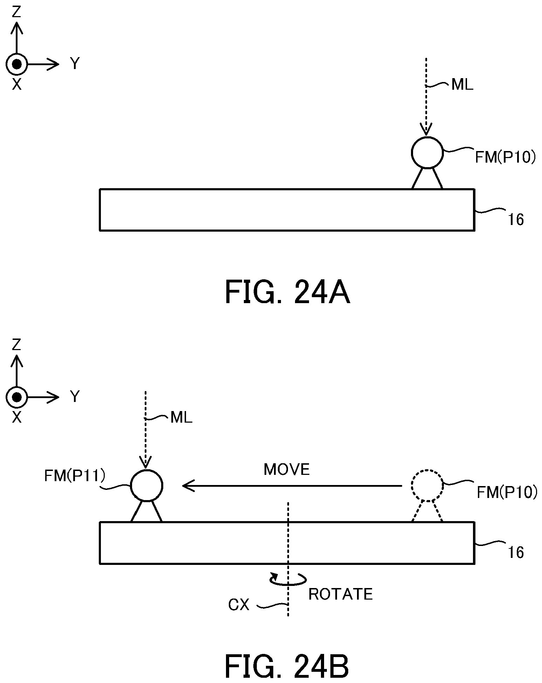

Then, the processing unit 1 measures the fiducial member FM (a step S14). Specifically, as illustrated in FIG. 24A and FIG. 24B, the processing unit 1 may measure the fiducial member FM located at a position P10, and may measure the fiducial member FM that has moved from the position P10 to a position P11 different from the position P10 under the control of the control unit 2. More specifically, the processing unit 1 may firstly measure the fiducial member FM located at the position P10 by irradiating the fiducial member FM located at the position P10 with the measurement light ML, as illustrated in FIG. 24A. Then, the processing unit 1 may rotate (rotationally move) the stage 16 around the rotational axis CX so that the fiducial member FM located at the position P10 moves from the position P10 to the position P11 from the position P10, as illustrated in IG. 24B. Then, the processing unit 1 may measure the fiducial member FM located at the position P11 by irradiating the fiducial member FM located at the position P11 with the measurement light ML, as illustrated in FIG. 24B. As a result, the control unit 2 may acquire, from the processing unit 1, the detected result of the returning light RL that is from the fiducial member FM and that is generated by irradiating the fiducial member FM located at the position P10 with the measurement light ML. Furthermore, the control unit 2 may acquire, from the processing unit 1, the detected result of the returning light RL that is from the fiducial member FM and that is generated by irradiating the fiducial member FM located at the position P11 with the measurement light ML. The control unit 2 may calculate the movement error based on the detected result of the returning light RL from the fiducial member FM located at the position P10 and the detected result of the returning light RL from the fiducial member FM located at the position P11.

Note that an operation for measuring the fiducial member FM at the step S14 may be the same as an operation for measuring the fiducial member FM in the above-described movement error calculation operation. Namely, at the step S14, the processing unit 1 may measure the fiducial member FM located at the position P10 and the fiducial member FM that has moved to the position P11 by performing an operation that is the same as the operation for measuring the fiducial member FM in the above-described movement error calculation operation . Thus, a detailed description of the operation for measuring the fiducial member FM at the step S14 is omitted to omit a redundant description. The processing unit 1 may perform, at the step S14, an operation that is the same as the operation for measuring the fiducial member FM in the above-described movement error calculation operation, if there is no specific description.

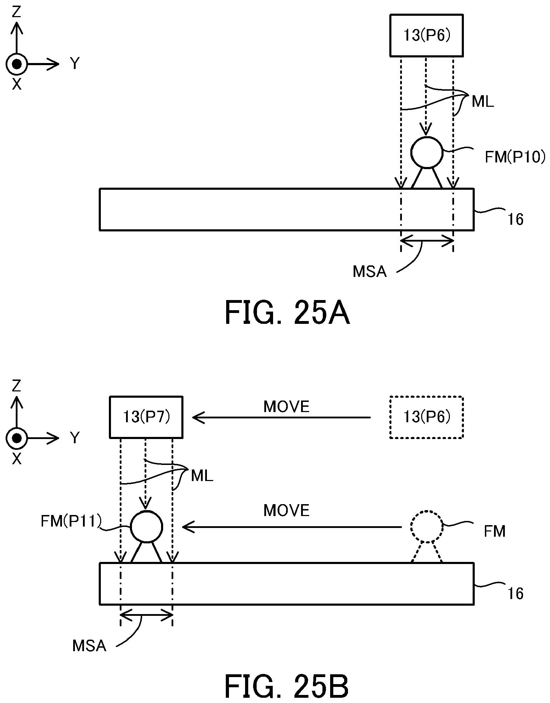

The processing unit 1 may move the processing head 13 so that the processing head 13 follows the moving fiducial member FM. Specifically, the processing unit 1 may move the processing head 13 so that the moving fiducial member FM is included in the measurement shot area MSA determined based on the processing head 13. Specifically, as illustrated in FIG. 25A, the processing unit 1 may irradiate the fiducial member FM located at the position P10 with the measurement light ML from the processing head 13 (especially, the objective optical system 134) located at a position P6. The position P6 is a position that satisfies such a condition that the fiducial member FM located at the position P10 is included (namely, the position P10 is included) in the measurement shot area MSA of the processing head 13 located at the position P6. Furthermore, the processing unit 1 may optically receive the returning light RL from the fiducial member FM located at the position P10 by using the processing head 13 (especially, the objective optical system 134) located at the position P6. Then, the processing unit 1 may rotate the stage 16 around the rotational axis CX so that the fiducial member FM located at the position P10 moves from the position P10 to the position P11, as illustrated in FIG. 25B. Furthermore, the processing unit 1 may move the processing head 13 so that the processing head 13 located at the position P6 moves from the position P6 to the position P7 different from the position P6, as illustrated in FIG. 25B. The position P7 is a position that satisfies such a condition that the fiducial member FM located at the position P11 is included (namely, the position P11 is included) in the measurement shot area MSA of the processing head 13 located at the position P7. Then, the processing unit 1 may irradiate the fiducial member FM located at the position P11 with the measurement light ML from the processing head 13 (especially, the objective optical system 134) located at the position P7, as illustrated in Figure 25(b). Furthermore, the processing unit 1 may optically receive the returning light RL from the fiducial member FM located at the position P11 by using the processing head 13 (especially, the objective optical system 134) located at the position P7.

Again in FIG. 16, after the measurement of the fiducial member FM is completed, the control unit 2 calculate, based on the rotational radius calculated at the step S12 and the measured result of the fiducial member FM acquired at the step S14, the movement error occurring in the movement of at least one of the processing head 13 and the stage 16 due to the deformation of the member of the processing unit 1 (a step S15). Namely, the control unit 2 calculates the movement error based on the measured result of the fiducial member FM at the step S12 and the measured result of the fiducial member FM at the step S14.

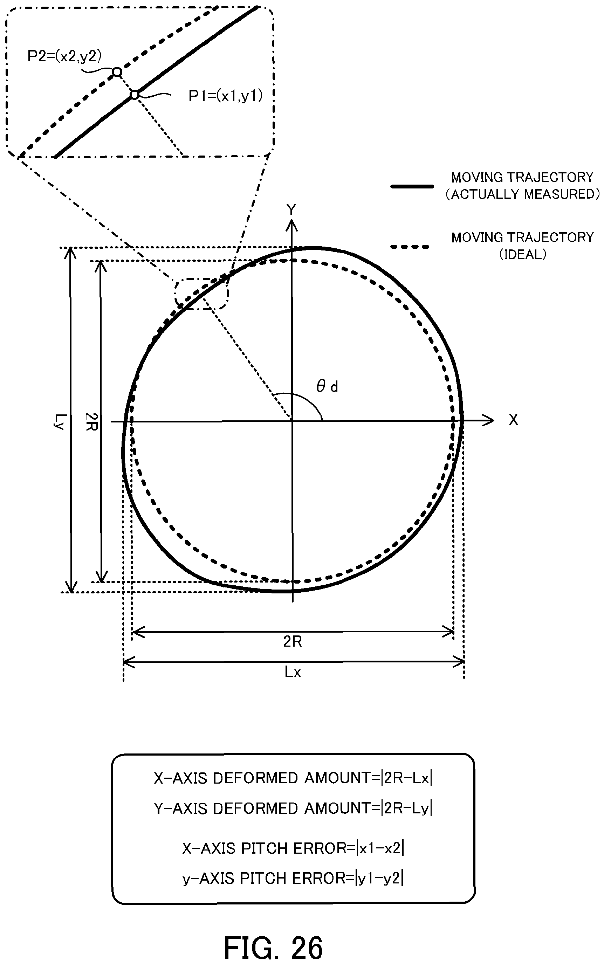

Specifically, the control unit 2 may calculate the position (especially, the reference position) of the fiducial member FM based on the measured result of the fiducial member FM. Namely, the control unit 2 may generate the measurement data (namely, the position information) indicating the position of the fiducial member FM. Especially, since the fiducial member FM moves, the control unit 2 may calculate the movement trajectory of the fiducial member FM (especially, the movement trajectory of the reference position). Namely, the control unit 2 may generate the measurement data indicating the movement trajectory of the fiducial member FM. Note that one example of the measurement data indicating the calculated position(especially movement trajectory) of the fiducial member FM is illustrated by using a solid line in FIG. 26. FIG. 26 illustrates the position (the three-dimensional position) of the fiducial member FM that is measured while rotating the stage 16 around the rotational axis CX and that is projected onto the XY plane. Then, the control unit 2 may calculate the movement error based on the calculated position of the fiducial member FM (namely, the measurement data that is the position information).

Specifically, since the rotational radius R of the fiducial member FM is calculated at the step S12 in FIG. 16, the control unit 2 may calculate an ideal movement trajectory (namely, a movement trajectory that forms a perfect circle whose radius is R) of the fiducial member FM in a case where the stage 16 rotates around the rotational axis CX. On the other hand, the measurement data indicates an actual movement trajectory of the fiducial member FM. Here, in a case where the movement error does not occur, the calculated movement trajectory of the fiducial member FM coincide with the ideal movement trajectory of the fiducial member FM. On the other hand, in a case where the movement error occurs, the calculated movement trajectory of the fiducial member FM does not coincide with the ideal movement trajectory of the fiducial member FM, at least partially. Therefore, it can be said that the difference between the calculated movement trajectory of the fiducial member FM and the ideal movement trajectory of the fiducial member FM indicates the movement error. Therefore, the control unit 2 may calculate a theoretical movement trajectory of the fiducial member FM based on the rotational radius R calculated at the step S12 in FIG. 16. Furthermore, the control unit 2 may calculate the actual movement trajectory of the fiducial member FM based on the measured result of the fiducial member FM acquired at the step S14 in FIG. 16. Then, the control unit 2 may calculate the movement error based on the difference between the ideal movement trajectory of the fiducial member FM and the actual movement trajectory of the fiducial member FM.

Note that the movement error of the processing head 13 calculated in the deformation error calculation operation may be the same as the movement error of the processing head 13 calculated in the above-described movement error calculation operation. For example, the control unit 2 may calculate, in the deformation error calculation operation, the movement error (for example, the movement error E_{X}, the movement error E_{Y}, and the movement error E_{Z}) occurring in the movement of the processing head 13 in a case where the processing head 13 moves along one movement direction. For example, the control unit 2 may calculate, in the deformation error calculation operation, the error related to the movement axis of the processing head 13 (for example, the error related to the orthogonality (the perpendicularity) between one movement axis of the processing head 13 and another movement axis. For example, the control unit 2 may calculate, in the deformation error calculation operation, a movement error that is different from the movement error described above as one example.

Specifically, for example, as illustrated in FIG. 26, the control unit 2 may calculate, as the movement error in the X-axis direction (for example, an amount of a deformation in the X-axis) occurring in the movement of the processing head 13 due to the deformation of the head driving member, an absolute value of a difference between a size (namely, a diameter) Lx in the X-axis direction of the ideal movement trajectory of the fiducial member FM and a size (namely, the double of the rotational radius R) in the X-axis direction of the actual movement trajectory of the fiducial member FM. For example, as illustrated in FIG. 26, the control unit 2 may calculate, as the movement error in the Y-axis direction (for example, an amount of a deformation in the Y-axis) occurring in the movement of the processing head 13 due to the deformation of the head driving member, an absolute value of a difference between a size (namely, a diameter) Ly in the Y-axis direction of the ideal movement trajectory of the fiducial member FM and a size (namely, the double of the rotational radius R) in the Y-axis direction of the actual movement trajectory of the fiducial member FM. For example, as illustrated in FIG. 26, the control unit 2 may calculate, as the movement error in the X-axis direction (for example, a pitch error) occurring in the movement of the processing head 13 due to the deformation of the head driving member, an amount of a deviation in the X-axis direction between the ideal movement trajectory of the fiducial member FM and the actual movement trajectory of the fiducial member FM in a case where the rotation angle of the stage 16 is a predetermined angle θd. For example, as illustrated in FIG. 26, the control unit 2 may calculate, as the movement error in the Y-axis direction (for example, a pitch error) occurring in the movement of the processing head 13 due to the deformation of the head driving member, an amount of a deviation in the Y-axis direction between the ideal movement trajectory of the fiducial member FM and the actual movement trajectory of the fiducial member FM in a case where the rotation angle of the stage 16 is the predetermined angle θd.

After the movement error is calculated, the control unit 2 may control the processing unit 1 based on the movement error. Specifically, the control unit 2 may control the processing unit 1 so that the workpiece W is processed and the measurement target object M is measured in the same manner as with a case where the movement error does not occur, even in a case where the movement error occurs. For example, the control unit 2 may control the head driving system 14 that moves the processing head 13 so that the processing head 13 moves in the same manner as with a case where the movement error does not occur, even in a case where the movement error occurs. Namely, the control unit 2 may move the processing head 13 so that the movement error is cancelled. In a case where the movement error occurring in the movement of the stage 16 is calculated by the deformation error calculation operation, for example, the control unit 2 may control the stage driving system 17 that moves the stage 16 so that the stage 16 moves in the same manner as with a case where the movement error does not occur, even in a case where the movement error occurs. Namely, the control unit 2 may move the stage 16 so that the movement error is canceled. Incidentally, since the movement error is calculated from the information related to the position of the fiducial member FM, the control unit 2 may be regarded to control the movement of at least one of the processing head 13 and the stage 16 (namely, controls at least one of the head driving system 14 and the stage driving system 17) based on the information related to the position of the fiducial member FM. The control unit 2 may be regarded to control the movement of at least one of the processing head 13 and the stage 16 (namely, controls at least one of the head driving system 14 and the stage driving system 17) based on the information related to the position of the fiducial member M that is calculated from the measured result of the fiducial member FM located at the position P8, the measured result of the fiducial member FM located at the position P9, the measured result of the fiducial member FM located at the position P10, and the measured result of the fiducial member FM located at the position P11.

The control unit 2 may store movement error information related to the calculated movement error in the storage apparatus of the control unit 2. The control unit 2 may store the movement error information related to the calculated movement error in the storage apparatus disposed outside the control unit 2. In this case, the control unit 2 may control the processing unit 1 based on the movement error information stored in the storage apparatus.

The control unit 2 may store, in the storage apparatus, the movement error information together with the temperature information related to a temperature of the processing unit 1 in a measurement period during which the fiducial member FM is measured in order to calculate the movement error (in this case, the deformation error). The temperature information may include the information related to the statistical value (for example, at least one of the maximum value, the minimum value, the average value, and the median value) of the temperature of the processing unit 1 in the measurement period. The control unit 2 may store, in the storage apparatus, a plurality of movement error information, which correspond to a plurality of environments between which the temperature of the processing unit 1 is different, respectively, together with the temperature information. In this case, the control unit 2 may control the processing unit 1 based on one movement error information corresponding to the temperature closest to the current temperature of the processing unit 1.

The processing system SYS may perform the deformation error calculation operation at regular intervals. For example, the processing system SYS may perform the deformation error calculation operation every n1 (note that n1 is an integer that is larger than or equal to 1) days. For example, the processing system SYS may perform the deformation error calculation operation every n2 (note that n2 is an integer that is larger than or equal to 1) weeks. For example, the processing system SYS may perform the deformation error calculation operation every n3 (note that n3 is an integer that is larger than or equal to 1) months. For example, the processing system SYS may perform the deformation error calculation operation every n4 (note that n4 is an integer that is larger than or equal to 1) years. For example, the processing system SYS may perform the movement error calculation operation every n5(note that n5 is an integer that is larger than or equal to 1) hours. Alternatively, as described above, one of the reasons why the movement error occurs is the change of the temperature of the processing unit 1. In this case, the processing system SYS may perform the deformation error calculation operation in a case where the temperature of the processing unit 1 changes by an allowable amount or more. Namely, the processing system SYS may perform the deformation error calculation operation in a case where the member of the processing unit 1 is estimated to have been deformed. Moreover, the above-described deformation error calculation operation may be performed after the processing system SYS is manufactured, namely, independently from the change of the environment surrounding the processing system SYS. In this case, a manufacturing error of the processing system SYS may be calculated.

As described above, in the present example embodiment, the control unit 2 is configured to calculate the movement error that occurs in the movement of at least one of the processing head 13 and stage 16 due to the deformation of the member of the processing unit 1. Therefore, the processing unit 1 can process the workpiece W and measure the measurement target object M while reducing the influence of the movement error under the control of the control unit 2, even in a case where the member of the processing unit 1 is deformed.

Incidentally, there is a possibility that the member of the processing unit 1 is deformed by a factor that is different from the changes of the temperature of the environment in which the processing system SYS is installed. Even in this case, the processing system SYS may calculate the movement error occurring in a case where the member of the processing unit 1 is deformed due to the factor that is different from the change of the temperature of the environment by performing the above described deformation error calculation operation. At least one of an aging deterioration of the processing system SYS (for example, an aging deterioration of the member of the processing unit 1) and fluctuation of a pressure in a processing space in which the workpiece W is processed is one example of the factor that causes the deformation of the member of the processing unit 1.

### (3) Modified Example

Next, a modified example of the processing system SYS will be described.

### (3-1) Modified Example of Movement Error Calculation Operation

In the above-described description, the control unit 2 calculates the movement error based on at least the measured result of the fiducial member FM located at the position P1 and the measured result of the fiducial member FM located at the position P2. Namely, the processing unit 1 moves the fiducial member M by moving the stage 16 and measures the fiducial member FM located at each of a plurality of different positions. However, the processing unit 1 may measure the fiducial member FM located at the position P1 but may not measure the fiducial member FM located at the position P2. Namely, the processing unit 1 may not move the fiducial member M by moving the stage 16 and may not measure the fiducial member FM located at each of the plurality of different positions. In this case, the processing unit 1 may measure the fiducial member FM located at the same position while moving the processing head 13 along the propagating direction of the measurement light ML.

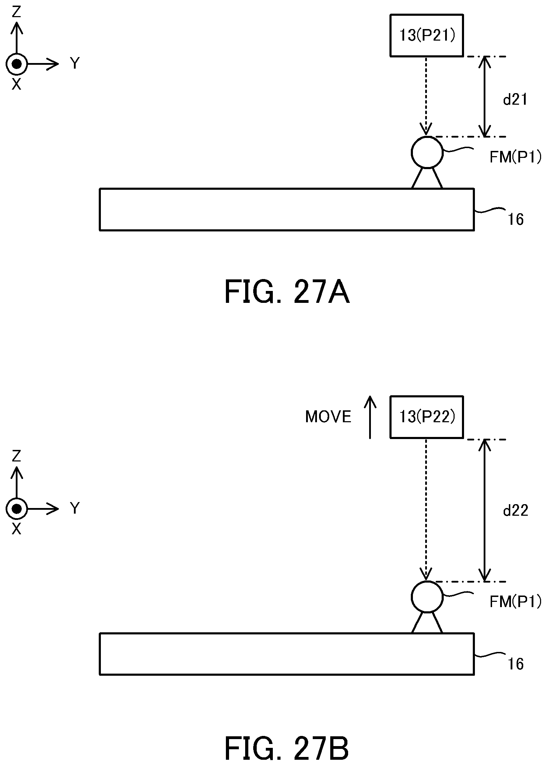

Specifically, the processing unit 1 may measure the fiducial member FM located at the position P1 by using the processing head 13 located at a position P21, as illustrated in FIG. 27A. Then, the processing unit 1 may move the processing head 13 along the Z-axis direction so that the processing head 13 located at the position P21 moves from the position P21 to a position P22 different from the position P21 in the Z-axis direction that is the propagating direction of the measurement light ML, as illustrated in FIG. 27B. Then, the processing unit 1 may measure the fiducial member FM located at the position P1 by using the processing head 13 located at the position P22, as illustrated in FIG. 27B.

Then, the control unit 2 may calculate, based on the measured result of the fiducial member FM, the movement error occurring in the movement of the processing head 13 (in this case, the movement error Ezz in the Z-axis direction occurring in the movement of the processing head 13 along the Z-axis direction). Specifically, the control unit 2 may calculate a distance d21 between the processing head 13 located at the position P21 and the fiducial member FM based on the measured result of the fiducial member FM by using the processing head 13 located at the position P21. Furthermore, the control unit 2 may calculate a distance d22 between the processing head 13 located at the position P22 and the fiducial member FM based on the measured result of the fiducial member FM by using the processing head 13 located at the position P22. Here, in a case where the movement error Ezz does not occur, a difference between the distance d22 and the distance d21 (namely, d22-d21) should be equal to a target value of the moving distance of the processing head 13 in the Z-axis direction. On the other hand, in a case where the movement error Ezz occurs, the difference between the distance d22 and the distance d21 (namely, d22-d21) is not equal to the target value of the moving distance of the processing head 13 in the Z-axis direction. In this case, it is estimated that the processing head 13 has moved, due to the movement error, by a distance that is longer than the target value of the moving distance or is shorter than the target value of the moving distance in moving from the position P21 to the position P22. Therefore, the control unit 2 may calculate the difference between the distance d22 and the distance d21, and calculate, as the movement error E_{ZZ}, a difference between the calculated difference and the target value of the moving distance of the processing head 13 in the Z-axis direction.

Note that the same operation may be performed even in the deformation error calculation operation.

In the above-described description, in a case where the movement error calculation operation is performed, the fiducial member FM is dispose at a position that is away from the rotational axis of the stage 16 along the direction intersecting with the rotational axis. However, the fiducial member FM may be disposed on the rotational axis of the stage 31. Namely, the fiducial member FM may be disposed at the center of the rotation of the stage 31. In this case, the processing unit 1 may measure the fiducial member FM by using the measurement light ML each time the stage 31 is rotated by a predetermined rotational amount (namely, by a predetermined rotational angle) around the rotational axis. The control unit 2 may calculate a rotational accuracy of the rotational axis of the stage 31 (for example, a rotational positioning error of the rotational axis) as one example of the movement error based on the measured result of the fiducial member FM. Specifically, in a case where the rotational accuracy is calculated, the fiducial member FM including the polyhedron illustrated in FIG. 8B may be placed on the stage 31. In this case, the control unit 2 may calculate an orientation (namely, a direction along which a normal line extends) of each surface (namely, each surface of the polyhedron) of the fiducial member FM based on the measured result of the fiducial member FM. Therefore, the control unit 2 may calculate the orientation of each surface of the fiducial member FM each time the stage 31 rotates by the predetermined rotational amount. As a result, the control unit 2 may calculate a deviation between the orientation of each surface of the fiducial member FM and the rotational axis of the stage 31. Here, a measurement accuracy of the measurement target object using the measurement light ML is relatively high, and thus, it is estimated that the deviation between the orientation of each surface of the fiducial member FM and the rotational axis of the stage 31 is caused by the positioning error of the rotational axis of the stage 31. Therefore, the control unit 2 may calculate the deviation between the orientation of each surface of the fiducial member FM and the rotational axis of the stage 31 as the positioning error of the rotational axis of the stage 31.

### (3-2) Modified Example of Deformation Error Calculation Operation

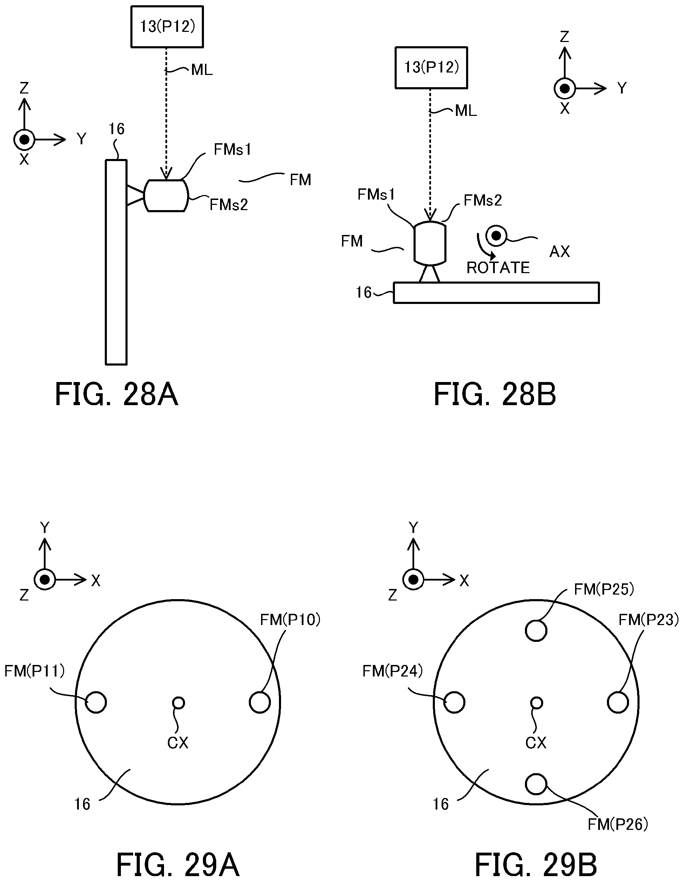

As described above with reference to FIG. 11C, the member that includes both of the planar surface FMs1 and the curved surface FMs2 may be used as the fiducial member FM. In this case, in a case where the fiducial member FM is measured to calculate the rotational radius R at the step S12 in FIG. 16, the processing unit 1 may measure the fiducial member FM by irradiating the planar surface FMs1 of the fiducial member FM with the measurement light ML, as illustrated in FIG. 28A. This is because the distance between the processing head 13 and the fiducial member FM is calculated to calculate the rotational radius R, the distance between the processing head 13 and the planar surface of the fiducial member FM can be calculated more accurately than the distance between the processing head 13 and the curved surface of the fiducial member FM. In this case, the processing unit 1 may rotate the stage 16 around the A-axis so that the planar surface FMs1 is irradiated with the measurement light ML. On the other hand, in a case where the fiducial member FM is measured at the step S14 in FIG. 16 after the rotational radius R is calculated, the processing unit 1 may measure the fiducial member FM by irradiating the curved surface FMs2 of the fiducial member FM with the measurement light ML, as illustrated in FIG. 28B. This is because the reference position of the fiducial member FM is calculated to calculate the movement error, the reference position of the fiducial member FM (for example, the position of the center of the sphere) can be calculated with high accuracy by calculating the shape (for example, a spherical shape) of the curved surface FMs2 of the fiducial member FM. In this case, the processing unit 1 may rotate the stage 16 around the A-axis so that the curved surface FMs2 of the fiducial member FM is irradiated with the measurement light ML.

At the step S14 in FIG. 19, the processing unit 1 measures the fiducial member FM located at the position P10 and the fiducial member FM located at the position P11. Here, in a case where the position P10 and the position P11 are located at the same position along either one of the X-axis direction and the Y-axis direction as illustrated in FIG. 29A, it is enough for the processing unit 1 to move the processing head 13 in either one of the X-axis direction and the Y-axis direction in order to measure the fiducial member FM located at the position P10 and the fiducial member FM located at the position P11. Namely, the processing unit 1 may not move the processing head 13 in the other one of the X-axis direction and the Y-axis direction. In an example illustrated in FIG. 29A, the position P10 and the position P11 are located at the same position along the Y-axis direction, and thus, the processing unit 1 may move the processing head 13 in the X-axis direction but may not move the processing head 13 in the Y-axis direction in order to measure the fiducial member FM located at the position P10 and the fiducial member FM located at the position P11. However, in this case, it is difficult to calculate the movement error occurring in the movement of the processing head 13 along either one the X-axis direction and the Y-axis direction. Therefore, the processing unit 1 may measure the fiducial member FM located at each of at least two positions that are different from each other along the X-axis direction and may measure the fiducial member FM located at least two positions that are different from each other along the Y-axis direction. For example, as illustrated in FIG. 29B, the processing unit 1 may measure the fiducial member FM located at each of positions P23 and P24 that are different from each other along the X-axis direction, and may measure the fiducial member FM located at each of positions P25 and P26 that are different from each other along the Y-axis direction. In this case, the processing head 13 moves along both of the X-axis direction and the Y-axis direction in the process of measuring the fiducial member FM. As a result, the control unit 2 can calculate the movement error occurring in the movement of the processing head 13 along each of the X-axis direction and the Y-axis direction.

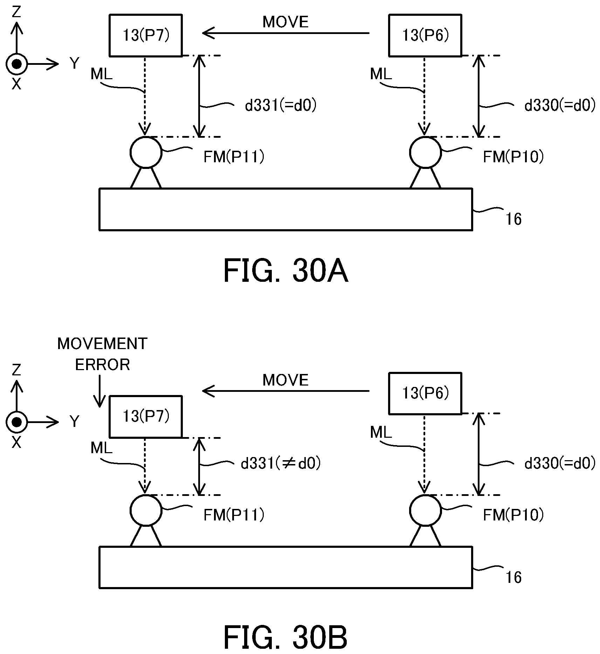

In a case where the rotational radius R is calculated at the step S12 in FIG. 19, the control unit 2 may calculate a three-dimensional position of the fiducial member FM in addition to the distance between the processing head 13 and the fiducial member FM. Specifically, the control unit 2 may calculate the three-dimensional position of the fiducial member FM located at the position P8 and the three-dimensional position of the fiducial member FM located at the position P9. In this case, the control unit 2 may calculate, based on the measured result of the fiducial member FM at the step S14 in FIG. 16 and the three-dimensional position of the fiducial member FM calculated at the step S12 in FIG. 16, the movement error in the Z-axis direction occurring in the movement of the processing head 13 along at least one of the X-axis direction and the Y-axis direction (for example, the movement error E_{ZX} and the movement error E_{ZY} described above). Specifically, the control unit 2 may calculate, based on the three-dimensional position of the fiducial member FM calculated at the step S12 in FIG. 16 and the rotational amount of the stage 16 at the step S13 in FIG. 16, an ideal distance d0 between the processing head 13 and the fiducial member FM at a time at which the fiducial member FM is measured at the step S14 in FIG. 16. Furthermore, the control unit 2 may calculate, based on the measured result of the fiducial member FM at the step S14 in FIG. 16, an actual distance between the processing head 13 and the fiducial member FM at the time at which the fiducial member FM is measured at the step S14 in FIG. 16. For example, the control unit 2 may calculate a distance d330 between the processing head 13 and the fiducial member FM located at the position P10 and a distance d331 between the processing head 13 and the fiducial member FM located at the position P11. Here, in a case where the movement error in the Z-axis direction does not occur, each of the distances d330 and d331 should equal to the ideal distance d0, as illustrated in FIG. 30A. On the other hand, in a case where the movement error in the Z-axis direction occurs, at least one of the distances d330 and d331 is not equal to the ideal distance d0. This is because the processing head 13 moves along not only at least one of the X-axis direction and the Y-axis direction but also the Z-axis direction in the process of moving the processing head 13 from the position P6 to the position P7 in a case where the movement error in the Z-axis direction occurs. Therefore, the control unit 2 may calculate, as a movement error in the Z-axis direction, a difference between the ideal distance d0 and at least one of the distances d330 and d331 calculated from the measured result. Alternatively, the control unit 2 may calculate, as a movement error in the Z-axis direction, a difference between the distances d330 and d331 calculated from the measured result.

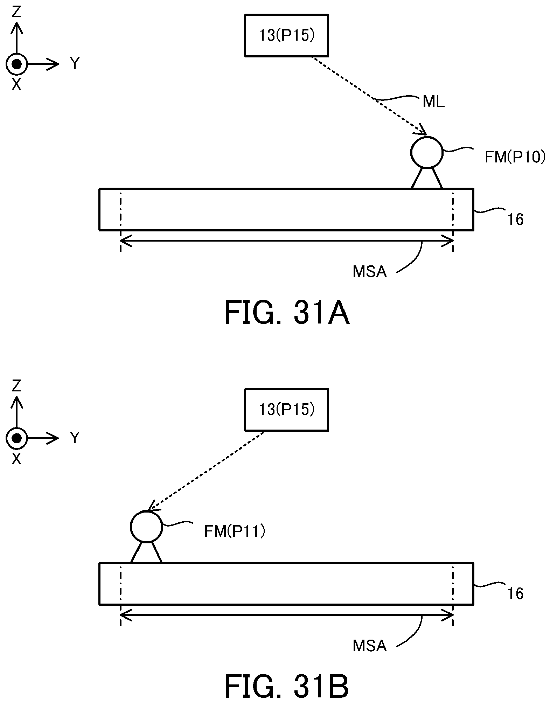

In a case where the rotational radius R is calculated at the step S12 in FIG. 19, the processing unit 1 rotates the stage 16 around the rotational axis AX so that the placement surface 161 on which the fiducial member FM is placed is parallel to the Z-axis direction (see FIG. 17A and FIG. 17B). However, at the step S12, the processing unit 1 may measure the fiducial member FM in a state where the placement surface 161 on which the fiducial member FM is placed is orthogonal to the Z-axis direction. Specifically, as illustrated in FIG. 31A, the processing unit 1 may irradiate the fiducial member FM located at the position P10 (alternatively, at a position different from the position P10, the same is applied in this paragraph) with the measurement light ML from the processing head 13 (especially, the objective optical system 134) located at a position P15. Furthermore, the processing unit 1 may optically receive the returning light RL from the fiducial member FM located at the position P10 by using the processing head 13 located at the position P15. Then, as illustrated in FIG. 31B, the processing unit 1 may irradiate the fiducial member FM located at the position P11 (alternatively, at a position different from the position P11, the same is applied in this paragraph) with the measurement light ML from the processing head 13 (especially, the objective optical system 134) located at the position P15. Furthermore, the processing unit 1 may optically receive the returning light RL from the fiducial member FM located at the position P11 by using the processing head 13 located at the position P15. Therefore, position P15 is a position that satisfies such a condition that both of the fiducial member FM located at the position P10 and the fiducial member FM located at the position P11 are included (namely, both of the position P10 and the position P11 are included) in the measurement shot area MSA of the processing head 13 located at the position P15. Furthermore, if necessary, the processing unit 1 may further measure the fiducial member FM that has moved from the position P11 to a position different from the positions P10 and P11. The processing unit 1 may measure the fiducial member FM each time the stage 16 rotates by a predetermined angle around the rotational axis CX. Then, the control unit 2 may calculate the position (especially the movement trajectory) of the fiducial member FM based on the measured result of the fiducial member FM. Here, since the processing head 13 does not move, the calculated movement trajectory is not affected by the movement error occurring in the movement of the processing head 13. Therefore, the calculated movement trajectory is the actual movement trajectory of the fiducial member FM. Therefore, the control unit 2 may calculate a radius of the calculated movement trajectory (for example, a radius of the movement trajectory projected onto the XY plane) as the rotational radius R of the fiducial member FM. In this case, the stage 16 may not be rotated around the A-axis to calculate the rotational radius R, and thus, an accuracy of the rotational radius R is not affected by the movement error occurring in the movement of the stage 16 around the A-axis. Therefore, the control unit 2 can calculate the rotational radius R with relatively high accuracy.

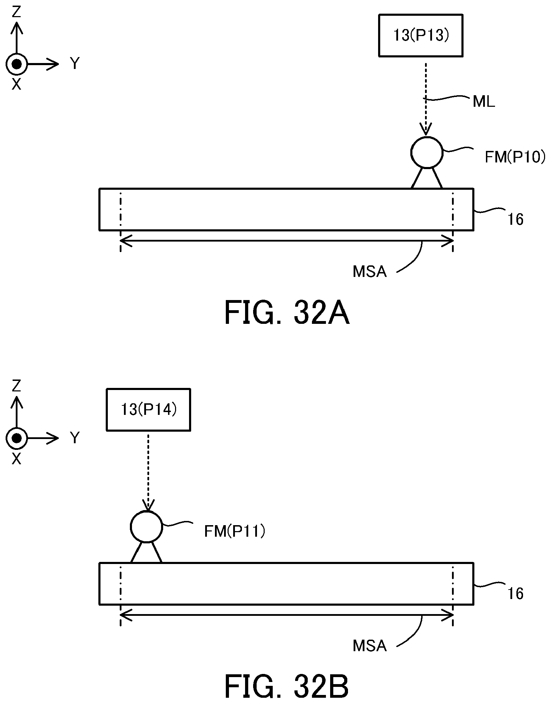

Then, at the step S14 in FIG. 16, the processing unit 1 may measure at least the fiducial member FM located at the position P10 and the fiducial member FM located at the position P11. In this case, as illustrated in FIG. 32A, the processing unit 1 may irradiate the fiducial member FM located at the position P10 with the measurement light ML from the processing head 13 (especially the objective optics 134) located at a position P13 that is different from the position P15. The position P13 is a position that satisfies such a condition that the fiducial member FM located at the position P10 is included (namely, the position P10 is included) in the measurement shot area MSA of the processing head 13 located at the position P13. Furthermore, the processing unit 1 may optically receive the returning light RL from the fiducial member FM located at the position P10 by using the processing head 13 located at the position P13. Then, the processing unit 1 may rotate the stage 16 around the rotational axis CX so that the fiducial member FM located at the position P10 moves from the position P10 to the position P11, as illustrated in FIG. 32B. Furthermore, the processing unit 1 may move the processing head 13 so that the processing head 13 located at the position P13 moves from the position P13 to a position P14 different from the position P13, as illustrated in FIG. 32B. The position P14 is a position that satisfies such a condition that the fiducial member FM located at the position P11 is included (namely, the position P11 is included) in the measurement shot area MSA of the processing head 13 located at the position P14. Then, the processing unit 1 may irradiate the fiducial member FM located at the position P11 with the measurement light ML from the processing head 13 (especially, the objective optical system 134) located at the position P14, as illustrated in FIG. 32B. Furthermore, the processing unit 1 may optically receive the returning light RL from the fiducial member FM located at the position P11 by using the processing head 13 located at the position P14.

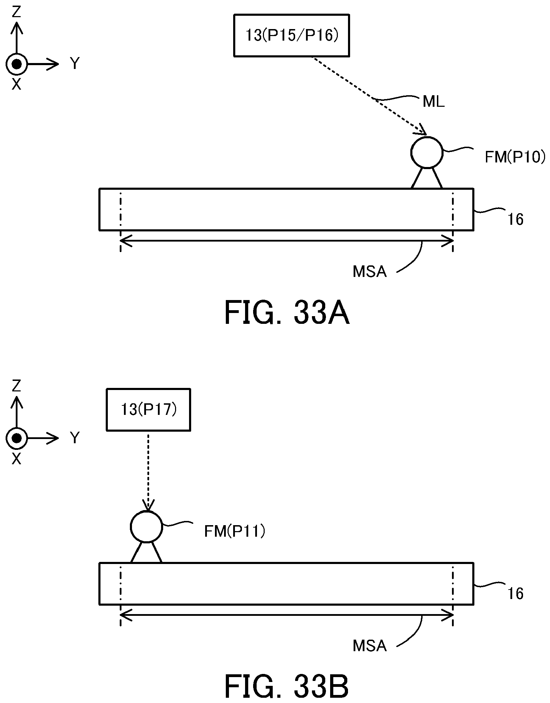

Alternatively, as illustrated in FIG. 33A, the processing unit 1 may irradiate the fiducial member FM located at the position P10 with the measurement light ML from the processing head 13 (especially, the objective optical system 134) located at a position P16 that is same as the position P15 at which the processing head 13 is located to calculate the rotational radius R. Furthermore, the processing unit 1 may optically receive the returning light RL from the fiducial member FM located at the position P10 by using the processing head 13 located at the position P16. Then, the processing unit 1 may rotate the stage 16 around the rotational axis CX so that the fiducial member FM located at the position P10 moves from the position P10 to the position P11, as illustrated in FIG. 33B. Furthermore, the processing unit 1 may move the processing head 13 so that the processing head 13 located at the position P16 moves from the position P16 to a position P17 different from the position P16, as illustrated in FIG. 33B. The position P17 is a position that satisfies such a condition that the fiducial member FM located at the position P11 is included (namely, the position P11 is included) in the measurement shot area MSA of the processing head 13 located at the position P17. Then, the processing unit 1 may irradiate the fiducial member FM located at the position P11 with the measurement light ML from the processing head 13 (especially, the objective optical system 134) located at the position P17, as illustrated in FIG. 33B. Furthermore, the processing unit 1 may optically receive the returning light RL from the fiducial member FM located at the position P11 by using the processing head 13 located at the position P17.

The control unit 2 may calculate the movement error of the stage 16 based on the rotational radius R of the fiducial member FM calculated by the first radius calculation operation and the moving distance of the fiducial member FM in the second radius calculation operation. Specifically, in a case where the rotational radius R of the fiducial member FM is calculated by the first radius calculation operation, the control unit 2 may calculate, from the rotational radius R, a target value of the moving distance (for example, d92-d82 illustrated in FIG. 25) of the fiducial member FM in a case where the stage 16 is rotated from the initial state around the rotational axis CX by a desired rotational angle (for example, 180 degrees, a rotation angle smaller than 180 degrees, or a rotation angle larger than 180 degrees) toward each of the clockwise direction and the counterclockwise direction by the second radius calculation operation. On the other hand, the control unit 2 may calculate, based on the measured result of the fiducial member FM in the second radius calculation operation, an actual moving distance of the fiducial member FM in a case where the stage 16 is rotated around the rotational axis CX by the desired rotational angle. In a case where the movement error of the stage 16 does not occur, the target value of the moving distance of the measurement member FM is equal to the actual moving distance of the measurement member FM. On the other hand, in a case where the movement error of the stage 16 occurs, the target value of the moving distance of the measurement member FM is not equal to the actual moving distance of the measurement member FM. Therefore, the control unit 2 may calculate the movement error of the stage 16 by comparing the target value of the moving distance of the measurement member FM with the actual moving distance of the measurement member FM. Note that the same is true not only in a case where the stage 16 is rotated from the initial state by the desired rotational angle toward each of the clockwise direction and the counterclockwise direction, but also in a case where the stage 16 is rotated by the desired rotational angle in any direction.

In the above-described description, in FIG. 16, the processing system SYS calculates the rotational radius R of the fiducial member FM (the step S12), and then measures the fiducial member FM while rotating the stage 16 around the rotational axis CX (the step S14). However, the processing system SYS may measure the fiducial member FM while rotating the stage 16 around the rotational axis CX (the step S14), and then calculate the rotational radius R of the fiducial member FM (the step S12). Namely, the processing system SYS may change an order in which the operation at the step S12 and the operation at the step S14 are performed. Even in this case, the control unit 2 can calculate the movement error. The processing system SYS may arbitrarily change the order of each operation illustrated in FIG. 16 as long as it is possible to calculate the movement error.

In the above-described description, the operation at the step S12 in FIG. 16 (namely, at least one of the first and second radius calculation operations to calculate the rotational radius R) is performed to calculate the movement error. However, the processing system SYS may perform the operation at the step S12 in FIG. 16 for a purpose that is different from a purpose of calculating the movement error. The processing system SYS may perform the operation at the step S12 in FIG. 16 independently of the calculation of the movement error. For example, the processing system SYS may perform the operation at the step S12 in FIG. 16 to calculate a degree of at least one of the thermal expansion and the thermal contraction of the placement surface 161 of the stage 16. Specifically, the processing system SYS may calculate the rotational radius R in advance as a reference rotational radius R0 by at least one of the first and second radius calculation operations in a situation where the processing system SYS is placed in a reference environment. Then, the processing system SYS may calculate the degree of at least one of the thermal expansion and the thermal contraction of the placement surface 161 of the stage 16 based on the rotational radius R calculated by performing at least one of the first and second radius calculation operations again and the reference rotational radius R0.

### (3-3) Other Modified Example

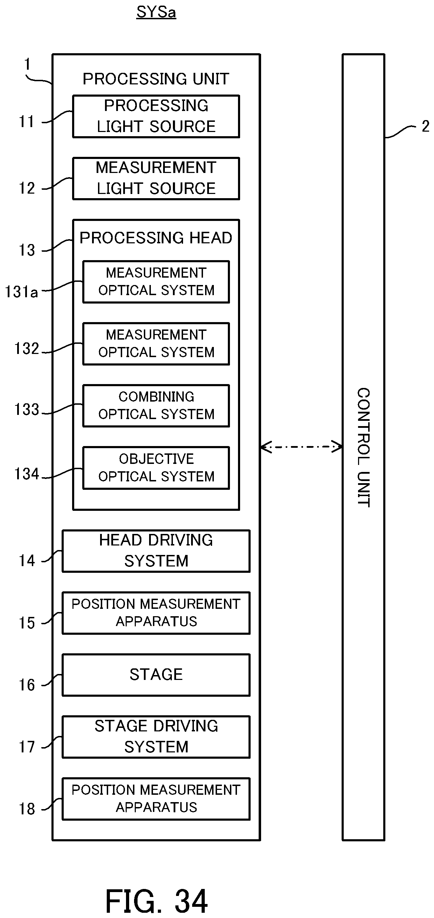

In the above-described description, the processing system SYS that is configured to process the workpiece W performs the movement error calculation operation. However, a measurement system SYSa that is configured to measure the measurement target object M such as the workpiece W may perform at least one of the optical calibration operation, the movement error calculation operation, and the deformation error calculation operation described above. One example of a configuration of the measurement system SYSa is illustrated in FIG. 34. As illustrated in FIG. 34, the measurement system SYSa may be different from the processing system SYS in that it includes a measurement unit 1a instead of the processing unit 1. The measurement unit 1a may be different from the processing unit 1 in that it includes a measurement light source 11a instead of the processing light source 11 and it includes a measurement head 13a instead of the processing head 13. The measurement light source 11a is configured to generate measurement light. The measurement head 13a may be different from the processing head 13 in that it includes, instead of the processing optical system 131, a measurement optical system 131a for irradiating the measurement target object M with the measurement light generated by the measurement light source 11a. Other feature of the measurement system SYSa may be the same as other feature of the processing system SYS. The optical calibration operation performed by the measurement system SYSa may be an operation for performing an alignment of a target irradiation position that is irradiated with the measurement light (namely, the measurement light from the measurement optical system 131a) by the measurement head 13a and the target irradiation position MA that is irradiated with the measurement light ML (namely, the measurement light ML from the measurement optical system 132) by the measurement head 13a. The movement error calculation operation performed by the measurement system SYSa may be an operation for calculating a movement error occurring in a movement of at least one of the measurement head 13a and the stage 16. The deformation error calculation operation performed by the measurement system SYSa may be an operation for calculating a movement error occurring in the movement of at least one of the measurement head 13a and the stage 16 due to a deformation of a member of the measurement unit 1a.

The measurement optical system 132 may be detachably attached to the processing head 13. In this case, the measurement optical system 132 may be attached to the processing head 13 when the fiducial member FM is irradiated with the measurement light ML. On the other hand, when the processing head 13 processes the workpiece W, the measurement optical system 132 may be detached from the processing head 13.

In the above-described description, the processing system SYS processes the workpiece W by irradiating the workpiece W with the processing light EL. Namely, the processing system SYS processes the workpiece W by irradiating the workpiece W with an energy beam in the form of light. However, the processing system SYS may process the workpiece W by irradiating the workpiece W with any energy beam that is different from the light. At least one of a charged particle beam and an electromagnetic wave is one example of any energy beam. A least one of an electron beam and an ion beam is one example of the charged particle beam. Moreover, in the above-described description, the processing system SYS processes the workpiece W by irradiating the workpiece W with the measurement light ML. However, the processing system SYS may measure the workpiece W by irradiating the workpiece W with any energy beam that is different from the light.

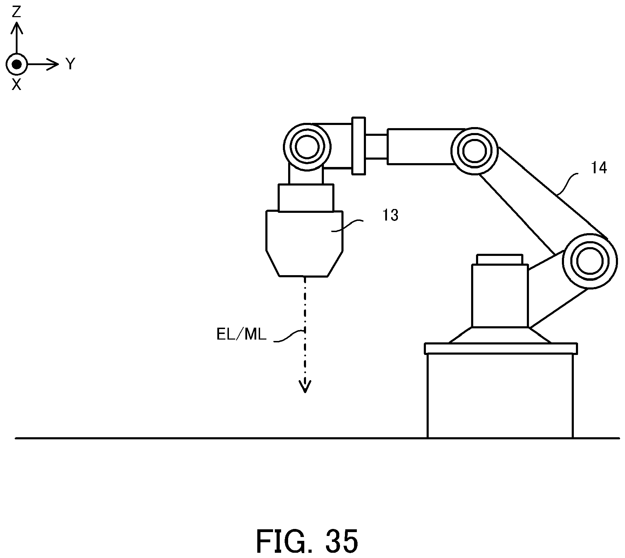

As illustrated in FIG. 35, the head driving system 14 may include a robotic arm. Namely, the head driving system 14 may move the processing head 13 by using the robotic arm. The robotic arm may be a manipulator with a degree of freedom having three or more axes. The robotic arm may serve as a robot having a so-called vertical articulated structure. The robotic arm may serve as a robot-polar-coordinate type of robot having a horizontal articulated structure. The robotic arm may serve as a cylindrical-coordinate type of robot. The robotic arm may serve as a Cartesian-coordinate type of robot. The robotic arm may serve as a parallel-link type of robot. The processing head 13 may be attached to an end of the robotic arm. Namely, the processing head 13 may be attached to the robotic arm as an end effector. Incidentally, the stage driving system 17 may also include a robotic arm although it is not illustrated. Namely, the stage driving system 17 may move the stage 16 by using the robotic arm.

### (9) Supplementary Note

Regarding the above described example embodiment, below described supplementary notes are further disclosed.

### [Supplementary Note 1]

A processing system including:
a placing apparatus on which a workpiece is allowed to be placed and on which a fiducial member that is different from the workpiece is allowed to be placed;
a processing apparatus that is configured to irradiate the workpiece with a processing beam for processing the workpiece through an objective optical system;
a light detection apparatus that is configured to irradiate the fiducial member with a measurement beam through the objective optical system and that is configured to optically receive, through the objective optical system, at least a part of light from the fiducial member that is generated by an irradiation of the measurement light;
a processing head that includes the objective optical system;
a rotation apparatus that rotates the placing apparatus; and
a calculation unit;
wherein
the light detection apparatus acquires a first detected result by irradiating the fiducial member located at a first position with the measurement beam and acquires a second detected result by irradiating the fiducial member, which has moved from the first position to a second position different from the first position by the rotation apparatus, with the measurement beam,
the calculation unit calculates a movement error occurring in a movement of at least one of the placing apparatus and the processing head based on position information of the fiducial member obtained by using the first detected result and position information of the fiducial member obtained by using the second detected result.

### [Supplementary Note 2]

The processing system according to the Supplementary Note 1, wherein
the light detection apparatus irradiates the fiducial member located at the first position with the measurement beam through the objective optical system located at a third position, and irradiates the fiducial member located at the second position with the measurement beam through the objective optical system located at the third position.

### [Supplementary Note 3]

The processing system according to the Supplementary Note 2, wherein
the light detection apparatus is configured to deflect the measurement beam so that a measurement area is scanned by the measurement beam,
the first and second positions are located in the measurement area that is scannable by the measurement beam from the objective optical system located at the third position.

### [Supplementary Note 4]

The processing system according to any one of the Supplementary Notes 1 to 3, wherein
the movement error calculated by the calculation unit includes a movement error occurring in the movement of the placing apparatus by the rotation apparatus.

### [Supplementary Note 5]

The processing system according to any one of the Supplementary Notes 1 to 4 further including a movement apparatus that moves the processing head along a movement axis that intersects with an optical axis of the objective optical system, wherein
the light detection apparatus optically receives the light from the fiducial member by irradiating the fiducial member located at the first position with the measurement beam through the objective optical system located at a fourth position,
then, the rotation apparatus rotates the placing apparatus so that the fiducial member moves from the first position to the second position, and the movement apparatus moves the objective optical system so that the obj ective optical system moves from the fourth position to a fifth position that is different form the fourth position,
then,, the light detection apparatus optically receives the light from the fiducial member by irradiating the fiducial member located at the second position with the measurement beam through the objective optical system located at the fifth position.

### [Supplementary Note 6]

The processing system according to any one of the Supplementary Notes 1 to 5 further including a movement apparatus that moves the processing head along a movement axis, wherein
the light detection apparatus optically receives the light from the fiducial member by irradiating the fiducial member located at a eighth position and the fiducial member located at a ninth position with the measurement beam through the objective optical system and then irradiating the fiducial member located at a tenth position with the measurement beam through the objective optical system located at a sixth position,
then, the rotation apparatus rotates the placing apparatus so that the fiducial member moves from the tenth position to a eleventh position that is different from the tenth position, and the movement apparatus moves the objective optical system so that the objective optical system moves from the sixth position to a seventh position that is different form the sixth position,
then,, the light detection apparatus optically receives the light from the fiducial member by irradiating the fiducial member located at the eleventh position with the measurement beam through the objective optical system located at the seventh position.

### [Supplementary Note 7]

The processing system according to any one of the Supplementary Notes 1 to 6 further including a control unit that controls the processing apparatus and the light detection apparatus, wherein
the control unit adjusts a relationship between a processing position that is irradiated with the processing beam and a measurement position that is irradiated with the measurement beam.

### [Supplementary Note 8]

The processing system according to any one of the Supplementary Notes 1 to 7 further including a control unit that controls the processing apparatus and the light detection apparatus, wherein
the control unit controls the light detection apparatus, based on a relationship between a processing position that is irradiated with the processing beam and a measurement position that is irradiated with the measurement beam, to irradiate the fiducial member located at the first position and the fiducial member located at the second position with the measurement beam.

### [Supplementary Note 9]

The processing system according to any one of the Supplementary Notes 1 to 8 further including a control unit that controls the processing apparatus and the light detection apparatus, wherein
the control unit adjusts a relationship between a processing position that is irradiated with the processing beam and a measurement position that is irradiated with the measurement beam and then controls the light detection apparatus to irradiate the fiducial member located at the first position and the fiducial member located at the second position with the measurement beam.

### [Supplementary Note 10]

The processing system according to any one of the Supplementary Notes 1 to 9 further including a movement apparatus that moves the processing head along a movement axis, wherein
the movement error calculated by the calculation unit includes at least one of a movement error occurring in the movement of the placing apparatus by the rotation apparatus and a movement error occurring in the movement of the placing apparatus by the movement apparatus.

### [Supplementary Note 11]

The processing system according to any one of the Supplementary Notes 1 to 10, wherein
the light detection apparatus is configured to irradiate the workpiece with the measurement beam through the objective optical system and is configured to optically receive, through the objective optical system, at least a part of light from the workpiece that is generated by an irradiation of the measurement light,
a processing position that is irradiated with the processing beam is controlled based on at least one of a position and a shape of at least a part of the workpiece that is obtained by using a detected result by the light detection apparatus by the irradiation of the measurement beam to the workpiece.

### [Supplementary Note 12]

A processing system including:
a placing apparatus on which a workpiece is allowed to be placed and on which a fiducial member that is different from the workpiece is allowed to be placed;
a light detection apparatus that is configured to irradiate the fiducial member with a measurement beam for measuring the fiducial member and that is configured to optically receive at least a part of light from the fiducial member that is generated by an irradiation of the measurement light through an objective optical system;
a rotation apparatus that is configured to rotate the placing apparatus around each of a first axis and a second axis that intersects with the first axis;
a movement apparatus that moves a processing head including at least the objective optical system along a movement axis; and
a calculation unit;
wherein
the rotation apparatus moves the fiducial member from an eighth position to a ninth position by rotating the placing apparatus around the first axis and moves the fiducial member from a tenth position to an eleventh position by rotating the placing apparatus around the second axis,
the light detection apparatus acquires an eighth detected result by irradiating the fiducial member located at the eighth position with the measurement beam through the objective optical system located at a twelfth position, acquires a ninth detected result by irradiating the fiducial member that has moved to the ninth position with the measurement beam through the objective optical system located at the twelfth position, acquires a tenth detected result by irradiating the fiducial member located at the tenth position with the measurement beam through the objective optical system located at a thirteenth position, and acquires an eleventh detected result by irradiating the fiducial member located at the eleventh position with the measurement beam through the objective optical system located at the thirteenth position or a fourteenth position different from the thirteenth position,
the calculation unit calculates a movement error occurring in a movement of at least one of the placing apparatus and the processing head based on position information of the fiducial member obtained by using the eighth detected result, position information of the fiducial member obtained by using the ninth detected result, position information of the fiducial member obtained by using the tenth detected result and position information of the fiducial member obtained by using the eleventh detected result.

### [Supplementary Note 13]

The processing system according to the Supplementary Note 12, wherein
the placing apparatus includes a placement surface on which the fiducial member is placed,
the rotation apparatus is configured to rotate the placement apparatus around the first axis so that the placement surface is parallel to a gravity direction and the placement surface is orthogonal to the gravity direction,
the rotation apparatus is configured to move the fiducial member from the eighth position to the ninth position by rotating the placing apparatus around the second axis in a case where the placement surface is parallel to the gravity direction,
the rotation apparatus is configured to move the fiducial member from the tenth position to the eleventh position by rotating the placing apparatus around the second axis in a case where the placement surface is orthogonal to the gravity direction.

### [Supplementary Note 14]

The processing system according to the Supplementary Note 12 or 13, wherein
the placing apparatus includes a placement surface on which the fiducial member is placed,
the rotation apparatus rotates the placement apparatus around the first axis that is along the placement surface so that the placement surface becomes a surface along a propagating direction of the measurement beam,
after the placement surface becomes the surface along a propagating direction of the measurement beam, (i) the light detection apparatus irradiates the fiducial member located at the eighth position with the measurement beam through the objective optical system located at the twelfth position, then, (ii) the rotation apparatus rotates the placement apparatus around the second axis that intersects with both of the placement surface and the first axis so that the fiducial member moves from the eighth position to the ninth position, and then, (iii) the light detection apparatus irradiates the fiducial member located at the ninth position with the measurement beam through the objective optical system located at the twelfth position.

### [Supplementary Note 15]

The processing system according to any one of the Supplementary Notes 12 to 14, wherein
the eight position and the ninth position are aligned along a propagating direction of the measurement light.

### [Supplementary Note 16]

The processing system according to any one of the Supplementary Notes 12 to 15, wherein
the eight position and the ninth position are located at a same position in a direction along a plane intersecting with a propagating direction of the measurement light and are located at different positions in a direction along the propagating direction of the measurement light.

### [Supplementary Note 17]

The processing system according to any one of the Supplementary Notes 12 to 16, wherein
the rotation apparatus rotates the placing apparatus around the second axis so that the eight position and the ninth position are located at two positions at which a circle whose center is the second axis intersects with a line passing through the center of the circle.

### [Supplementary Note 18]

The processing system according to any one of the Supplementary Notes 12 to 17, wherein
the rotation apparatus moves the fiducial member from the eighth position to the ninth position by rotating the placement apparatus around the second axis by 180 degrees.

### [Supplementary Note 19]

The processing system according to any one of the Supplementary Notes 12 to 18, wherein
the rotation apparatus performs an operation for rotating the placing apparatus so that the fiducial member moves from the eighth position to the ninth position a plurality of number of times while changing a rotational angle,
the light detection apparatus irradiates the fiducial member located at the eighth position and the fiducial member located at the ninth position with the measurement beam each time the rotation apparatus performs the operation for rotating the placing apparatus.

### [Supplementary Note 20]

The processing system according to any one of the Supplementary Notes 12 to 19, wherein
the fiducial member includes both of a curved surface and a planar surface,
the light detection apparatus irradiates the planar surface of the fiducial member located at the eighth position and the planar surface of the fiducial member located at the ninth position with the measurement beam,
the light detection apparatus irradiates the curved surface of the fiducial member located at the tenth position and the curved surface of the fiducial member located at the eleventh position with the measurement beam.

### [Supplementary Note 21]

The processing system according to any one of the Supplementary Notes 12 to 20, wherein
the light detection apparatus is configured to irradiate the workpiece with a processing beam and is configured to irradiates the fiducial member with the measurement beam through the objective optical system.

### [Supplementary Note 22]

The processing system according to any one of the Supplementary Notes 12 to 21, wherein
the movement apparatus moves the objective optical system so that the objective optical system of the processing head follows the fiducial member that is moved by the rotation apparatus rotating the placing apparatus.

### [Supplementary Note 23]

The processing system according to any one of the Supplementary Notes 12 to 22 further including a control unit that controls the movement apparatus based on position information of the fiducial member obtained by using each of the eighth detected result and the ninth detected result and position information of the fiducial member obtained by using each of the tenth detected result and the eleventh detected result.

### [Supplementary Note 24]

The processing system according to the Supplementary Note 23, wherein,
the calculation unit (i) calculates an ideal movement trajectory of the fiducial member that is moved by the rotation apparatus rotating the placing apparatus based on the position information of the fiducial member obtained by using each of the eighth detected result and the ninth detected result, and (ii) calculates an actual measured result of a trajectory of the fiducial member based on the position information of the fiducial member obtained by using each of the tenth detected result and the eleventh detected result,
the movement apparatus is controlled based on a difference between the ideal trajectory of the fiducial member and the actual measured result of the trajectory of the fiducial member.

### [Supplementary Note 25]

The processing system according to any one of the Supplementary Notes 1 to 24, wherein
the fiducial member includes at least one of a curved surface and a planar surface.

### [Supplementary Note 26]

The processing system according to any one of the Supplementary Notes 1 to 25, wherein
the rotation apparatus is controlled based on position information of the fiducial member obtained by using the measurement beam.

### [Supplementary Note 27]

The processing system according to any one of the Supplementary Notes 1 to 4 further including a movement apparatus that moves the objective optical system along a movement axis, wherein
the movement apparatus is controlled based on position information of the fiducial member obtained by using the measurement beam.

### [Supplementary Note 28]

The processing system according to any one of the Supplementary Notes 12 to 24 further including a control unit that controls the movement apparatus based on position information of the fiducial member obtained by using the measurement beam.

### [Supplementary Note 29]

The processing system according to any one of the Supplementary Notes 12 to 24, wherein
the movement apparatus moves the processing head along each of a first movement axis, a second movement axis that intersects with the first movement axis, and a third movement axis that intersects with the first to second movement axes,
the calculation unit calculates the movement error occurring in the movement of the processing head along at least one of the first to third movement axes,
the movement apparatus moves the processing head to cancel the movement error based on the movement error calculated by the calculation unit.

### [Supplementary Note 30]

The processing system according to any one of the Supplementary Notes 1 to 13, wherein
the rotation apparatus is configured to rotate the placing apparatus around a first axis,
the calculation unit calculates the movement error occurring in the movement of the placing apparatus along a rotational direction around the first axis,
the rotation apparatus moves the placing apparatus to cancel the movement error based on the movement error calculated by the calculation unit.

### [Supplementary Note 31]

The processing system according to any one of the Supplementary Notes 1 to 13 and 30 further including a movement apparatus that moves the processing head along a first movement axis extending along a vertical direction,
the calculation unit calculates the movement error occurring in the movement of the processing head along the first movement axis,
the movement apparatus moves the processing head to cancel the movement error based on the movement error calculated by the calculation unit.

### [Supplementary Note 32]

The processing system according to any one of the Supplementary Notes 1 to 13 and 30 to 31 further including a movement apparatus that moves the processing head along each of a second movement axis that extends along a horizontal direction and a third movement axis that extends along the horizontal direction and that intersects with the second movement axis,
the calculation unit calculates the movement error occurring in the movement of the processing head along at least one of the second to third movement axes,
the movement apparatus moves the processing head to cancel the movement error based on the movement error calculated by the calculation unit.

### [Supplementary Note 33]

The processing system according to any one of the Supplementary Notes 1 to 32, wherein
the light detection apparatus is configured to irradiate the workpiece with the measurement beam through the objective optical system and is configured to optically receive, through the objective optical system, at least a part of light from the workpiece that is generated by an irradiation of the measurement light in at least one of a first period before staring the processing of the workpiece, a second period during which the workpiece is processed, and a third period after completing the processing of the workpiece,
the calculation unit calculates at least one of a position and a shape of at least a part of the workpiece based on a detected result by the light detection apparatus by the irradiation of the measurement beam to the workpiece.

### [Supplementary Note 34]

A processing system including:
a placing apparatus on which a workpiece is allowed to be placed and on which a fiducial member that is different from the workpiece is allowed to be placed;
a processing apparatus for processing the workpiece;
a light detection apparatus that is configured to irradiate the fiducial member with a measurement beam through an objective optical system and that is configured to optically receive at least a part of light from the fiducial member that is generated by an irradiation of the measurement light;
a processing head that includes at least the objective optical system and a part of the processing apparatus; and
a driving apparatus that moves the placing apparatus,
wherein
the light detection apparatus irradiates the fiducial member located at a first position with the measurement beam, and irradiates the fiducial member that has moved from the first position to a second position different from the second position by the driving apparatus with the measurement beam.

### [Supplementary Note 35]

A processing system including:
a placing apparatus on which a workpiece is allowed to be placed and on which a fiducial member that is different from the workpiece is allowed to be placed;
a light detection apparatus that is configured to irradiate the fiducial member with a measurement beam for measuring the fiducial member through an objective optical system and that is configured to optically receive at least a part of light from the fiducial member that is generated by an irradiation of the measurement light; and
a driving apparatus that moves the placing apparatus,
wherein
the light detection apparatus irradiates the fiducial member located at an eighth position with the measurement beam through the objective optical system located at a twelfth position, and irradiates the fiducial member that has moved to the ninth position with the measurement beam through the objective optical system located at the twelfth position.

### [Supplementary Note 36]

A processing system including:
a placing apparatus on which a workpiece is allowed to be placed and on which a fiducial member that is different from the workpiece is allowed to be placed;
a light detection apparatus that is configured to irradiate the fiducial member with a measurement beam for measuring the fiducial member through an objective optical system and that is configured to optically receive at least a part of light from the fiducial member that is generated by an irradiation of the measurement light; and
a driving system that moves the placing apparatus,
wherein
the light detection apparatus irradiates the fiducial member located at a tenth position with the measurement beam through the objective optical system located at a fifteenth position, irradiates the fiducial member that has moved to an eleventh position with the measurement beam through the objective optical system located at the fifteenth position, furthermore, irradiates the fiducial member located at the tenth position with the measurement beam through the objective optical system located at a thirteenth position, and irradiates the fiducial member that has moved to the eleventh position with the measurement beam through the objective optical system located at a fourteenth position.

### [Supplementary Note 37]

A processing system including:
a placing apparatus on which a workpiece is allowed to be placed and on which a fiducial member that is different from the workpiece is allowed to be placed;
a light detection apparatus that is configured to irradiate the fiducial member with a measurement beam for measuring the fiducial member through an objective optical system and that is configured to optically receive at least a part of light from the fiducial member that is generated by an irradiation of the measurement light; and
a driving system that moves the placing apparatus,
wherein
the light detection apparatus irradiates the fiducial member located at a tenth position with the measurement beam through the objective optical system located at a sixteenth position, and irradiates the fiducial member that has moved to an eleventh position with the measurement beam through the objective optical system located at the sixteenth position, furthermore, irradiates the fiducial member that has moved to the eleventh position with the measurement beam through the objective optical system located at a seventeenth position.

### [Supplementary Note 38]

A movement error calculation system that calculates a movement error occurring in a movement of at least one of a placing apparatus and a processing head in a machine tool, the machine tool processing a workpiece by using the processing head while moving at least one of the placing apparatus on which the workpiece is rotatably placed and the processing head,
wherein
the movement error calculation system includes:
a light detection apparatus that irradiates a fiducial member placed on the placing apparatus with a measurement beam through an objective optical system attached to the processing head and optically receives, through the objective optical system, at least a part of light from the fiducial member that is generated by an irradiation of the measurement light; and
a calculation unit,
the light detection apparatus acquires a first detected result by irradiating the fiducial member located at a first position with the measurement beam and acquires a second detected result by irradiating the fiducial member, which has moved from the first position to a second position different from the first position by a rotation of the fiducial member placed on the placing apparatus, with the measurement beam,
the calculation unit calculates the movement error occurring in the movement of at least one of the placing apparatus and the processing head based on position information of the fiducial member obtained by using the first detected result and position information of the fiducial member obtained by using the second detected result.

### [Supplementary Note 39]

The movement error system according to the Supplementary Note 38, wherein
the processing head is configured to irradiate the workpiece with a processing beam for processing the workpiece through the objective optical system.

### [Supplementary Note 40]

The movement error system according to the Supplementary Note 38 or 39, wherein
the machine tool includes a rotation apparatus that rotates at least one of the workpiece and the fiducial member by rotating the placing apparatus.

### [Supplementary Note 41]

The movement error system according to any one of the Supplementary Notes 38 to 40, wherein
the machine tool includes a movement apparatus that moves the processing head to follow the rotating fiducial member,
the light detection apparatus acquires the first detected result by irradiating the fiducial member with the measurement beam through the objective optical system of the processing head that is located at a third position by following the fiducial member located at the first position, and acquires the second detected result by irradiating the fiducial member with the measurement beam through the objective optical system of the processing head that is located at a fourth position by following the fiducial member located at the second position.

### [Supplementary Note 42]

The movement error system according to any one of the Supplementary Notes 38 to 41, wherein
the light detection apparatus irradiates at least one of the workpiece and the fiducial member with the measurement beam along a first optical path, and optical receives, through the objective optical system, light propagating along the first optical path of the light generated by the irradiation of the measurement beam.

### [Supplementary Note 43]

A movement error calculation method for calculating a movement error occurring in a movement of at least one of a placing apparatus and a processing head in a machine tool, the machine tool processing a workpiece by using the processing head while moving at least one of the placing apparatus on which the workpiece is rotatably placed and the processing head,
wherein
the movement error calculation method includes:
irradiating a fiducial member that is placed on the placing apparatus and that is located at a first position with a measurement beam through an objective optical system attached to the processing head;
optically receiving, through the objective optical system, at least a part of light that is from the fiducial member located at the first position and that is generated by an irradiation of the measurement light;
irradiating the fiducial member located at a second position different from the first position with the measurement beam through the objective optical system after rotating the fiducial member placed on the placing apparatus;
optically receiving at least a part of light that is from the fiducial member located at the second position and that is generated by an irradiation of the measurement light; and
calculating the movement error based on a detected result related to the fiducial member located at the first position and a detected result related to the fiducial member located at the second position.

### [Supplementary Note 44]

A processing system including:
a placing apparatus on which the workpiece is placed;
a processing head that processes the workpiece placed on the placing apparatus;
a rotation apparatus that rotationally moves the placing apparatus;
a light detection apparatus that irradiates a fiducial member placed on the placing apparatus with a measurement beam through an objective optical system attached to the processing head and optically receives, through the objective optical system, at least a part of light from the fiducial member that is generated by an irradiation of the measurement light; and
a control unit that controls the rotation apparatus and the light detection apparatus to irradiate the fiducial member located at a first position with the measurement beam and to irradiate the fiducial member, which has rotationally moved from the first position to a second position different from the first position by the rotation apparatus, with the measurement beam,
the workpiece is processed based on a detected result related to the fiducial member located at the first position and a detected result related to the fiducial member located at the second position.

### [Supplementary Note 45]

The processing system according to the Supplementary Note 44, wherein,
the light detection apparatus is attached to the processing head in a case where the fiducial member is irradiated with the measurement beam,
the light detection apparatus is detached from the processing head in a case where the processing head processing the workpiece.

### [Supplementary Note 46]

A measurement system including:
a placing apparatus on which the workpiece is placed;
a measurement head that measures the workpiece placed on the placing apparatus;
a rotation apparatus that rotationally moves the placing apparatus;
a light detection apparatus that irradiates a fiducial member placed on the placing apparatus with a measurement beam through an objective optical system attached to the measurement head and optically receives, through the objective optical system, at least a part of light from the fiducial member that is generated by an irradiation of the measurement light; and
a control unit that controls the rotation apparatus and the light detection apparatus to irradiate the fiducial member located at a first position with the measurement beam and to irradiate the fiducial member, which has rotationally moved from the first position to a second position different from the first position by the rotation apparatus, with the measurement beam,
the workpiece is measured based on a detected result related to the fiducial member located at the first position and a detected result related to the fiducial member located at the second position.

### [Supplementary Note 47]

A movement error calculation system that calculates a movement error occurring in a movement of at least one of a placing apparatus and a measurement head in a measurement apparatus, the measurement apparatus measuring a workpiece by using the measurement head while moving at least one of the placing apparatus on which the workpiece is rotatably placed and the measurement head,
wherein
the movement error calculation system includes:
a light detection apparatus that irradiates a fiducial member placed on the placing apparatus with a measurement beam through an objective optical system attached to the measurement head and optically receives, through the objective optical system, at least a part of light from the fiducial member that is generated by an irradiation of the measurement light; and
a calculation unit,
the light detection apparatus acquires a first detected result by irradiating the fiducial member located at a first position with the measurement beam and acquires a second detected result by irradiating the fiducial member, which has moved from the first position to a second position different from the first position by a rotation of the fiducial member, with the measurement beam,
the calculation unit calculates the movement error occurring in the movement of at least one of the placing apparatus and the measurement head based on position information of the fiducial member obtained by using the first detected result and position information of the fiducial member obtained by using the second detected result.

The feature of each example embodiment described above is allowed to be combined appropriately. A part of the feature of each example embodiment described above may not be used. The feature of each example embodiment described above may be allowed to be replaced by the feature of other example embodiment, if needed. Moreover, the disclosures of all publications and United States patents that are cited in each example embodiment described above are incorporated in the disclosures of the present application by reference if it is legally permitted.

The present invention is allowed to be changed, if desired, without departing from the essence or spirit of the invention which can be read from the claims and the entire specification, and a processing system, a movement error calculation system, a movement error calculation method, and a measurement system, each of which involves such changes, are also intended to be within the technical scope of the present invention.

### Description of Reference Codes

- SYS: processing system
- 1: processing unit
- 13: processing head
- 131: processing optical system
- 132: measurement optical system
- 1323, 1326: detector
- 133: combining optical system
- 134: objective optical system
- 1342: fθ lens
- 14: head driving system
- 16: stage
- 17: stage driving system
- 2: control unit
- 3: housing
- 4: measurement member
- 41: beam profiler
- W: workpiece
- M: measurement target object
- FM: fiducial member
- EL: processing light
- ML: measurement light
- PA, MA: target irradiation area
- PSA: processing shot area
- MSA: measurement shot area

## Claims

1. A processing system comprising:
a placing apparatus on which a workpiece is allowed to be placed and on which a fiducial member that is different from the workpiece is allowed to be placed;
a processing apparatus that is configured to irradiate the workpiece with a processing beam for processing the workpiece through an objective optical system;
a light detection apparatus that is configured to irradiate the fiducial member with a measurement beam through the objective optical system and that is configured to optically receive, through the objective optical system, at least a part of light from the fiducial member that is generated by an irradiation of the measurement light;
a processing head that includes the objective optical system;
a rotation apparatus that rotates the placing apparatus; and
a calculation unit;
wherein
the light detection apparatus acquires a first detected result by irradiating the fiducial member located at a first position with the measurement beam and acquires a second detected result by irradiating the fiducial member, which has moved from the first position to a second position different from the first position by the rotation apparatus, with the measurement beam,
the calculation unit calculates a movement error occurring in a movement of at least one of the placing apparatus and the processing head based on position information of the fiducial member obtained by using the first detected result and position information of the fiducial member obtained by using the second detected result.

2. The processing system according to claim 1, wherein
the light detection apparatus irradiates the fiducial member located at the first position with the measurement beam through the objective optical system located at a third position, and irradiates the fiducial member located at the second position with the measurement beam through the objective optical system located at the third position.

3. The processing system according to claim 2, wherein
the light detection apparatus is configured to deflect the measurement beam so that a measurement area is scanned by the measurement beam,
the first and second positions are located in the measurement area that is scannable by the measurement beam from the objective optical system located at the third position.

4. The processing system according to any one of claims 1 to 3, wherein
the movement error calculated by the calculation unit includes a movement error occurring in the movement of the placing apparatus by the rotation apparatus.

5. The processing system according to any one of claims 1 to 4 further comprising a movement apparatus that moves the processing head along a movement axis that intersects with an optical axis of the objective optical system, wherein
the light detection apparatus optically receives the light from the fiducial member by irradiating the fiducial member located at the first position with the measurement beam through the objective optical system located at a fourth position,
then, the rotation apparatus rotates the placing apparatus so that the fiducial member moves from the first position to the second position, and the movement apparatus moves the objective optical system so that the obj ective optical system moves from the fourth position to a fifth position that is different form the fourth position,
then,, the light detection apparatus optically receives the light from the fiducial member by irradiating the fiducial member located at the second position with the measurement beam through the objective optical system located at the fifth position.

6. The processing system according to any one of claims 1 to 5 further comprising a movement apparatus that moves the processing head along a movement axis, wherein
the light detection apparatus optically receives the light from the fiducial member by irradiating the fiducial member located at a eighth position and the fiducial member located at a ninth position with the measurement beam through the objective optical system and then irradiating the fiducial member located at a tenth position with the measurement beam through the objective optical system located at a sixth position,
then, the rotation apparatus rotates the placing apparatus so that the fiducial member moves from the tenth position to a eleventh position that is different from the tenth position, and the movement apparatus moves the objective optical system so that the objective optical system moves from the sixth position to a seventh position that is different form the sixth position,
then,, the light detection apparatus optically receives the light from the fiducial member by irradiating the fiducial member located at the eleventh position with the measurement beam through the objective optical system located at the seventh position.

7. The processing system according to any one of claims 1 to 6 further comprising a control unit that controls the processing apparatus and the light detection apparatus, wherein
the control unit adjusts a relationship between a processing position that is irradiated with the processing beam and a measurement position that is irradiated with the measurement beam.

8. The processing system according to any one of claims 1 to 7 further comprising a control unit that controls the processing apparatus and the light detection apparatus, wherein
the control unit controls the light detection apparatus, based on a relationship between a processing position that is irradiated with the processing beam and a measurement position that is irradiated with the measurement beam, to irradiate the fiducial member located at the first position and the fiducial member located at the second position with the measurement beam.

9. The processing system according to any one of claims 1 to 8 further comprising a control unit that controls the processing apparatus and the light detection apparatus, wherein
the control unit adjusts a relationship between a processing position that is irradiated with the processing beam and a measurement position that is irradiated with the measurement beam and then controls the light detection apparatus to irradiate the fiducial member located at the first position and the fiducial member located at the second position with the measurement beam.

10. The processing system according to any one of claims 1 to 9 further comprising a movement apparatus that moves the processing head along a movement axis, wherein
the movement error calculated by the calculation unit includes at least one of a movement error occurring in the movement of the placing apparatus by the rotation apparatus and a movement error occurring in the movement of the placing apparatus by the movement apparatus.

11. The processing system according to any one of claims 1 to 10, wherein
the light detection apparatus is configured to irradiate the workpiece with the measurement beam through the objective optical system and is configured to optically receive, through the objective optical system, at least a part of light from the workpiece that is generated by an irradiation of the measurement light,
a processing position that is irradiated with the processing beam is controlled based on at least one of a position and a shape of at least a part of the workpiece that is obtained by using a detected result by the light detection apparatus by the irradiation of the measurement beam to the workpiece.

12. A processing system comprising:
a placing apparatus on which a workpiece is allowed to be placed and on which a fiducial member that is different from the workpiece is allowed to be placed;
a light detection apparatus that is configured to irradiate the fiducial member with a measurement beam for measuring the fiducial member and that is configured to optically receive at least a part of light from the fiducial member that is generated by an irradiation of the measurement light through an objective optical system;
a rotation apparatus that is configured to rotate the placing apparatus around each of a first axis and a second axis that intersects with the first axis;
a movement apparatus that moves a processing head including at least the objective optical system along a movement axis; and
a calculation unit;
wherein
the rotation apparatus moves the fiducial member from an eighth position to a ninth position by rotating the placing apparatus around the first axis and moves the fiducial member from a tenth position to an eleventh position by rotating the placing apparatus around the second axis,
the light detection apparatus acquires an eighth detected result by irradiating the fiducial member located at the eighth position with the measurement beam through the objective optical system located at a twelfth position, acquires a ninth detected result by irradiating the fiducial member that has moved to the ninth position with the measurement beam through the objective optical system located at the twelfth position, acquires a tenth detected result by irradiating the fiducial member located at the tenth position with the measurement beam through the objective optical system located at a thirteenth position, and acquires an eleventh detected result by irradiating the fiducial member located at the eleventh position with the measurement beam through the objective optical system located at the thirteenth position or a fourteenth position different from the thirteenth position,
the calculation unit calculates a movement error occurring in a movement of at least one of the placing apparatus and the processing head based on position information of the fiducial member obtained by using the eighth detected result, position information of the fiducial member obtained by using the ninth detected result, position information of the fiducial member obtained by using the tenth detected result and position information of the fiducial member obtained by using the eleventh detected result.

13. The processing system according to claim 12, wherein
the placing apparatus includes a placement surface on which the fiducial member is placed,
the rotation apparatus is configured to rotate the placement apparatus around the first axis so that the placement surface is parallel to a gravity direction and the placement surface is orthogonal to the gravity direction,
the rotation apparatus is configured to move the fiducial member from the eighth position to the ninth position by rotating the placing apparatus around the second axis in a case where the placement surface is parallel to the gravity direction,
the rotation apparatus is configured to move the fiducial member from the tenth position to the eleventh position by rotating the placing apparatus around the second axis in a case where the placement surface is orthogonal to the gravity direction.

14. The processing system according to claim 12 or 13, wherein
the placing apparatus includes a placement surface on which the fiducial member is placed,
the rotation apparatus rotates the placement apparatus around the first axis that is along the placement surface so that the placement surface becomes a surface along a propagating direction of the measurement beam,
after the placement surface becomes the surface along a propagating direction of the measurement beam, (i) the light detection apparatus irradiates the fiducial member located at the eighth position with the measurement beam through the objective optical system located at the twelfth position, then, (ii) the rotation apparatus rotates the placement apparatus around the second axis that intersects with both of the placement surface and the first axis so that the fiducial member moves from the eighth position to the ninth position, and then, (iii) the light detection apparatus irradiates the fiducial member located at the ninth position with the measurement beam through the objective optical system located at the twelfth position.

15. The processing system according to any one of claims 12 to 14, wherein
the eight position and the ninth position are aligned along a propagating direction of the measurement light.

16. The processing system according to any one of claims 12 to 15, wherein
the eight position and the ninth position are located at a same position in a direction along a plane intersecting with a propagating direction of the measurement light and are located at different positions in a direction along the propagating direction of the measurement light.

17. The processing system according to any one of claims 12 to 16, wherein
the rotation apparatus rotates the placing apparatus around the second axis so that the eight position and the ninth position are located at two positions at which a circle whose center is the second axis intersects with a line passing through the center of the circle.

18. The processing system according to any one of claims 12 to 17, wherein
the rotation apparatus moves the fiducial member from the eighth position to the ninth position by rotating the placement apparatus around the second axis by 180 degrees.

19. The processing system according to any one of claims 12 to 18, wherein
the rotation apparatus performs an operation for rotating the placing apparatus so that the fiducial member moves from the eighth position to the ninth position a plurality of number of times while changing a rotational angle,
the light detection apparatus irradiates the fiducial member located at the eighth position and the fiducial member located at the ninth position with the measurement beam each time the rotation apparatus performs the operation for rotating the placing apparatus.

20. The processing system according to any one of claims 12 to 19, wherein
the fiducial member includes both of a curved surface and a planar surface,
the light detection apparatus irradiates the planar surface of the fiducial member located at the eighth position and the planar surface of the fiducial member located at the ninth position with the measurement beam,
the light detection apparatus irradiates the curved surface of the fiducial member located at the tenth position and the curved surface of the fiducial member located at the eleventh position with the measurement beam.

21. The processing system according to any one of claims 12 to 20, wherein
the light detection apparatus is configured to irradiate the workpiece with a processing beam and is configured to irradiates the fiducial member with the measurement beam through the objective optical system.

22. The processing system according to any one of claims 12 to 21, wherein
the movement apparatus moves the objective optical system so that the objective optical system of the processing head follows the fiducial member that is moved by the rotation apparatus rotating the placing apparatus.

23. The processing system according to any one of claims 12 to 22 further comprising a control unit that controls the movement apparatus based on position information of the fiducial member obtained by using each of the eighth detected result and the ninth detected result and position information of the fiducial member obtained by using each of the tenth detected result and the eleventh detected result.

24. The processing system according to claim 23, wherein,
the calculation unit (i) calculates an ideal movement trajectory of the fiducial member that is moved by the rotation apparatus rotating the placing apparatus based on the position information of the fiducial member obtained by using each of the eighth detected result and the ninth detected result, and (ii) calculates an actual measured result of a trajectory of the fiducial member based on the position information of the fiducial member obtained by using each of the tenth detected result and the eleventh detected result,
the movement apparatus is controlled based on a difference between the ideal trajectory of the fiducial member and the actual measured result of the trajectory of the fiducial member.

25. The processing system according to any one of claims 1 to 24, wherein
the fiducial member includes at least one of a curved surface and a planar surface.

26. The processing system according to any one of claims 1 to 25, wherein
the rotation apparatus is controlled based on position information of the fiducial member obtained by using the measurement beam.

27. The processing system according to any one of claims 1 to 4 further comprising a movement apparatus that moves the objective optical system along a movement axis, wherein
the movement apparatus is controlled based on position information of the fiducial member obtained by using the measurement beam.

28. The processing system according to any one of claims 12 to 24 further comprising a control unit that controls the movement apparatus based on position information of the fiducial member obtained by using the measurement beam.

29. The processing system according to any one of claims 12 to 24, wherein
the movement apparatus moves the processing head along each of a first movement axis, a second movement axis that intersects with the first movement axis, and a third movement axis that intersects with the first to second movement axes,
the calculation unit calculates the movement error occurring in the movement of the processing head along at least one of the first to third movement axes,
the movement apparatus moves the processing head to cancel the movement error based on the movement error calculated by the calculation unit.

30. The processing system according to any one of claims 1 to 13, wherein
the rotation apparatus is configured to rotate the placing apparatus around a first axis,
the calculation unit calculates the movement error occurring in the movement of the placing apparatus along a rotational direction around the first axis,
the rotation apparatus moves the placing apparatus to cancel the movement error based on the movement error calculated by the calculation unit.

31. The processing system according to any one of claims 1 to 13 and 30 further comprising a movement apparatus that moves the processing head along a first movement axis extending along a vertical direction,
the calculation unit calculates the movement error occurring in the movement of the processing head along the first movement axis,
the movement apparatus moves the processing head to cancel the movement error based on the movement error calculated by the calculation unit.

32. The processing system according to any one of claims 1 to 13 and 30 to 31 further comprising a movement apparatus that moves the processing head along each of a second movement axis that extends along a horizontal direction and a third movement axis that extends along the horizontal direction and that intersects with the second movement axis,
the calculation unit calculates the movement error occurring in the movement of the processing head along at least one of the second to third movement axes,
the movement apparatus moves the processing head to cancel the movement error based on the movement error calculated by the calculation unit.

33. The processing system according to any one of claims 1 to 32, wherein
the light detection apparatus is configured to irradiate the workpiece with the measurement beam through the objective optical system and is configured to optically receive, through the objective optical system, at least a part of light from the workpiece that is generated by an irradiation of the measurement light in at least one of a first period before staring the processing of the workpiece, a second period during which the workpiece is processed, and a third period after completing the processing of the workpiece,
the calculation unit calculates at least one of a position and a shape of at least a part of the workpiece based on a detected result by the light detection apparatus by the irradiation of the measurement beam to the workpiece.

34. A processing system comprising:
a placing apparatus on which a workpiece is allowed to be placed and on which a fiducial member that is different from the workpiece is allowed to be placed;
a light detection apparatus that is configured to irradiate the fiducial member with a measurement beam for measuring the fiducial member through an objective optical system and that is configured to optically receive at least a part of light from the fiducial member that is generated by an irradiation of the measurement light; and
a driving apparatus that moves the placing apparatus,
wherein
the light detection apparatus irradiates the fiducial member located at an eighth position with the measurement beam through the objective optical system located at a twelfth position, and irradiates the fiducial member that has moved to the ninth position with the measurement beam through the objective optical system located at the twelfth position.

35. A processing system comprising:
a placing apparatus on which a workpiece is allowed to be placed and on which a fiducial member that is different from the workpiece is allowed to be placed;
a light detection apparatus that is configured to irradiate the fiducial member with a measurement beam for measuring the fiducial member through an objective optical system and that is configured to optically receive at least a part of light from the fiducial member that is generated by an irradiation of the measurement light; and
a driving system that moves the placing apparatus,
wherein
the light detection apparatus irradiates the fiducial member located at a tenth position with the measurement beam through the objective optical system located at a fifteenth position, irradiates the fiducial member that has moved to an eleventh position with the measurement beam through the objective optical system located at the fifteenth position, furthermore, irradiates the fiducial member located at the tenth position with the measurement beam through the objective optical system located at a thirteenth position, and irradiates the fiducial member that has moved to the eleventh position with the measurement beam through the objective optical system located at a fourteenth position.

36. A processing system comprising:
a placing apparatus on which a workpiece is allowed to be placed and on which a fiducial member that is different from the workpiece is allowed to be placed;
a light detection apparatus that is configured to irradiate the fiducial member with a measurement beam for measuring the fiducial member through an objective optical system and that is configured to optically receive at least a part of light from the fiducial member that is generated by an irradiation of the measurement light; and
a driving system that moves the placing apparatus,
wherein
the light detection apparatus irradiates the fiducial member located at a tenth position with the measurement beam through the objective optical system located at a sixteenth position, and irradiates the fiducial member that has moved to an eleventh position with the measurement beam through the objective optical system located at the sixteenth position, furthermore, irradiates the fiducial member that has moved to the eleventh position with the measurement beam through the objective optical system located at a seventeenth position.
